# EUROPEAN PATENT SPECIFICATION

(11) **EP 4 362 515 B1**
(45) Date of publication and mention of the grant of the patent: **27.08.2025**
(21) Application number: 22831130.4
(22) Date of filing: 10.01.2022
(51) Int. Cl.: H04W 12/03, H04W 12/06, H04W 12/069, H04L 9/40, H04L 65/1016, H04L 65/1045, H04L 9/32

(54) **AUTHENTICATION METHOD AND APPARATUS**
AUTHENTIFIZIERUNGSVERFAHREN UND -VORRICHTUNG
PROCÉDÉ ET APPAREIL D'AUTHENTIFICATION

(30) Priority: 30.06.2021 CN 202110736210
(43) Date of publication of application: 01.05.2024
(73) Proprietor: Huawei Technologies Co., Ltd., Longgang Shenzhen, Guangdong 518129 (CN)
(72) Inventor: LIN, Lin, Shenzhen, Guangdong 518129 (CN); ZHANG, Guanhua, Shenzhen, Guangdong 518129 (CN)
(74) Representative: Isarpatent
(86) International application number: PCT/CN2022/070996
(87) International publication number: WO 2023/273293

(56) References cited:
- WO-A1-2020/245634
- CN-A- 105 101 194
- CN-A- 108 990 060
- CN-A- 111 132 305
- US-A1- 2020 336 314
- US-A1- 2021 120 411
- US-B1- 10 341 485
- WENDT COMCAST M BARNES ICONECTIV C: "Personal Assertion Token (PaSSporT) Extension for Signature-based Handling of Asserted information using toKENs (SHAKEN); rfc8588.txt", 15 May 2019 (2019-05-15), pages 1 - 9, XP015132442, Retrieved from the Internet <URL:https://tools.ietf.org/html/rfc8588> [retrieved on 20190515]

## Description

Priority is claimed to Chinese Patent Application No. 202110736210.7, filed with the China National Intellectual Property Administration on June 30, 2021 and entitled "AUTHENTICATION METHOD AND APPARATUS".

### TECHNICAL FIELD

This disclosure generally relates to the communication field, and the invention more specifically relates to an authentication method, an authentication apparatus, and a chip system.

### BACKGROUND

As artificial intelligence (artificial intelligence, AI) face swapping and voice change technologies and the like emerge, criminals commit telecommunication fraud in such new ways. Therefore, to avoid or reduce telecommunication fraud, how to ensure that communication content is authentic and is not tampered with in an end-to-end communication process becomes an issue to be urgently resolved.

US 2020/336314 A1 discloses that a device receives call information associated with a call from a first user device to a second user device, where the first user device is associated with a first network, and the second user device is associated with a second network separate from the first network. The call information includes a caller identification and is received via an originating network device of the first network. The device determines whether the caller identification is verified, and adds authentication information to the call information when the caller identification is verified. The device receives the call information and the authentication information from a terminating network device of the first network, and removes the authentication information from the call information. The device adds a cryptographic signature to the call information, and causes the call information and the cryptographic signature to be provided to the second network for routing to the second user device.

WO 2020/245634 A1 discloses apparatuses and methods for IMS slicing-enabled IMS voice sessions between autonomous machines and/or voice related services. A method for a first user equipment, UE, for authenticating the first UE is provided in which an alert voice call is communicated to a second UE for initiating authentication of the first UE. A voiceprint of a user for the authentication of the first UE is communicated, via an IMS slice, and based at least in part on an analysis of the voiceprint, an authentication success message or an authentication fail message is received. A method for an Application Server includes receiving, via an IMS slice, a voiceprint of a user. The voiceprint is compared to a voiceprint sample. The voiceprint sample is associated with the first UE. Based at least in part on the comparison, an authentication success message or an authentication fail message is communicated.

The standard document WENDT COMCAST M BARNES ICONECTIV C: "Personal Assertion Token (PaSSporT) Extension for Signature-based Handling of Asserted information using toKENs (SHAKEN); rfc8588.txt", PERSONAL ASSERTION TOKEN (PASSPORT) EXTENSION FOR SIGNATURE-BASED HANDLING OF ASSERTED INFORMATION USING TOKENS (SHAKEN); RF08588.TXT, INTERNET ENGINEERING TASK FORCE, IETF; STANDARD, INTERNET SOCIETY, 15 May 2019 (2019-05-15), pages 1-9, XP015132442 relates to the technical problem of the need for a reliable method to verify the originating identity of telephone calls in a SIP-based telephone network. It is described that the current telephone network includes traffic from both VoIP and TDM/SS7 systems, which complicates the process of authenticating call origins and identifying the source of calls, particularly in scenarios where calls may be spoofed or fraudulent. The solution provided in this document extends the Personal Assertion Token (PASSporT) to include specific items that help in verifying the originating identity of calls. This extension is based on the SHAKEN (Signature-based Handling of Asserted information using toKENs) framework.

US 10,341,485 B1 discloses a computer-implemented method for authenticating the identity of a caller. A mobile computing device receives, via a wireless communications network, an incoming call setup request initiated by a phone system of a caller, and executes an identity service application upon receipt of the incoming call setup request. The call includes a plurality of data packets. The mobile computing device extracts a caller identifier from the plurality of data packets. The caller identifier includes one or more bits at a first predetermined position within the plurality of data packets. The mobile computing device forwards the caller identifier to an identity service computing device. The identity service computing device determines an identity status of the caller. The mobile computing device receives, from the identity service computing device, an authentication token and the identity status of the caller. The mobile computing device displays the identity status of the caller.

### SUMMARY

The object of the present invention is to provide an authentication method, an authentication apparatus, and a chip system, to ensure that communication content is authentic and is not tampered with in an end-to-end communication process. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

According to a first aspect according to the invention, an authentication method is provided. The authentication method is performed by a first operator network device, or is performed by a chip system disposed in the first operator network device.

The authentication method according to the invention includes:

The first operator network device performs authentication on whether a first user is trustworthy, to obtain a first authentication result, where the first user is a user who sends a message to the first operator network device by using a first terminal device; the first operator network device signs the first authentication result to generate a first signature; and the first operator network device sends the first authentication result and the first signature to a second terminal device used by a second user or to a second operator network device, where the second operator network device is an operator network device that provides a service for the second user, and the second user is a user called by the first user.

According to this authentication method of the invention in the first aspect, the first operator network device performs authentication on the first user, signs the first authentication result obtained through authentication to generate the first signature, and then sends the first authentication result and the first signature to the second terminal device used by the second user called by the first user, or sends the first authentication result and the first signature to the second operator network device that provides the service for the second user. In this way, authentication is performed on whether the user is trustworthy, to ensure that communication content in an end-to-end communication process is authentic and is not tampered with, and avoid or reduce telecommunication fraud.

With reference to the first aspect, according to the invention of the first aspect, the method further includes: The first operator network device receives a first message from the first terminal device, where the first message includes first encrypted information, the first encrypted information is encrypted physiological characteristic information of the first user, and the physiological characteristic information of the first user includes at least one of the following: fingerprint information of the first user, voice print information of the first user, facial information of the first user, iris information of the first user, and palm print information of the first user. That a first operator network device performs authentication on whether a first user is trustworthy includes: The first operator network device sends identification information of the first user and the first encrypted information to a third-party authentication authority, where the first encrypted information is used by the third-party authentication authority to perform authentication on whether the first user is trustworthy, and the identification information of the first user identifies the first user; the first operator network device receives first information from the third-party authentication authority, where the first information indicates whether the first user is trustworthy; and the first operator network device performs, based on the first information, authentication on whether the first user is trustworthy.

In an example, the first operator network device may call, based on the first encrypted information reported by the first terminal device, an authentication service of the third-party authentication authority to perform authentication on the first user. The first operator network device does not need to directly perform authentication on the first user, but performs authentication by using the third-party authentication authority. The first operator network device performs, by using feedback information of the third-party authentication authority, authentication on whether the first user is trustworthy. In this way, an operation performed by the first operator network device is simplified, and authentication can be completed without a need to store the physiological characteristic information of the first user in the first operator network device. This avoids a privacy trust issue caused because the user stores sensitive information in the operator network device.

With reference to the first aspect, in some implementations of the first aspect, the first message includes at least one of the following: a signaling message, video data, and audio data. When the first message is the video data and/or the audio data, the first message periodically carries the first encrypted information.

The first message may be specifically different messages or data, thereby increasing flexibility of the solution.

In addition, when the first message is the video data and/or the audio data, the first message may periodically carry the first encrypted information, that is, may periodically perform authentication on whether the first user is trustworthy. This improves reliability of the solution.

With reference to the first aspect, according to the invention of the first aspect, before the first operator network device receives the first message from the first terminal device, the method further includes: The first operator network device obtains a first encryption method and a first public key from the third-party authentication authority; and the first operator network device sends the first encryption method and the first public key to the first terminal device, where the first public key is a public key in a first public-private key pair determined by the third-party authentication authority, the first public-private key pair further includes a first private key, the first encryption method and the first public key are used by the first terminal device to encrypt the physiological characteristic information of the first user to obtain the first encrypted information, and the first private key is stored in the third-party authentication authority and is used to verify the first encrypted information.

For example, before communication, the first user may authorize the first operator network device to obtain the first encryption method and the first public key.

For example, if the first user is a new user, an authorization manner may be that the first user performs authorization when accessing a network. For example, when the first user accesses the network, a first operator queries whether the first user authorizes the first operator network device to obtain the first encryption method and the first public key, and the first user may choose to perform authorization.

For another example, if the first user is a regular user, an authorization manner may be that the first user authorizes, at a time point before the first user calls the second user, the first operator network device to obtain the first encryption method and the first public key.

With reference to the first aspect, in some not claimed implementations of the first aspect not covered by the independent claim 1, before the first operator network device performs authentication on whether the first user is trustworthy, the method further includes: The first operator network device obtains physiological characteristic information of the first user, where the physiological characteristic information of the first user includes voice print information of the first user and/or facial information of the first user. That the first operator network device performs authentication on whether the first user is trustworthy includes: The first operator network device encrypts the physiological characteristic information of the first user based on a second encryption method and a second public key, to generate second encrypted information; the first operator network device sends identification information of the first user and the second encrypted information to a third-party authentication authority, where the second encrypted information is used by the third-party authentication authority to perform authentication on whether the first user is trustworthy, and the identification information of the first user identifies the first user; the first operator network device receives second information from the third-party authentication authority, where the second information indicates whether the first user is trustworthy; and the first operator network device performs, based on the second information, authentication on whether the first user is trustworthy, where the second public key is a public key in a second public-private key pair determined by the third-party authentication authority, the second public-private key pair further includes a second private key, the second encryption method is determined by the third-party authentication authority, and the second private key is used to verify the second encrypted information.

In an example, the first operator network device may call, based on the second encrypted information determined by the first operator network device, an authentication service of the third-party authentication authority to perform authentication on the first user, and the first terminal device does not need to obtain and encrypt the physiological characteristic information of the first user. This simplifies an operation performed by the first terminal device.

With reference to the first aspect, in some not claimed implementations of the first aspect not covered by the independent claim 1, the method further includes: The first operator network device receives a second authentication result and a second signature from the first terminal device, where the second authentication result is used to indicate whether the first user is trustworthy, and the second signature is used to verify the second authentication result. That the first operator network device performs authentication on whether the first user is trustworthy includes: The first operator network device verifies the second signature, and when the verification succeeds, performs, based on the second authentication result, authentication on whether the first user is trustworthy.

In an example, the first operator network device may perform, based on the second authentication result reported by the first terminal device, authentication on whether the first user is trustworthy. The first operator network device verifies the second signature, and can perform authentication on the first user based on the second authentication result when the verification succeeds, without using a third-party authentication authority to implement authentication. This further simplifies an operation performed by the first operator network device.

Optionally but not claimed, the first operator network device verifies the second signature, and when the verification fails, determines that the first user is untrustworthy.

With reference to the first aspect, in some not claimed implementations of the first aspect not covered by the independent claim 1, the second signature is a signature that is generated by signing the second authentication result based on a private key of a first SIM card. That the first operator network device verifies the second signature includes: The first operator network device verifies the second signature based on a public key of the first SIM card, where the private key of the first SIM card and the public key of the first SIM card are a public-private key pair of the first SIM card, the first SIM card is disposed in the first terminal device, the private key of the first SIM card is stored in the first SIM card, and the public key of the first SIM card is stored in the first operator network device.

With reference to the first aspect, in some not claimed implementations of the first aspect not covered by the independent claim 1, when the first user is a calling user, before the first operator network device performs authentication on whether the first user is trustworthy, the method further includes: The first operator network device obtains historical call data of the first user, where the historical call data of the first user is used to indicate a call habit of the first user, and includes at least one of the following: distribution data of time points at which the first user initiates calls, frequency data of the second user answering calls when the first user initiates the calls, ringing duration data of the second terminal device when the first user initiates the calls, call duration distribution data of the first user, distribution data of geographical locations at which the first user initiates the calls, a proportion of the second user called for the first time, and home location distribution data of the second user; and the first operator network device determines, based on a preset policy and the historical call data of the first user, whether a call initiated by the first user is trustworthy. That the first operator network device performs authentication on whether the first user is trustworthy includes: The first operator network device performs authentication on whether the first user is trustworthy based on whether the call initiated by the first user is trustworthy.

In an example, the first operator network device may perform, based on the call habit of the first user, authentication on whether the first user is trustworthy.

With reference to the first aspect, in some implementations of the first aspect, the method further includes: The first operator network device determines a third public-private key pair, where the third public-private key pair includes a third private key and a third public key; and the first operator network device stores the third private key.

With reference to the first aspect, in some implementations of the first aspect, when a first operator and a second operator that serve the first user and the second user respectively are a same operator, that the first operator network device sends the first authentication result and the first signature to a second terminal device used by a second user or to a second operator network device is specifically: The first operator network device sends the first authentication result and the first signature to the second terminal device. The method further includes: The first operator network device sends the third public key to the second terminal device, where the third public key is used by the second terminal device to verify the first signature.

With reference to the first aspect, in some implementations of the first aspect, the method further includes: The first operator network device performs authentication on whether the second user is trustworthy, to obtain a third authentication result; the first operator network device signs the third authentication result to generate a third signature; the first operator network device sends the third authentication result and the third signature to the first terminal device; and the first operator network device sends the third public key to the first terminal device, where the third public key is used by the first terminal device to verify the third signature.

Further, the first operator network device needs to perform authentication on the second user, to determine whether both communication parties are trustworthy.

With reference to the first aspect, in some implementations of the first aspect, the method further includes: The first operator network device receives a second message from the second terminal device, where the second message includes third encrypted information, the third encrypted information is encrypted physiological characteristic information of the second user, and the physiological characteristic information of the second user includes at least one of the following: fingerprint information of the second user, voice print information of the second user, facial information of the second user, iris information of the second user, and palm print information of the second user. That the first operator network device performs authentication on whether the second user is trustworthy includes: The first operator network device sends identification information of the second user and the third encrypted information to a third-party authentication authority, where the third encrypted information is used by the third-party authentication authority to perform authentication on whether the second user is trustworthy, and the identification information of the second user identifies the second user; the first operator network device receives third information from the third-party authentication authority, where the third information indicates whether the second user is trustworthy; and the first operator network device performs, based on the third information, authentication on whether the second user is trustworthy.

In an example, the first operator network device may call, based on the third encrypted information reported by the second terminal device, an authentication service of the third-party authentication authority to perform authentication on the second user. The first operator network device does not need to directly perform authentication on the second user, but performs authentication by using the third-party authentication authority. The first operator network device performs, by using feedback information of the third-party authentication authority, authentication on whether the second user is trustworthy. In this way, an operation performed by the first operator network device is simplified, and authentication can be completed without a need to store the physiological characteristic information of the first user in the first operator network device. This avoids a privacy trust issue caused because the user stores sensitive information in the operator network device.

With reference to the first aspect, in some implementations of the first aspect, the second message includes at least one of the following: a signaling message, video data, and audio data. When the second message is the video data and/or the audio data, the second message periodically carries the third encrypted information.

The second message may be specifically different messages or data, thereby increasing flexibility of the solution.

In addition, when the second message is the video data and/or the audio data, the second message may periodically carry the third encrypted information, that is, may periodically perform authentication on whether the second user is trustworthy. This improves reliability of the solution.

With reference to the first aspect, in some implementations of the first aspect, before the first operator network device receives the second message from the second terminal device, the method further includes: The first operator network device obtains a third encryption method and a fifth public key from the third-party authentication authority; and the first operator network device sends the third encryption method and the fifth public key to the second terminal device, where the fifth public key is a public key in a fifth public-private key pair determined by the third-party authentication authority, the fifth public-private key pair further includes a fifth private key, the third encryption method and the fifth public key are used by the second terminal device to encrypt the physiological characteristic information of the second user to obtain the third encrypted information, and the fifth private key is stored in the third-party authentication authority and is used to verify the third encrypted information.

For example, before communication, the second user may authorize the first operator network device to obtain the third encryption method and the fifth public key.

For example, if the second user is a new user, an authorization manner may be that the second user performs authorization when accessing a network. For example, when the second user accesses the network, a first operator queries whether the first user authorizes the first operator network device to obtain the third encryption method and the fifth public key, and the second user may choose to perform authorization.

For another example, if the second user is a regular user, an authorization manner may be that the second user authorizes, at a time point before the second user is called, the first operator network device to obtain the third encryption method and the fifth public key.

With reference to the first aspect, in some implementations of the first aspect, before the first operator network device performs authentication on whether the second user is trustworthy, the method further includes: The first operator network device obtains physiological characteristic information of the second user, where the physiological characteristic information of the second user includes voice print information of the second user and/or facial information of the second user. That the first operator network device performs authentication on whether the second user is trustworthy includes: The first operator network device encrypts the physiological characteristic information of the second user based on a fourth encryption method and a sixth public key, to generate fourth encrypted information; the first operator network device sends identification information of the second user and the fourth encrypted information to a third-party authentication authority, where the fourth encrypted information is used by the third-party authentication authority to perform authentication on whether the second user is trustworthy, and the identification information of the second user identifies the second user; the first operator network device receives fourth information from the third-party authentication authority, where the fourth information indicates whether the second user is trustworthy; and the first operator network device performs, based on the fourth information, authentication on whether the second user is trustworthy, where the sixth public key is a public key in a sixth public-private key pair determined by the third-party authentication authority, the sixth public-private key pair further includes a sixth private key, the fourth encryption method is determined by the third-party authentication authority, and the sixth private key is used to verify the fourth encrypted information.

In an example, the first operator network device may call, based on the fourth encrypted information determined by the first operator network device, an authentication service of the third-party authentication authority to perform authentication on the second user, and the second terminal device does not need to obtain and encrypt the physiological characteristic information of the second user. This simplifies an operation performed by the second terminal device.

With reference to the first aspect, in some implementations of the first aspect, the method further includes: The first operator network device receives a fifth authentication result and a seventh signature from the second terminal device, where the fifth authentication result is determined by the second terminal device and is used to indicate whether the second user is trustworthy, and the seventh signature is used to verify a fourth authentication result. That the first operator network device performs authentication on whether the second user is trustworthy includes: The first operator network device verifies the seventh signature, and when the verification succeeds, performs, based on the fifth authentication result, authentication on whether the second user is trustworthy.

In an example, the first operator network device may perform, based on the fifth authentication result reported by the second terminal device, authentication on whether the second user is trustworthy. The first operator network device verifies the seventh signature, and can perform authentication on the second user based on the fifth authentication result when the verification succeeds, without using a third-party authentication authority to implement authentication. This further simplifies an operation performed by the first operator network device.

Optionally, the first operator network device verifies the seventh signature, and when the verification fails, determines that the second user is untrustworthy.

With reference to the first aspect, in some implementations of the first aspect, the seventh signature is a signature that is generated by signing the fifth authentication result based on a private key of a second SIM card. That the first operator network device verifies the seventh signature includes: The first operator network device verifies the seventh signature based on a public key of the second SIM card, where the private key of the second SIM card and the public key of the second SIM card are a public-private key pair of the second SIM card, the second SIM card is disposed in the second terminal device, the private key of the second SIM card is stored in the second SIM card, and the public key of the second SIM card is stored in the first operator network device.

With reference to the first aspect, in some implementations of the first aspect, when the second user is a calling user, before the first operator network device performs authentication on whether the second user is trustworthy, the method further includes: The first operator network device obtains historical call data of the second user, where the historical call data of the second user is used to indicate a call habit of second user equipment, and includes at least one of the following: distribution data of time points at which the second user initiates calls, frequency data of the first user answering calls when the second user initiates the calls, ringing duration data of the first terminal device when the second user initiates the calls, call duration distribution data of the second user, distribution data of geographical locations at which the second user initiates the calls, a proportion of the first user called for the first time, and home location distribution data of the first user; and the first operator network device determines, based on a preset policy and the historical call data of the second user, whether a call initiated by the second user is trustworthy. That the first operator network device performs authentication on whether the second user is trustworthy includes: The first operator network device performs authentication on whether the first user is trustworthy based on whether the call initiated by the second user is trustworthy.

In an example, the first operator network device may perform, based on the call habit of the second user, authentication on whether the second user is trustworthy.

With reference to the first aspect, in some implementations of the first aspect, when a first operator and a second operator that serve the first user and the second user respectively are different operators, that the first operator network device sends the first authentication result and the first signature to a second terminal device used by a second user or to a second operator network device is specifically: The first operator network device sends the first signature and the first authentication result to the second operator network device. The method further includes: The first operator network device sends the third public key to the second operator network device, where the third public key is used by the second operator network device to verify the first signature. The first authentication result and a fourth private key are used by the second operator network device to generate a fourth signature, the fourth signature is sent to the second terminal device to indicate the second terminal device to verify the first authentication result, the fourth private key is stored in the second operator network device, and the fourth private key and a fourth public key are a fourth public-private key pair.

With reference to the first aspect, in some implementations of the first aspect, the method further includes: The first operator network device receives the fourth public key from the second operator network device; the first operator network device receives a fifth signature and a fourth authentication result from the second operator network device, where the fifth signature is a signature that is generated by signing the fourth authentication result based on the fourth private key, and the fourth authentication result is used to indicate whether the second user is trustworthy; the first operator network device verifies the fifth signature based on the fourth public key; after the verification succeeds, the first operator network device signs the fourth authentication result based on the third private key, to generate a sixth signature; and the first operator network device sends the fourth authentication result and the sixth signature to the first terminal device.

For example, the first operator network device and the second operator network device may exchange the third public key and the fourth public key before communication.

It can be understood that distribution of the keys and the encryption methods in this embodiment of this application may be completed before communication.

According to a second aspect, wherein the second aspect and any of its implementations and options below are not claimed, another authentication method is provided. The authentication method may be performed by a terminal device, or may be performed by a chip or a circuit disposed in the terminal device. This is not limited in this application.

The authentication method includes:
The terminal device receives an encryption method and a public key from an operator network device; the terminal device encrypts physiological characteristic information of a user based on the encryption method and the public key, to generate encrypted information, where the physiological characteristic information of the user includes at least one of the following: fingerprint information of the user, voice print information of the user, facial information of the user, iris information of the user, and palm print information of the user; and the terminal device sends the encrypted information to the operator network device, where the user is a user who sends a message to the operator network device by using the terminal device, the public key is a public key in a public-private key pair determined by a third-party authentication authority, the public-private key pair further includes a private key, and the private key is stored in the third-party authentication authority and is used to verify the encrypted information.

The operator network device may call, based on the encrypted information reported by the terminal device, an authentication service of the third-party authentication authority to perform authentication on the user. The operator network device does not need to directly perform authentication on the user, but performs authentication by using the third-party authentication authority. The operator network device performs, by using feedback information of the third-party authentication authority, authentication on whether the user is trustworthy. In this way, an operation performed by the operator network device is simplified.

For example, when operators that serve both communication parties during network accessing are the same, the terminal device may be a first terminal device or a second terminal device, and the operator network device may be a first operator network device.

For example, when operators that serve both communication parties during network accessing are different, the terminal device may be a first terminal device, and the operator network device may be a first operator network device; or the terminal device may be a second terminal device, and the operator network device may be a second operator network device.

According to a third aspect, wherein the third aspect and any of its implementations and options below are not claimed, another authentication method is provided. The authentication method may be performed by a terminal device, or may be performed by a chip or a circuit disposed in the terminal device. This is not limited in this application.

The authentication method includes:
The terminal device performs authentication on whether a user is trustworthy, to obtain an authentication result; the terminal device signs the authentication result based on a private key of a SIM, to generate a signature; and the terminal device sends the authentication result and the signature to an operator network device.

The operator network device may call, based on encrypted information reported by the terminal device, an authentication service of a third-party authentication authority to perform authentication on the user. The operator network device does not need to directly perform authentication on the user, but performs authentication by using the third-party authentication authority. The operator network device performs, by using feedback information of the third-party authentication authority, authentication on whether the user is trustworthy. In this way, an operation performed by the operator network device is simplified.

For example, when operators that serve both communication parties during network accessing are the same, the terminal device may be a first terminal device or a second terminal device, and the operator network device may be a first operator network device.

For example, when operators that serve both communication parties during network accessing are different, the terminal device may be a first terminal device, and the operator network device may be a first operator network device; or the terminal device may be a second terminal device, and the operator network device may be a second operator network device.

According to a fourth aspect, wherein the fourth aspect and any of its implementations and options below are not claimed, another authentication method is provided. The authentication method may be performed by a third-party authentication authority, or may be performed by a chip or a circuit disposed in the third-party authentication authority. This is not limited in this application.

The authentication method includes:
The third-party authentication authority manages identification information of a user and physiological characteristic information of the user, where the identification information of the user identifies the user, and the physiological characteristic information of the user includes at least one of the following: fingerprint information of the user, voice print information of the user, facial information of the user, iris information of the user, and palm print information of the user; the third-party authentication authority determines a public key and an encryption method that are used for encrypting the physiological characteristic information of the user; the third-party authentication authority sends the encryption method and the public key to an operator network device; the third-party authentication authority receives the identification information of the user and encrypted information from the operator network device, where the encrypted information is encrypted physiological characteristic information of the user; the third-party authentication authority determines the user based on the identification information of the user, verifies the encrypted information based on a private key, and determines, based on a verification result, whether the user is trustworthy, where the public key and the private key are a public-private key pair; and the third-party authentication authority sends, to the operator network device, information indicating whether the user is trustworthy, where the user is a user who sends a message to the operator network device by using a terminal device.

The operator network device may call, based on the encrypted information reported by the terminal device, an authentication service of the third-party authentication authority to perform authentication on the user. The operator network device does not need to directly perform authentication on the user, but performs authentication by using the third-party authentication authority. The operator network device performs, by using feedback information of the third-party authentication authority, authentication on whether the user is trustworthy. In this way, an operation performed by the operator network device is simplified.

With reference to the fourth aspect, in some implementations of the fourth aspect, the encrypted information is determined by the operator network device, or the encrypted information is determined by the terminal device.

According to a fifth aspect, wherein the fifth aspect and any of its implementations and options below are not claimed, an authentication apparatus is provided, where the authentication apparatus includes:
an authentication unit, configured to perform authentication on whether a first user is trustworthy, to obtain a first authentication result, where the first user is a user who sends a message to the apparatus by using a first terminal device; a processing unit, configured to sign the first authentication result to generate a first signature; and a sending unit, configured to send the first authentication result and the first signature to a second terminal device used by a second user or to a second operator network device, where the second operator network device is an operator network device that provides a service for the second user, and the second user is a user called by the first user.

With reference to the fifth aspect, in some implementations of the fifth aspect, the apparatus further includes: a receiving unit, configured to receive a first message from the first terminal device, where the first message includes first encrypted information, the first encrypted information is encrypted physiological characteristic information of the first user, and the physiological characteristic information of the first user includes at least one of the following: fingerprint information of the first user, voice print information of the first user, facial information of the first user, iris information of the first user, and palm print information of the first user. The sending unit is further configured to send identification information of the first user and the first encrypted information to a third-party authentication authority, where the first encrypted information is used by the third-party authentication authority to perform authentication on whether the first user is trustworthy, and the identification information of the first user identifies the first user. The receiving unit is further configured to receive first information from the third-party authentication authority, where the first information indicates whether the first user is trustworthy. That an authentication unit performs authentication on whether a first user is trustworthy includes: The authentication unit performs, based on the first information, authentication on whether the first user is trustworthy.

With reference to the fifth aspect, in some implementations of the fifth aspect, the first message includes at least one of the following: a signaling message, video data, and audio data. When the first message is the video data and/or the audio data, the first message periodically carries the first encrypted information.

With reference to the fifth aspect, in some implementations of the fifth aspect, before the receiving unit receives the first message from the first terminal device, the receiving unit is further configured to obtain a first encryption method and a first public key from the third-party authentication authority. The sending unit is further configured to send the first encryption method and the first public key to the first terminal device, where the first public key is a public key in a first public-private key pair determined by the third-party authentication authority, the first public-private key pair further includes a first private key, the first encryption method and the first public key are used by the first terminal device to encrypt the physiological characteristic information of the first user to obtain the first encrypted information, and the first private key is stored in the third-party authentication authority and is used to verify the first encrypted information.

With reference to the fifth aspect, in some implementations of the fifth aspect, before the authentication unit performs authentication on whether the first user is trustworthy, the apparatus further includes: an obtaining unit, configured to obtain physiological characteristic information of the first user, where the physiological characteristic information of the first user includes voice print information of the first user and/or facial information of the first user. The processing unit is further configured to encrypt the physiological characteristic information of the first user based on a second encryption method and a second public key, to generate second encrypted information. The sending unit is further configured to send identification information of the first user and the second encrypted information to a third-party authentication authority, where the second encrypted information is used by the third-party authentication authority to perform authentication on whether the first user is trustworthy, and the identification information of the first user identifies the first user. The receiving unit is further configured to receive second information from the third-party authentication authority, where the second information indicates whether the first user is trustworthy. That an authentication unit performs authentication on whether a first user is trustworthy includes: The authentication unit performs, based on the second information, authentication on whether the first user is trustworthy, where the second public key is a public key in a second public-private key pair determined by the third-party authentication authority, the second public-private key pair further includes a second private key, the second encryption method is determined by the third-party authentication authority, and the second private key is used to verify the second encrypted information.

With reference to the fifth aspect, in some implementations of the fifth aspect, the receiving unit is further configured to receive a second authentication result and a second signature from the first terminal device, where the second authentication result is used to indicate whether the first user is trustworthy, and the second signature is used to verify the second authentication result. That an authentication unit performs authentication on whether a first user is trustworthy includes: The authentication unit verifies the second signature, and when the verification succeeds, performs, based on the second authentication result, authentication on whether the first user is trustworthy.

With reference to the fifth aspect, in some implementations of the fifth aspect, the second signature is a signature that is generated by signing the second authentication result based on a private key of a first SIM card. That the authentication unit verifies the second signature includes: The authentication unit verifies the second signature based on a public key of the first SIM card, where the private key of the first SIM card and the public key of the first SIM card are a public-private key pair of the first SIM card, the first SIM card is disposed in the first terminal device, the private key of the first SIM card is stored in the first SIM card, and the public key of the first SIM card is stored in the apparatus.

With reference to the fifth aspect, in some implementations of the fifth aspect, when the first user is a calling user, before the authentication unit performs authentication on whether the first user is trustworthy, the apparatus further includes: an obtaining unit, configured to obtain historical call data of the first user, where the historical call data of the first user is used to indicate a call habit of the first user, and includes at least one of the following: distribution data of time points at which the first user initiates calls, frequency data of the second user answering calls when the first user initiates the calls, ringing duration data of the second terminal device when the first user initiates the calls, call duration distribution data of the first user, distribution data of geographical locations at which the first user initiates the calls, a proportion of the second user called for the first time, and home location distribution data of the second user. The processing unit is further configured to determine, based on a preset policy and the historical call data of the first user, whether a call initiated by the first user is trustworthy. That an authentication unit performs authentication on whether a first user is trustworthy includes: The authentication unit performs authentication on whether the first user is trustworthy based on whether the call initiated by the first user is trustworthy.

With reference to the fifth aspect, in some implementations of the fifth aspect, the processing unit is further configured to determine a third public-private key pair, where the third public-private key pair includes a third private key and a third public key; and the apparatus stores the third private key.

With reference to the fifth aspect, in some implementations of the fifth aspect, when a first operator and a second operator that serve the first user and the second user respectively are a same operator, that the sending unit sends the first authentication result and the first signature to a second terminal device used by a second user or to a second operator network device is specifically: The sending unit sends the first authentication result and the first signature to the second terminal device. The sending unit is further configured to send the third public key to the second terminal device, where the third public key is used by the second terminal device to verify the first signature.

With reference to the fifth aspect, in some implementations of the fifth aspect, the authentication unit is further configured to perform authentication on whether the second user is trustworthy, to obtain a third authentication result. The processing unit is further configured to sign the third authentication result to generate a third signature. The sending unit is further configured to send the third authentication result and the third signature to the first terminal device. The sending unit is further configured to send the third public key to the first terminal device, where the third public key is used by the first terminal device to verify the third signature.

With reference to the fifth aspect, in some implementations of the fifth aspect, the apparatus further includes: a receiving unit, configured to receive a second message from the second terminal device, where the second message includes third encrypted information, the third encrypted information is encrypted physiological characteristic information of the second user, and the physiological characteristic information of the second user includes at least one of the following: fingerprint information of the second user, voice print information of the second user, facial information of the second user, iris information of the second user, and palm print information of the second user. The sending unit is further configured to send identification information of the second user and the third encrypted information to a third-party authentication authority, where the third encrypted information is used by the third-party authentication authority to perform authentication on whether the second user is trustworthy, and the identification information of the second user identifies the second user. The receiving unit is further configured to receive third information from the third-party authentication authority, where the third information indicates whether the second user is trustworthy. That the authentication unit performs authentication on whether the second user is trustworthy includes: The authentication unit performs, based on the third information, authentication on whether the second user is trustworthy.

With reference to the fifth aspect, in some implementations of the fifth aspect, the second message includes at least one of the following: a signaling message, video data, and audio data. When the second message is the video data and/or the audio data, the second message periodically carries the third encrypted information.

With reference to the fifth aspect, in some implementations of the fifth aspect, before the receiving unit receives the second message from the second terminal device, the receiving unit is further configured to obtain a third encryption method and a fifth public key from the third-party authentication authority. The sending unit is further configured to send the third encryption method and the fifth public key to the second terminal device, where the fifth public key is a public key in a fifth public-private key pair determined by the third-party authentication authority, the fifth public-private key pair further includes a fifth private key, the third encryption method and the fifth public key are used by the second terminal device to encrypt the physiological characteristic information of the second user to obtain the third encrypted information, and the fifth private key is stored in the third-party authentication authority and is used to verify the third encrypted information.

With reference to the fifth aspect, in some implementations of the fifth aspect, before the authentication unit performs authentication on whether the second user is trustworthy, the apparatus further includes: an obtaining unit, configured to obtain physiological characteristic information of the second user, where the physiological characteristic information of the second user includes voice print information of the second user and/or facial information of the second user. The processing unit is further configured to encrypt the physiological characteristic information of the second user based on a fourth encryption method and a sixth public key, to generate fourth encrypted information. The sending unit is further configured to send identification information of the second user and the fourth encrypted information to a third-party authentication authority, where the fourth encrypted information is used by the third-party authentication authority to perform authentication on whether the second user is trustworthy, and the identification information of the second user identifies the second user. The receiving unit is further configured to receive fourth information from the third-party authentication authority, where the fourth information indicates whether the second user is trustworthy. That the authentication unit performs authentication on whether the second user is trustworthy includes: The authentication unit performs, based on the fourth information, authentication on whether the second user is trustworthy, where the sixth public key is a public key in a sixth public-private key pair determined by the third-party authentication authority, the sixth public-private key pair further includes a sixth private key, the fourth encryption method is determined by the third-party authentication authority, and the sixth private key is used to verify the fourth encrypted information.

With reference to the fifth aspect, in some implementations of the fifth aspect, the receiving unit is further configured to receive a fifth authentication result and a seventh signature from the second terminal device, where the fifth authentication result is determined by the second terminal device and is used to indicate whether the second user is trustworthy, and the seventh signature is used to verify a fourth authentication result. That the authentication unit performs authentication on whether the second user is trustworthy includes: The authentication unit verifies the seventh signature, and when the verification succeeds, performs, based on the fifth authentication result, authentication on whether the second user is trustworthy.

With reference to the fifth aspect, in some implementations of the fifth aspect, the seventh signature is a signature that is generated by signing the fifth authentication result based on a private key of a second SIM card. That the authentication unit verifies the seventh signature includes: The authentication unit verifies the seventh signature based on a public key of the second SIM card, where the private key of the second SIM card and the public key of the second SIM card are a public-private key pair of the second SIM card, the second SIM card is disposed in the second terminal device, the private key of the second SIM card is stored in the second SIM card, and the public key of the second SIM card is stored in the apparatus.

With reference to the fifth aspect, in some implementations of the fifth aspect, when the second user is a calling user, before the authentication unit performs authentication on whether the second user is trustworthy, the apparatus further includes: an obtaining unit, configured to obtain historical call data of the second user, where the historical call data of the second user is used to indicate a call habit of second user equipment, and includes at least one of the following: distribution data of time points at which the second user initiates calls, frequency data of the first user answering calls when the second user initiates the calls, ringing duration data of the first terminal device when the second user initiates the calls, call duration distribution data of the second user, distribution data of geographical locations at which the second user initiates the calls, a proportion of the first user called for the first time, and home location distribution data of the first user. The processing unit is further configured to determine, based on a preset policy and the historical call data of the second user, whether a call initiated by the second user is trustworthy. That the authentication unit performs authentication on whether the second user is trustworthy includes: The authentication unit performs authentication on whether the first user is trustworthy based on whether the call initiated by the second user is trustworthy.

With reference to the fifth aspect, in some implementations of the fifth aspect, when a first operator and a second operator that serve the first user and the second user respectively are different operators, that the sending unit sends the first authentication result and the first signature to a second terminal device used by a second user or to a second operator network device is specifically: The sending unit sends the first signature and the first authentication result to the second operator network device. The sending unit is further configured to send the third public key to the second operator network device, where the third public key is used by the second operator network device to verify the first signature. The first authentication result and the fourth private key are used by the second operator network device to generate a fourth signature, the fourth signature is sent to the second terminal device to indicate the second terminal device to verify the first authentication result, the fourth private key is stored in the second operator network device, and the fourth private key and a fourth public key are a fourth public-private key pair.

With reference to the fifth aspect, in some implementations of the fifth aspect, the receiving unit is further configured to receive the fourth public key from the second operator network device. The receiving unit is further configured to receive a fifth signature and a fourth authentication result from the second operator network device, where the fifth signature is a signature that is generated by signing the fourth authentication result based on the fourth private key, and the fourth authentication result is used to indicate whether the second user is trustworthy. The processing unit verifies the fifth signature based on the fourth public key. After the verification succeeds, the processing unit signs the fourth authentication result based on the third private key, to generate a sixth signature. The sending unit sends the fourth authentication result and the sixth signature to the first terminal device.

According to a sixth aspect, wherein the sixth aspect and any of its implementations and options below are not claimed, an authentication apparatus is provided, where the authentication apparatus includes:
a receiving unit, configured to receive an encryption method and a public key from an operator network device; a processing unit, configured to encrypt physiological characteristic information of a user based on the encryption method and the public key, to generate encrypted information, where the physiological characteristic information of the user includes at least one of the following: fingerprint information of the user, voice print information of the user, facial information of the user, iris information of the user, and palm print information of the user; a sending unit, configured to send the encrypted information to the operator network device, where the user is a user who sends a message to the operator network device by using the apparatus, the public key is a public key in a public-private key pair determined by a third-party authentication authority, the public-private key pair further includes a private key, and the private key is stored in the third-party authentication authority and is used to verify the encrypted information.

According to a seventh aspect, wherein the seventh aspect and any of its implementations and options below are not claimed, an authentication apparatus is provided, where the authentication apparatus includes:
an authentication unit, configured to perform authentication on whether a user is trustworthy, to obtain an authentication result; a processing unit, configured to sign the authentication result based on a private key of a SIM, to generate a signature; and a sending unit, configured to send the authentication result and the signature to an operator network device.

According to an eighth aspect, wherein the eighth aspect and any of its implementations and options below are not claimed, an authentication apparatus is provided, where the authentication apparatus includes:
a management unit, configured to manage identification information of a user and physiological characteristic information of the user, where the identification information of the user identifies the user, and the physiological characteristic information of the user includes at least one of the following: fingerprint information of the user, voice print information of the user, facial information of the user, iris information of the user, and palm print information of the user; a processing unit, configured to determine a public key and an encryption method that are used for encrypting the physiological characteristic information of the user; a sending unit, configured to send the encryption method and the public key to an operator network device; and a receiving unit, configured to receive the identification information of the user and encrypted information from the operator network device, where the encrypted information is encrypted physiological characteristic information of the user; where the processing unit is further configured to: determine the user based on the identification information of the user, verify the encrypted information based on a private key, and determine, based on the verification result, whether the user is trustworthy, where the public key and the private key are a public-private key pair; and the sending unit is further configured to send, to the operator network device, information indicating whether the user is trustworthy, where the user is a user who sends a message to the operator network device by using a terminal device.

With reference to the eighth aspect, in some implementations of the eighth aspect, the encrypted information is determined by the operator network device, or the encrypted information is determined by the terminal device.

According to a ninth aspect according to the invention, the invention also provides an authentication apparatus. The authentication apparatus implements the functions of the first operator network device in the method described in the above first aspect.

In a possible implementation, the authentication apparatus may further include a memory. The memory is coupled to the processor, and the processor is configured to implement the functions of the first operator network device in the method described in the first aspect.

In a possible implementation, the memory is configured to store program instructions and data. The memory is coupled to the processor, and the processor may invoke and execute program instructions stored in the memory, to implement the functions of the first operator network device in the method described in the first aspect.

In a possible implementation, the authentication apparatus may further include a communication interface. The communication interface is used by the authentication apparatus to communicate with another device. The communication interface may be a transceiver, an input/output interface, a circuit, or the like.

In a possible design, the authentication apparatus includes the processor and the communication interface, where
the processor is configured to run a computer program, so that the authentication apparatus implements any method described in the first aspect; and
the processor communicates with an external device through the communication interface.

It can be understood that the external device may be an object other than the processor, or an object outside the apparatus.

In another possible design, the authentication apparatus is a chip or a chip system. The communication interface may be an input/output interface, an interface circuit, an output circuit, an input circuit, a pin, a related circuit, or the like in the chip or the chip system. The processor may be alternatively a processing circuit or a logic circuit.

According to a tenth aspect, wherein the tenth aspect and any of its implementations and options below are not claimed, an authentication apparatus is provided. The authentication apparatus includes a processor, configured to implement functions of the terminal device in the methods described in the second aspect and the third aspect.

In a possible implementation, the authentication apparatus may further include a memory. The memory is coupled to the processor, and the processor is configured to implement the functions of the terminal device in the methods described in the second aspect and the third aspect.

In a possible implementation, the memory is configured to store program instructions and data. The memory is coupled to the processor, and the processor may invoke and execute program instructions stored in the memory, to implement the functions of the terminal device in the methods described in the second aspect and the third aspect.

In a possible implementation, the authentication apparatus may further include a communication interface. The communication interface is used by the authentication apparatus to communicate with another device. The communication interface may be a transceiver, an input/output interface, a circuit, or the like.

In a possible design, the authentication apparatus includes the processor and the communication interface, where
the processor communicates with an external device through the communication interface; and
the processor is configured to run a computer program, so that the authentication apparatus implements any method described in the second aspect and the third aspect.

It can be understood that the external device may be an object other than the processor, or an object outside the apparatus.

In another possible design, the authentication apparatus is a chip or a chip system. The communication interface may be an input/output interface, an interface circuit, an output circuit, an input circuit, a pin, a related circuit, or the like in the chip or the chip system. The processor may be alternatively a processing circuit or a logic circuit.

According to an eleventh aspect, wherein the eleventh aspect and any of its implementations and options below are not claimed, an authentication apparatus is provided. The authentication apparatus includes a processor, configured to implement functions of the third-party authentication authority in the method described in the fourth aspect.

In a possible implementation, the authentication apparatus may further include a memory. The memory is coupled to the processor, and the processor is configured to implement the functions of the third-party authentication authority in the method described in the fourth aspect.

In a possible implementation, the memory is configured to store program instructions and data. The memory is coupled to the processor, and the processor may invoke and execute program instructions stored in the memory, to implement the functions of the third-party authentication authority in the method described in the fourth aspect.

In a possible implementation, the authentication apparatus may further include a communication interface. The communication interface is used by the authentication apparatus to communicate with another device. The communication interface may be a transceiver, an input/output interface, a circuit, or the like.

In a possible design, the authentication apparatus includes the processor and the communication interface, where
the processor communicates with an external device through the communication interface; and
the processor is configured to run a computer program, so that the authentication apparatus implements any method described in the fourth aspect.

It can be understood that the external device may be an object other than the processor, or an object outside the apparatus.

In another possible design, the authentication apparatus is a chip or a chip system. The communication interface may be an input/output interface, an interface circuit, an output circuit, an input circuit, a pin, a related circuit, or the like in the chip or the chip system. The processor may be alternatively a processing circuit or a logic circuit.

According to a twelfth aspect, wherein the twelfth aspect and any of its implementations and options below are not claimed, this application provides a computer-readable storage medium. The computer-readable storage medium stores instructions, and when the instructions are run on a computer, the computer is enabled to perform the methods in the foregoing aspects.

According to a thirteenth aspect, wherein the thirteenth aspect and any of its implementations and options below are not claimed, this application provides a computer program product including instructions. When the computer program product runs on a computer, the computer is enabled to perform the methods in the foregoing aspects.

According to a fourteenth aspect, wherein the fourteenth aspect and any of its implementations and options below are not claimed, a communication system is provided, including the authentication apparatus described in the fifth aspect to the authentication apparatus described in the eighth aspect.

According to a fifteenth aspect according to the invention, the invention also provides a chip system. The chip system includes at least one processor and a communication interface. The communication interface is connected to the at least one processor through a line. The at least one processor is configured to run a computer program or instructions, to perform the method in any one of the possible implementations of the first aspect to the fourth aspect. The communication interface in the chip may be an input/output interface, a pin, a circuit, or the like.

In a possible implementation, the chip or the chip system described in this application further includes at least one memory, and the at least one memory stores instructions. The memory may be a storage unit inside the chip, for example, a register or a cache, or may be a storage unit (for example, a read-only memory or a random access memory) of the chip.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

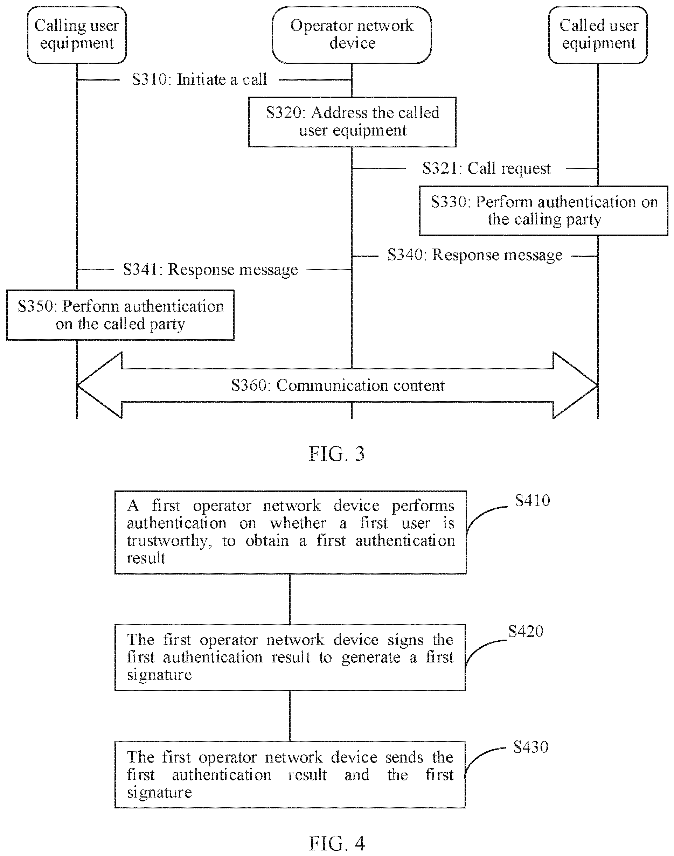

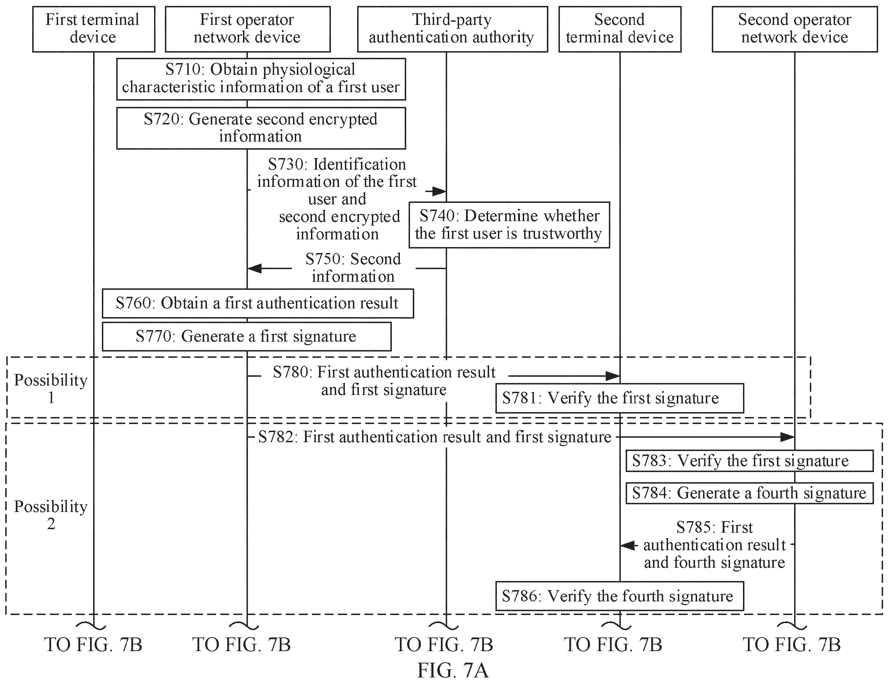

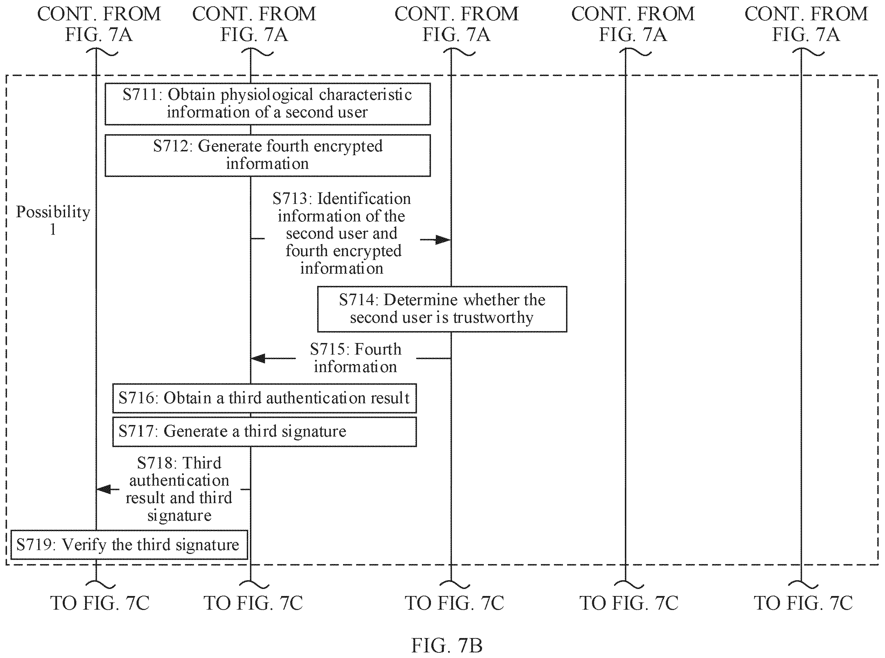

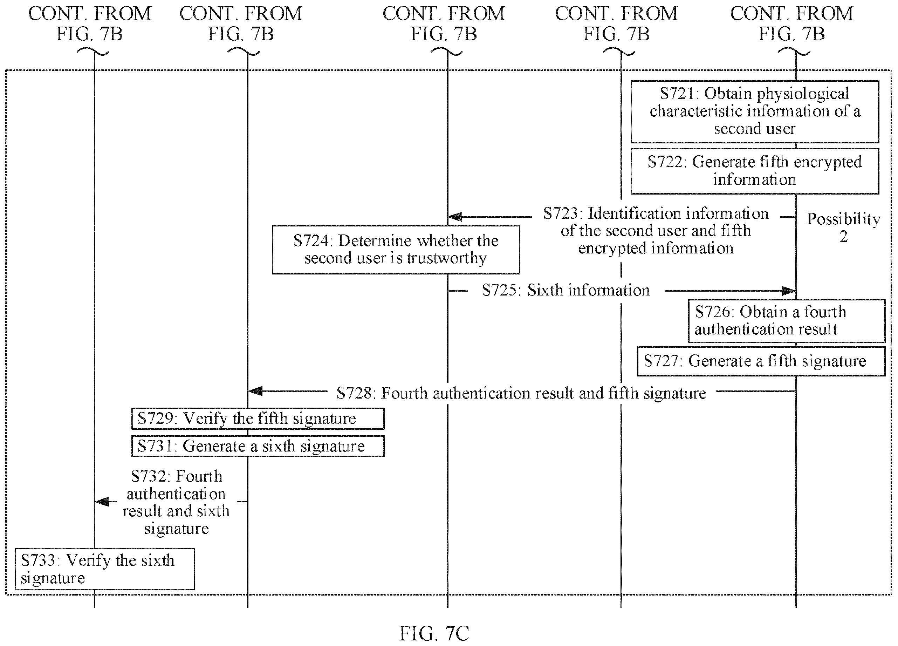

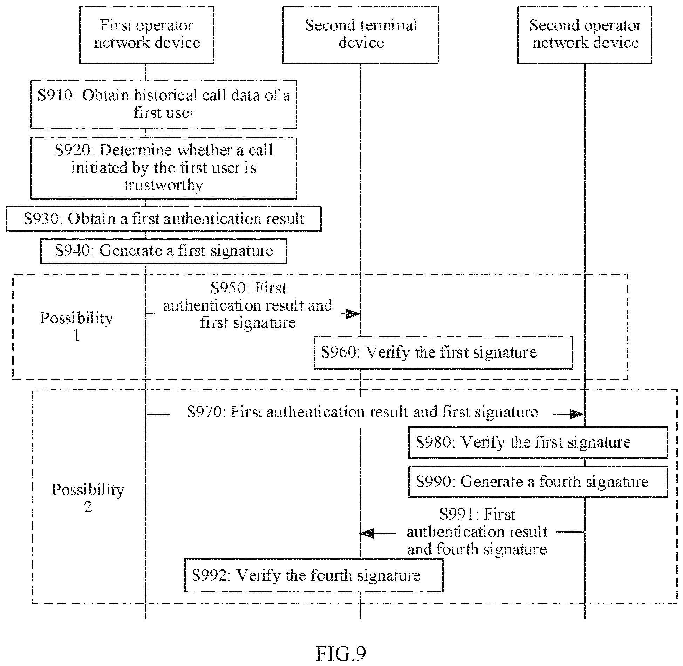

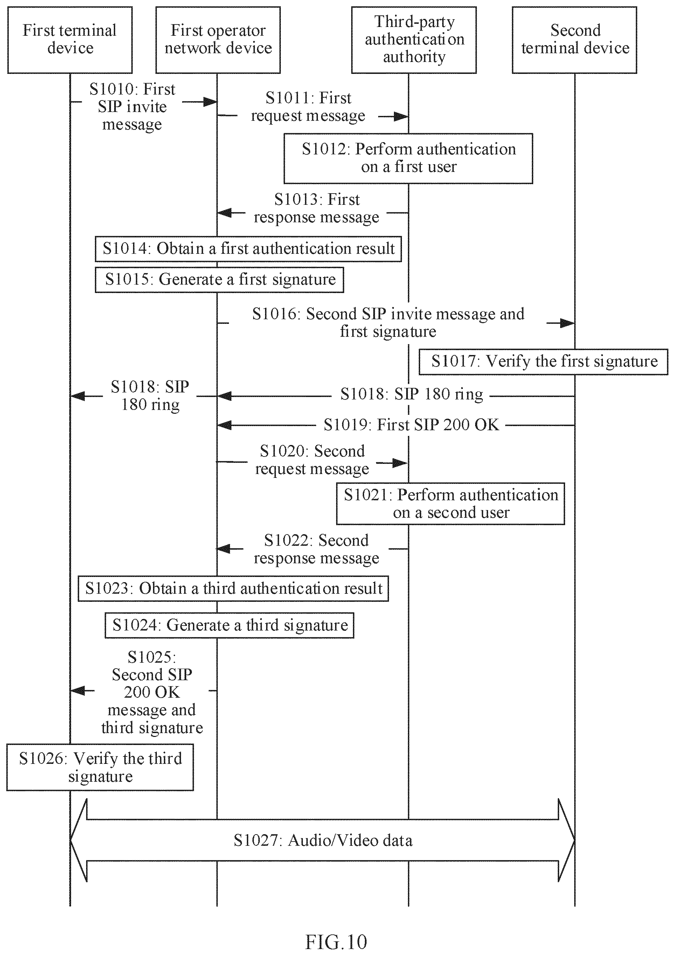

In the following description of embodiments with reference to the drawings, it should be noted that the features/steps of the invention as claimed with the independent and dependent claims are in particular illustrated in the embodiments described and shown with reference to FIG. 4, FIG. 5, FIG. 6, and FIG. 8. Embodiments described and shown with reference to FIG. 7 and FIG. 9, although repeating some of the steps of FIG. 4, FIG. 5, FIG. 6 and FIG. 8, are not directly covered by the independent claims and illustrate other examples and implementations which serve further understanding of the invention. Likewise, embodiments described and shown with reference to FIG. 10, FIG. 11, and FIG. 12 are not directly covered by the independent or dependent claims and illustrate other examples and implementations which also serve further understanding of the invention. However, FIG. 9 and FIG. 7 also repeat some steps as claimed with the dependent claims as indicated with the reference numerals in the dependent claims.

### BRIEF DESCRIPTION OF DRAWINGS

FIG. 1 is a schematic block diagram of a network architecture to which an embodiment of this application is applicable;
FIG. 2 is a schematic flowchart of a communication method;
FIG. 3 is a schematic flowchart of another communication method;
FIG. 4 is a schematic flowchart of an authentication method according to this application;
FIG. 5A to FIG. 5C are a schematic flowchart of an authentication manner according to an embodiment of this application;
(a) and (b) in FIG. 6 show key distribution procedures according to this application;
FIG. 7A to FIG. 7C are a schematic flowchart of another authentication manner according to an embodiment of this application;
FIG. 8A and FIG. 8B are a schematic flowchart of still another authentication manner according to an embodiment of this application;
FIG. 9 is a schematic flowchart of yet another authentication manner according to an embodiment of this application;
FIG. 10 is a schematic flowchart of a call procedure according to an embodiment of this application;
FIG. 11 is a schematic flowchart of another call procedure according to an embodiment of this application;
FIG. 12 is a schematic flowchart of still another call procedure according to an embodiment of this application;
FIG. 13 is a schematic diagram of an authentication apparatus 1300 according to this application;
FIG. 14 is a schematic diagram of a structure of an operator network device 1400 to which an embodiment of this application is applicable;
FIG. 15 is a schematic diagram of a structure of an operator network device 1500 to which an embodiment of this application is applicable;
FIG. 16 is a schematic diagram of an authentication apparatus 1600 according to this application;
FIG. 17 is a schematic diagram of a structure of a terminal device 1700 to which an embodiment of this application is applicable;
FIG. 18 is a schematic diagram of an authentication apparatus 1800 according to this application; and
FIG. 19 is a schematic diagram of a structure of a third-party authentication authority 1900 to which an embodiment of this application is applicable.

The method set out by the independent claims is described mainly with reference to figures 4-6. Figure 7 shows an example which does not fall in the scope of the claims.

### DESCRIPTION OF EMBODIMENTS

The following describes technical solutions in this application with reference to the accompanying drawings.

The technical solutions in embodiments of this application can be applied to various communication systems, such as a fifth generation (5th generation, 5G) system, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application can be further applied to future communication systems such as a sixth generation mobile communication system. The technical solutions in embodiments of this application can be further applied to device-to-device (device to device, D2D) communication, vehicle-to-everything (vehicle-to-everything, V2X) communication, machine-to-machine (machine to machine, M2M) communication, machine type communication (machine type communication, MTC), an Internet of things (internet of things, IoT) communication system, or another communication system.

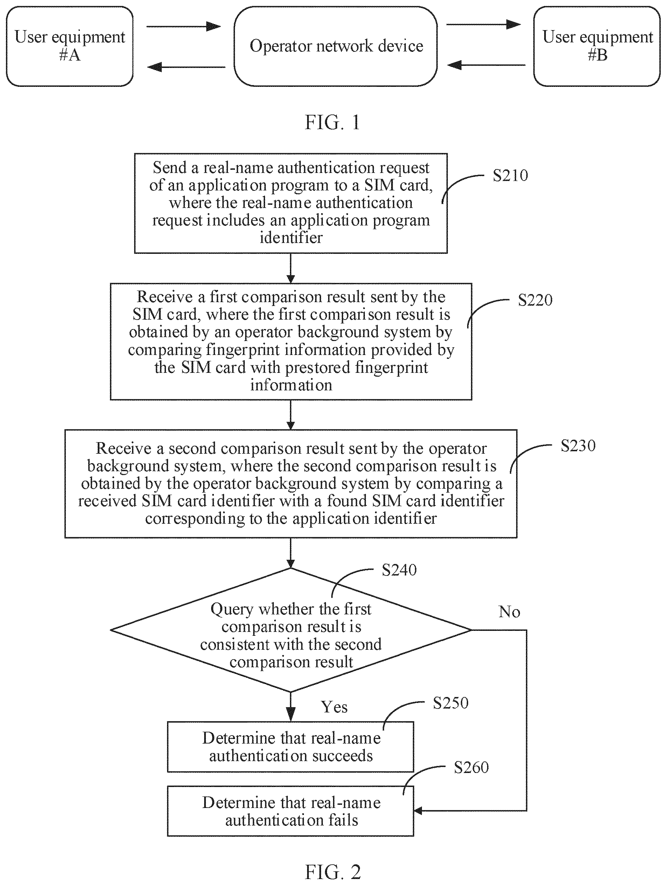

For ease of understanding embodiments of this application, a communication system to which embodiments of this application are applicable is first described with reference to FIG. 1 briefly.

As an example for description, FIG. 1 is a schematic block diagram of a network architecture to which an embodiment of this application is applicable. As shown in FIG. 1, the network architecture may include but is not limited to the following devices (or referred to as a functional network element, a node, a network element, or the like):
user equipment (user equipment, UE) #A, UE #B, and an operator network device.

The following briefly describes the devices shown in FIG. 1.
1. User equipments: Both the UE #A and the UE #B may be referred to as user equipments, and a difference lies in that one UE of the UE #A and the UE #B is calling UE, and the other UE is called UE. Specifically, in this embodiment of this application, which one of the two UEs is the calling UE and which one is the called UE is not limited.

The user equipments in this embodiment of this application may include various handheld devices, vehicle-mounted devices, wearable devices, computing devices that have a wireless communication function, or other processing devices connected to a wireless modem, and various forms of terminals, mobile stations (mobile stations, MSs), terminals (terminals), software terminals, and the like, such as a water meter, an electricity meter, and a sensor.

For example, the user equipment in this embodiment of this application may be an access terminal, a subscriber unit, a subscriber station, a mobile station, a mobile console, a relay node, a remote station, a remote terminal, a mobile device, a user terminal (user terminal), a terminal device (terminal equipment), a wireless communication device, a user agent, or a user apparatus. The user equipment may be alternatively a cellular phone, a cordless telephone set, a session initiation protocol (session initiation protocol, SIP) phone, a wireless local loop (wireless local loop, WLL) station, a personal digital assistant (personal digital assistant, PDA), a handheld device or a computing device that have a wireless communication function, another processing device connected to a wireless modem, a vehicle-mounted device, a wearable device, user equipment in a 5G network, user equipment in a future evolved public land mobile network (public land mobile network, PLMN), user equipment in a future Internet of vehicles, or the like. This is not limited in this embodiment of this application.

By way of example rather than limitation, in this embodiment of this application, the wearable device may also be referred to as a wearable smart device and is a generic name for devices that are wearable and that are developed by applying a wearable technology to perform intelligent design for everyday wear, such as glasses, gloves, a watch, clothing, and shoes. The wearable device is a portable device that is directly worn on a body or integrated into clothes or an accessory of a user. The wearable device is not merely a hardware device, and even implements powerful functions through software support, data exchange, and cloud interaction. Generalized wearable smart devices include full-featured and large-size devices that can implement complete or partial functions without relying on smartphones, for example, a smartwatch and smart glasses; and include devices that are specialized in only one type of application function and that need to be used cooperatively with another device such as a smartphone, for example, various smart bands or smart jewelry for monitoring physical signs.

The user equipment in this embodiment of this application may be alternatively user equipment in an Internet of things (internet of Things, IoT) system. The IoT is an important part of development of future information technologies. A main technical feature of the IoT is to connect an object to a network by using a communication technology, to form an intelligent network for implementing human-machine interaction and thing-thing interaction. In this embodiment of this application, an IoT technology can implement massive connections, deep coverage, and terminal power saving by using, for example, a narrow band (narrow band, NB) technology. The user equipments in this embodiment of this application may alternatively include sensors such as a smart printer, a train detector, and a gas station. Main functions include collecting data (which is performed by some user equipments), receiving control information and downlink data of an access network device, sending an electromagnetic wave, and transmitting uplink data to the access network device.

It should be noted that the user equipment in this embodiment of this application is trustworthy user equipment. To be specific, the user equipment is user equipment that is produced by a trustworthy device manufacturer and that is authenticated by a trustworthy device authentication authority.

2. An operator network device can be understood as a call session control function (call session control function, CSCF) network element. The CSCF network element is a session control function entity in an IMS. The CSCF implements a main softswitch control function in a multimedia call in an IP multimedia subsystem (IP multimedia subsystem, IMS) network system. The CSCF network element may be further classified into a proxy call session control function (proxy-call session control function, P-CSCF) network element, an interrogating call session control function (interrogating-call session control function, I-CSCF) network element, and a serving call session control function (serving-call session control function, S-CSCF) network element. The CSCF may be referred to as a call control server for short.

The P-CSCF may be located in an access network in which the UE is currently located. As the 1^{st} connection network element for the UE to access the IMS network, the P-CSCF forwards a session initiation protocol (session initiation protocol, SIP) message of the UE to the IMS core network and forwards a received SIP message to the UE.

As a core call control entity, the S-CSCF implements basic call control functions. The S-CSCF needs to perform processing, including implementing main control functions such as routing, application server (application server, AS) service triggering, and redirection, on SIP messages. It should be noted that the operator network device in this embodiment of this application is located in a communication network of a trustworthy communication operator, and is a device configured to perform authentication on whether user identities of both communication parties (calling user equipment and called user equipment) are trustworthy.

The operator network device and the user equipments may be deployed on land, for example, may be deployed indoor or outdoor, or may be handheld or vehicle-mounted; may be deployed on water; or may be deployed on an airplane, a balloon, or a satellite in the air. A scenario in which the operator network device and the user equipments are situated is not limited in this embodiment of this application.

In this embodiment of this application, the operator network device or the user equipment includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that process a service by using a process (process), for example, a Linux operating system, a Unix operating system, an Android operating system, an iOS operating system, or a Windows operating system. The application layer includes applications such as a browser, an address book, word processing software, and instant messaging software.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage device (for example, a hard disk, a floppy disk, or a magnetic tape), an optical disc (for example, a compact disc (compact disc, CD) or a digital versatile disc (digital versatile disc, DVD)), a smart card, and a flash memory device (for example, an erasable programmable read-only memory (erasable programmable read-only memory, EPROM), a card, a stick, or a key drive). Moreover, various storage media described in this specification may represent one or more devices and/or other machine-readable media that are configured to store information. The term "machine-readable media" may include but is not limited to a radio channel, and various other media that can store, contain, and/or carry instructions and/or data.

It should be understood that FIG. 1 is merely a simplified schematic diagram used as an example for ease of understanding. The communication system may further include other devices not drawn in FIG. 1.

For example, the communication system may further include a core network device, and the operator network device may be connected to the core network device in a wireless or wired manner. The core network device and the operator network device may be different independent physical devices, functions of the core network device and logical functions of the operator network device may be integrated into one physical device, or some functions of the core network device and some functions of the operator network device may be integrated into one physical device.

For ease of understanding embodiments of this application, the following briefly describes several basic concepts in embodiments of this application.

### 1. AI face swapping

AI face swapping means that a face in a video can be changed into another person's face through AI algorithm image processing (Photoshop, PS). In recent years, emergence of an AI face swapping application ZAO has attracted public attention. A photo only needs to be uploaded to ZAO, and then a specified face in a video can be changed into a corresponding face through PS. This is quite simple and effective.

### 2. AI voice change

A neural network machine learning algorithm is used for model training, and a simulated voice is difficult to identify. A free change in a voice is accessible to people. For example, a website modulate.ai provides an AI voice change service, and even voices of celebrities can be perfectly simulated. A voice change technology used by modulate.ai is similar to that used by DeepFakes. In addition, a website lyrebird.ai also provides a similar service, and provides a larger range of thousands of imitation objects.

### 3. Telecommunication fraud

Telecommunication fraud is criminal acts of making false information, setting deceptions, and performing remote and non-contact frauds on victims through telephone, network, and SMS to induce the victims to pay money or transfer money, and is usually implemented by impersonating others and forging various legal means and forms.

### 4. Key

A key is an input parameter in an algorithm in which plaintext is converted into ciphertext or ciphertext is converted into plaintext.

### 5. Public key and private key

A public key is a non-secret half of a key pair used with a private key. The public key is generally used to encrypt a session key, verify a digital signature, or encrypt data that can be decrypted by using a corresponding private key. The public key and the private key are a key pair (that is, a public key and a private key) obtained by using an algorithm. The public key is open to the public, whereas the private key is confidential. The key pair obtained through such an algorithm can ensure worldwide uniqueness. When this key pair is used, if one of the keys is used to encrypt a segment of data, the other key needs to be used to decrypt the data. If the public key is used to encrypt data, the private key needs to be used to decrypt the data. If the private key is used to encrypt data, the public key needs to be used to decrypt the data. Otherwise, the decryption fails.

In the private key encryption algorithm, a single private key is used to encrypt and decrypt data. Because any one having a key can decrypt the data by using the key, it is necessary to prevent the key from being obtained by an unauthorized agent. Private key encryption is also referred to as symmetric encryption because a same key is used for both encryption and decryption.

### 6. Signature

A signature in this embodiment of this application can be understood as follows: A digital signature (or referred to as a public key digital signature) is a digit string that can be generated only by a sender of information and that cannot be forged by other persons, and the digit string is also a valid proof of authenticity of the information sent by the sender of the information. The digital signature is similar to a common physical signature written on paper, but is implemented by using a technology in the public key encryption field, and is a method for verifying digital information. A set of digital signatures generally defines two complementary operations, one is used for signature, and the other one is used for verification. The digital signature is an application of asymmetric key cryptography and digital digest technologies.

### 7. Session initiation protocol (session initiation protocol, SIP)

An SIP is an application-layer signaling control protocol. The SIP is used to create, modify, and release sessions of one or more participants. These sessions may be Internet multimedia conferences, IP phone calls, or multimedia distribution. Participants in the sessions may perform communication through multicast (multicast), mesh unicast (unicast), or a combination of multicast and mesh unicast.

According to the AI face swapping, AI voice change, and telecommunication fraud described in the foregoing basic concepts, as AI face swapping and AI voice change technologies, and the like emerge, criminals commit telecommunication fraud in such new ways. Therefore, implementing trustworthy communication, that is, ensuring that communication content is authentic and is not tampered with during communication content collection, communication content transmission, communication content presentation, and the like through end-to-end cooperation, has an important and positive effect on avoidance or reduction of telecommunication fraud.

In a communication method, real-name authentication can ensure that communication content is trustworthy. The following briefly describes the communication method with reference to FIG. 2. FIG. 2 is a schematic flowchart of a communication method. The communication method includes the following steps.

S210: Send a real-name authentication request of an application program to a SIM card, where the real-name authentication request includes an application program identifier.

S220: Receive a first comparison result sent by the SIM card, where the first comparison result is obtained by an operator background system by comparing fingerprint information provided by the SIM card with prestored fingerprint information.

S230: Receive a second comparison result sent by the operator background system, where the second comparison result is obtained by the operator background system by comparing a received SIM card identifier with a found SIM card identifier corresponding to the application identifier.

S240: Query whether the first comparison result is consistent with the second comparison result.

If the first comparison result is consistent with the second comparison result, step S250 is performed, and it is determined that real-name authentication succeeds. If the first comparison result is inconsistent with the second comparison result, step S260 is performed, and it is determined that real-name authentication fails.

A premise that the method procedure shown in FIG. 2 can be successfully performed is that an operator needs to collect and store fingerprint data of a user. However, the fingerprint data is quite sensitive personal privacy information, and the user is unnecessarily willing to hand over the fingerprint data to the operator for storage and use.

In another communication method, trusted authentication can ensure that communication content is trustworthy, and mainly relates to device trustworthiness and user trustworthiness.

Device trustworthiness involves three roles: a trustworthy device authentication authority, a trustworthy device certificate authority, and a trustworthy device manufacturer. User trustworthiness also involves three roles: a trustworthy user certificate authority, a trustworthy user identity authentication authority, and a trustworthy communication service provider.

Responsibilities of the roles involved in device trustworthiness are as follows.
1. Responsibilities of the trustworthy device authentication authority:
   (1) Perform authentication on whether devices (for example, mobile phones and IoT terminals) produced by the trustworthy device manufacturer are trustworthy, including but not limited to whether terminal hardware supports trusted boot in terms of a chip, a driver, an operating system, and basic software, and whether communication information (audio, a video, a temperature, a speed, and the like) can be collected, processed, sent, and presented without being tampered with. After the authentication succeeds, the corresponding hardware is included in a trustworthy device model list.
   (2) Pay attention to security dynamics in the industry and update the trustworthy device model list.
      For example, if a device produced two years ago is cracked by a hacker and cannot ensure trustworthy communication, the device needs to be deleted from the trustworthy device model list.
   (3) Provide an interface for querying whether a trustworthy device model is trustworthy.
2. Responsibilities of the trustworthy device certificate authority:
   (1) Generate and manage keys of a trustworthy device digital certificate: a key K1 and a public key K2.
   (2) For user equipments authenticated by the trustworthy device authentication authority, use K1 to sign specific device hardware information provided by the trustworthy device manufacturer, and generate a unique trustworthy device digital certificate for each device.
3. Responsibilities of the trustworthy device manufacturer:
   (1) Produce trustworthy user equipment and enable the user equipment to be authenticated by the trustworthy device authentication authority.
   (2) During production of each trustworthy device, allocate a group of keys: a key K3 and a public key K4, where K3 is written into firmware of the terminal and can be read only by bottom-layer trustworthy system software of the terminal.
   (3) Submit hardware information such as a device model, a device number, and a MAC address of a media trustworthy device and K4 to the trustworthy device certificate authority, so that the trustworthy device certificate authority generates a digital certificate of the device and writes the digital certificate into firmware of the user equipment.

The trustworthy authentication authority and the trustworthy device certificate authority may be a same authority or different authorities.

Responsibilities of the roles involved in user trustworthiness are as follows.
1. Responsibilities of the trustworthy user certificate authority:
   (1) Generate and manage keys of a trustworthy user digital certificate: a key K5 and a public key K6.
   (2) Use K5 to sign specific user information provided for performing authentication by the trustworthy user authentication authority, and generate a unique trustworthy user digital certificate for each user identity.
2. Responsibilities of the trustworthy user identity authentication authority:
   (1) Support user registration and addition of trustworthy identity certificates, perform identity authentication (for example, real-name authentication) on a user, and collect, after the identity authentication succeeds, verification information corresponding to the identity certificates. The verification information is, for example, a password, a fingerprint, a voice print, and a retina characteristic.
      One user may have a plurality of identity certificates, such as a password certificate 1, a password certificate 2, a fingerprint certificate, a voice print certificate, and a retina certificate. Whether an identity certificate is trustworthy does not affect trustworthiness of other identity certificates.
   (2) Generate a group of passwords for each user identity certificate, including:
      a public information password of the identity certificate: a key K7 and a public key K8; and
      a privacy information password of the identity certificate: a key K9 and a public key K10.
   (3) Submit K8 and public information such as a user name, identity certificate IDs, and a gender to the trustworthy user certificate authority, so that the trustworthy user certificate authority generates a public digital certificate of the user identity.
   (4) Submit the public information such as the user name, the identity certificate IDs, and the gender, and user privacy information (for example, the verification information (the password, the fingerprint, the voice print, and the retina characteristic) of the identity certificates and an identity card number) obtained through signature by using K9 to the trustworthy user certificate authority, so that the trustworthy user certificate authority generates a private digital certificate of the user identity.
   (5) Periodically perform trusted authentication on the user, receive a user identity certificate revocation application, and update a user identity trust status, to prevent the user identity certificates from being used by a third party after being disclosed (for example, a password is disclosed).
   (6) Provide an interface for querying the user identity trust status.
3. Responsibilities of the trustworthy communication service provider:
   (1) Provide user card application, subscription, and communication service provisioning functions.
   (2) According to user authorization, obtain the public digital certificate, the private digital certificate, K10, and K7 of the user identity from the trustworthy user identity authentication authority, and send these pieces of information to the user equipment of the user (for example, write these pieces of information in a SIM card of the mobile phone or store these pieces of information on the mobile phone of the user after the information is encrypted).
   (3) Generate and manage trusted endorsement keys of the communication service provider: a key K11 and a public key K12.

For example, the trustworthy user identity authentication authority, the trustworthy user certificate authority, and the trustworthy communication service provider may be a same authority, may be three authorities, or may be two authorities.

For example, a government agency serves as the trustworthy user identity authentication authority, a third-party certificate authority serves as the trustworthy user certificate authority, and a telecommunication operator (China Mobile or China Unicom) or an OTT vendor (WeChat or Alipay) serves as the trustworthy communication service provider.

For another example, a telecommunication operator (China Mobile or China Unicom) serves as the trustworthy user identity authentication authority, the trustworthy user certificate authority, and the trustworthy communication service provider.

The following briefly describes the communication method with reference to FIG. 3. FIG. 3 is a schematic flowchart of another communication method. The communication method includes the following steps.

S310: A calling user initiates a call by using a trustworthy device (the calling user equipment shown in FIG. 3).

Specifically, when the trustworthy device initiates the call, the trustworthy device determines whether a user identity is trustworthy, only if the trustworthy device determines that a chain of trust of the trustworthy device is not cracked (root user permission is not obtained, a chip is not physically attacked, an operating system/basic software is not tampered with, collected content is not processed by uncontrollable software, and the like). The process is as follows:
using K6 to verify a private digital certificate of the user identity, after the verification succeeds, obtaining user privacy information encrypted by using K9;
using K10 to verify the user privacy information, in the certificate, encrypted by using K9; and
after the verification succeeds, using an identity certificate in the user privacy information to verify whether the information matches information entered by the calling user or collected by the terminal, and if the two pieces of information match each other, considering that the user identity is trustworthy, and allowing initiating a trustworthy call.

For example, user identity verification may be alternatively performed before a trustworthy call is initiated. For example, after the user identity is verified by using information such as a password and a fingerprint when the mobile phone is powered on or unlocked, it may be considered that the user identity is trustworthy when the call is initiated.

If the device used by the calling user is trustworthy and the user identity is trustworthy, calling-party trust parameters are added to a call request. The trust parameters include:
a device trustworthiness certificate: a certificate that is signed by using K1 and that includes information such as a device model, a device number, and K4;
a device trustworthiness signature: a signature made by using K3, where signature content may include at least one of the following parameters:
   a message digest, the device model, the device number, a user name, identity certificate IDs, and a timestamp, where the message digest is a check value of content of the call request message and may verify whether the message has been tampered with, the device model and/or the device number identify/identifies firmware information of the user equipment, the user name and/or the identity certificate IDs identify the identity of the user who initiates the call, and the timestamp identifies signature time;
   a user identity disclosure trustworthiness certificate: a certificate that is signed by using K5 and that includes information such as the user name, the identity certificate IDs, and K8; and
   a user trustworthiness signature: a signature made by using K7, where signature content may include at least one of the following parameters:
      the message digest, the device model, the device number, the user name, the identity certificate IDs, and the timestamp.

After receiving the calling-party call request, a trustworthy subject (communication network) performs the following steps.

S320: Address called user equipment.

S321: Initiate the call request to the called user equipment.

The trustworthiness signatures of the calling party are transparently transmitted during initiation of the call request.

A called user receives the trustworthy call request by using a trustworthy device (the called user equipment shown in FIG. 3). When determining that a chain of trust of the trustworthy device is not cracked, the trustworthy device performs the following step.

S330: Perform authentication on the calling party.

Specifically, the called user equipment performs calling user identity trusted authentication and calling device trusted authentication on the trustworthiness signatures in the request. If the authentication succeeds, that the calling user is trustworthy is indicated.

Specifically, the calling user identity trusted authentication includes:
using K6 to verify the user identity disclosure trustworthiness certificate in the trust parameters, and after the verification succeeds, extracting K8 from the certificate; and
using K8 to verify the user trustworthiness signature in the trust parameters, and based on information such as the message digest, the device model, the device number, and the timestamp in the signature, confirming that the call request is not tampered with or is not attacked repeatedly.

The calling device trusted authentication includes:
using K2 to verify the device trustworthiness certificate in the trust parameters, and after the verification succeeds, extracting K4 from the certificate; and
using K4 to verify the device trustworthiness signature in the trust parameters, and based on information such as the message digest, the user name, the identity certificate IDs, and the timestamp in the signature, confirming that the call request is not tampered with or is not attacked repeatedly.

There are many methods for obtaining K2 and K6 by the called party, for example, a system presetting manner, a mainstream certificate authority setting manner in the industry, or a public key setting manner.

The called user answers the call by using the trustworthy device, and performs the following steps.

S340: The called user equipment sends a response message to an operator network device.

S341: The operator network device sends the response message to the calling user equipment.

Sending the response message by the called user by using the trustworthy device is similar to initiating the call by the calling party. The trustworthy device adds called-party trust parameters to the response message after determining that the chain of trust of the trustworthy device is not cracked and determining that a called user identity is trustworthy. A called user trustworthiness signature uses K7', and a called device trustworthiness signature uses K3'.

The calling user receives the response message by using the trustworthy device, and performs the following step.

S350: Perform authentication on the called party.

Specifically, the calling user equipment performs called user identity trusted authentication and called device trusted authentication on the trustworthiness signatures in the response.

If the authentication succeeds, that the called user is trustworthy is indicated.

Specifically, the called user trustworthiness signature and the called device trustworthiness signature may be verified by using a verification mechanism for verifying the calling party by the called party, and if the verification succeeds, that the called user is trustworthy is indicated.

After a call connection process is completed, the following step is performed:

S360: The calling party sends communication content to the called party.

During sending of the communication content (audio or a video) to the called party by the calling party, when determining that the chain of trust of the trustworthy device is not cracked and the user identity is trustworthy, the trustworthy device adds the calling-party trust parameters to the collected communication content and then sends the added communication content.

When the called party receives the trustworthy communication content by using the trustworthy device, and determines that the chain of trust of the trustworthy device is not cracked, the called party performs calling identity trusted authentication and calling terminal trusted authentication on the trustworthiness signatures in the communication content. If the authentication succeeds, that the communication content is trustworthy is indicated to the user.

That the called party sends a signature mechanism and a check mechanism of the trustworthy communication content to the calling party is similar to that the calling party sends a signature mechanism and a check mechanism of the communication content to the called party. Details are not described again.

The trusted authentication processes in the communication method shown in FIG. 3 are mainly completed on the user equipment sides, and have high requirements on the user equipments.

Although the foregoing communication methods shown in FIG. 2 and FIG. 3 can ensure message reliability and avoid or reduce telecommunication fraud, there are some disadvantages (for example, sensitive identity information needs to be stored, and the user equipments need high configurations). This application provides another authentication method, so that telecommunication fraud can also be avoided or reduced.

It should be understood that the authentication method provided in this embodiment of this application can be applied to various communication systems, for example, the communication system shown in FIG. 1.

A specific structure of an entity for performing the methods provided in embodiments of this application is not particularly limited in the following embodiments, provided that a program that records code for performing the methods provided in embodiments of this application can be run to perform communication according to the methods provided in embodiments of this application. For example, the entity for performing the methods provided in embodiments of this application may be user equipment or an operator network device, or may be a functional module, in the user equipment or the operator network device, that can invoke and execute the program.

For ease of understanding of embodiments of this application, the following descriptions are provided.

First, in this application, "used to indicate" can be understood as "enabling", and "enabling" may include direct enabling and indirect enabling. That a piece of information enables A may include that the information directly enables A or indirectly enables A, but it does not indicate that the information necessarily carries A.

Information enabled by information is referred to as to-be-enabled information. In a specific implementation process, there are many manners for enabling the to-be-enabled information. The manners are, for example, but not limited to, directly enabling the to-be-enabled information, such as enabling the to-be-enabled information or an index of the to-be-enabled information. Alternatively, the to-be-enabled information may be indirectly enabled by enabling other information. There is an association relationship between the other information and the to-be-enabled information. Alternatively, only a part of the to-be-enabled information may be enabled, and the other part of the to-be-enabled information is known or is pre-agreed. For example, alternatively, a sorting order of a variety of information agreed in advance (for example, specified in a protocol) may be used to enable specific information, to reduce enabling overheads to some extent. In addition, general parts of the variety of information may be further identified and then enabled together, to reduce enabling overheads caused by separately enabling the same information.

Second, "first", "second", and various numbers (for example, "#1" and "#2") described in this application are merely for ease of description, and are used to distinguish between objects, but are not intended to limit the scope of embodiments of this application. For example, the numbers are used to differentiate different information, but are not used to describe a particular order or sequence. It should be understood that the objects described in this way are interchangeable in a proper circumstance, so that solutions other than embodiments of this application can be described.

Third, in this application, "preset" may include a predefinition, for example, a protocol definition. "Predefinition" may be implemented by prestoring corresponding code or a corresponding table in a device (for example, including a terminal device and a network device) or implemented in another manner that can be used to indicate related information. A specific implementation thereof is not limited in this application.

Fourth, "storage" in embodiments of this application may be "storage in one or more memories". The one or more memories may be separately disposed, or may be integrated into an encoder, a decoder, a processor, or a communication apparatus. Alternatively, some of the one or more memories may be disposed separately, and some others may be integrated into a decoder, a processor, or a communication apparatus. A type of the memory may be a storage medium in any form, and is not limited in this application.

Fifth, "protocols" in embodiments of this application may be standard protocols in the communication field, and may include, for example, a 5G protocol, a new radio (new radio, NR) protocol, and a related protocol applied to a future communication system. This is not limited in this application.

Without loss of generality, the following uses interaction between a terminal device and an operator network device as an example for detailing the authentication method provided in embodiments of this application.

FIG. 4 is a schematic flowchart of an authentication method according to this application. The method includes all or some of the following steps.

S410: A first operator network device performs authentication on whether a first user is trustworthy, to obtain a first authentication result.

Specifically, the first user is a user who sends a message to the first operator network device by using a first terminal device. For example, the first user is a user of the first terminal device (for example, a smartphone), and the first terminal device may send a message to the first operator network device.

The first operator network device includes an operator network device that provides a service for the first user. For example, the first operator network device is an access network device configured by China Mobile, and the first user is a user who accesses a network of China Mobile. For another example, the first operator network device is an access network device configured by China Unicom, and the first user is a user who accesses a network of China Unicom.

For example, the first operator network device includes a CSCF network element. For example, the first operator network device may be an S-CSCF network element.

The operator network device in this embodiment of this application may be a network device configured by a trustworthy communication service provider, for example, may be a network device configured by China Mobile, may be a network device configured by China Unicom, may be a network device configured by China Telecom, or may be a network device configured by another trustworthy communication service provider.

It should be understood that a specific configuration of the operator network device is not limited in this embodiment of this application, and the operator network device may be any network device that is configured by the trustworthy communication service provider and that can provide a service for the mobile terminal. Examples are not enumerated for description herein.

In addition, the "user" in this embodiment of this application is a user of the terminal device, for example, may be a user of a smartphone or a user of another terminal device.

That an operator network device performs authentication on whether a user is trustworthy can be understood as follows: The operator network device determines whether a current user (that is, a subscriber) of the terminal device is the same as a card applicant of the terminal device. If the current user is the same as the card applicant, it indicates that the user is the card applicant, and the user is determined to be trustworthy. If the current user is not the same as the card applicant, it indicates that the user is not the card applicant, and the user is determined to be untrustworthy.

For example, when the terminal device is a smartphone, a card applicant of the terminal device is a subscriber of a phone number of the smartphone.

Specifically, the first operator network device can obtain the first authentication result by performing authentication on whether the first user is trustworthy. The first authentication result may be that the first user is trustworthy, or may be that the first user is untrustworthy.

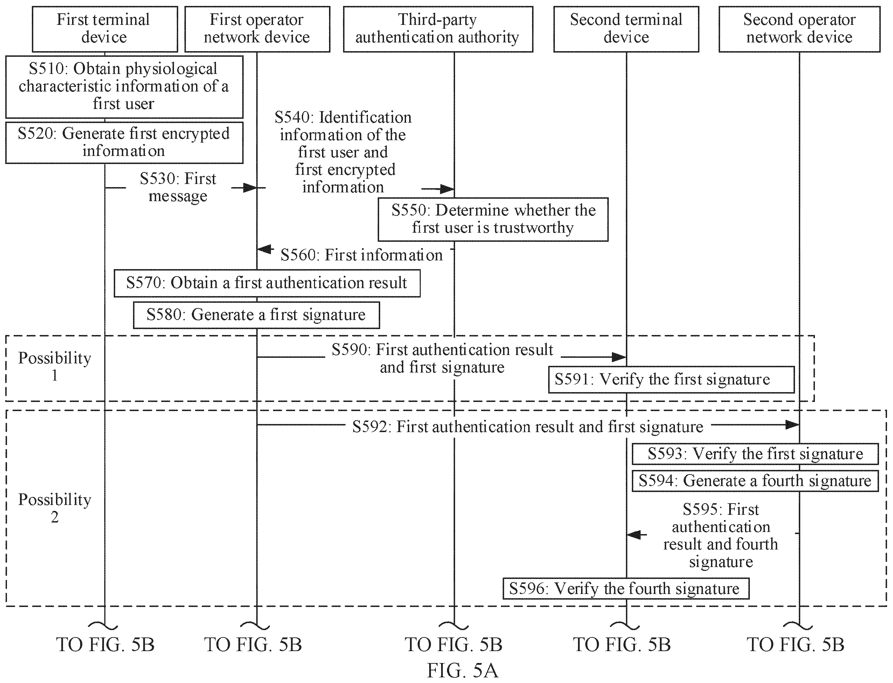

In this embodiment of this application, the first operator network device may perform, in a plurality of manners, authentication on whether the first user is trustworthy. The following details different authentication manners with reference to FIG. 5A to FIG. 9. Details are not described herein.

Further, after obtaining the first authentication result, the first operator network device needs to sign the first authentication result to generate a first signature. The method procedure shown in FIG. 4 further includes the following step.

S420: The first operator network device signs the first authentication result to generate the first signature.

For example, that the first operator network device signs the first authentication result includes the following content:

First, the first operator network device calculates a hash value for a to-be-sent message (the message includes the first authentication result and authentication time), to obtain a digest of the message.

Then, the first operator network device encrypts the digest by using a third private key stored in the first operator network device, to generate the first signature.

It should be understood that the foregoing manner in which the first operator network device signs the first authentication result to generate the first signature is merely an example, and does not constitute any limitation on the protection scope of this application. In this embodiment of this application, a specific implementation in which the first operator network device signs the first authentication result to generate the first signature is not limited. For details, refer to descriptions in an existing technology related to a signature technology. Details are not described in this application.

Further, the first operator network device sends the generated first signature and the to-be-sent message (including at least the first authentication result) to a receive end. The method procedure shown in FIG. 4 further includes the following step.

S430: The first operator network device sends the first authentication result and the first signature.

In a possible implementation, if a first operator and a second operator whose networks are respectively accessed by the first user and a second user are a same operator, the first operator network device sends the first authentication result and the first signature to a second terminal device used by the second user, where the first user needs to call the second user.

In another possible implementation, if a first operator and a second operator whose networks are respectively accessed by the first user and a second user are different operators, the first operator network device sends the first authentication result and the first signature to a second operator network device, where the first user needs to call the second user, and the second operator network device is an operator network device that provides a service for the second user.

It should be noted that, to ensure that both the first user and the second user who communicate with each other are trustworthy users, the first operator network device further needs to perform authentication on the second user. For two cases in which the first operator and the second operator are a same operator and the first operator and the second operator are different operators, the first operator network device performs authentication on the second user in different authentication manners, respectively. The following details different authentication manners with reference to FIG. 5A to FIG. 9. Details are not described herein first.

In this embodiment of this application, the first operator network device may perform, in the following several manners, authentication on whether the first user is reliable.

Manner 1: The first operator network device calls an authentication service of a third-party authentication authority to perform authentication on whether the first user is trustworthy, and the authentication service of the third-party authentication authority is used to perform authentication based on information collected by the first terminal device.

For ease of understanding, the following provides descriptions with reference to FIG. 5A to FIG. 5C. FIG. 5A to FIG. 5C are a schematic flowchart of an authentication manner according to an embodiment of this application. The authentication manner includes the following steps.

S510: The first terminal device obtains physiological characteristic information of the first user.

The terminal device in this embodiment of this application is a trustworthy terminal, that is, a terminal device that is produced by a trustworthy device manufacturer and that is authenticated by a trustworthy device authentication authority, for example, a smartphone or AR glasses. A specific production manner and authentication manner are not limited in this embodiment of this application. This embodiment of this application mainly relates to authentication on the user using the terminal device.

In this embodiment of this application, the physiological characteristic information of the first user indicates a physiological characteristic of the first user, including but not limited to:
fingerprint information of the first user, voice print information of the first user, facial information of the first user, iris information of the first user, and palm print information of the first user.

For example, that the first terminal device obtains physiological characteristic information of the first user may be as follows:
A fingerprint information collection module (for example, a fingerprint recognition module) of the first terminal device collects the fingerprint information of the first user.

For example, that the first terminal device obtains physiological characteristic information of the first user may be as follows:
A voice print information collection module (for example, a voice print recognition module) of the first terminal device collects the voice print information of the first user.

For example, that the first terminal device obtains physiological characteristic information of the first user may be as follows:
A facial information collection module (for example, a camera module) of the first terminal device collects the facial information of the first user.

For example, that the first terminal device obtains physiological characteristic information of the first user may be as follows:
An iris information collection module (for example, a camera module) of the first terminal device collects the iris information of the first user.

It should be understood that in this embodiment of this application, a specific technical means used by the first terminal device to obtain the physiological characteristic information of the first user is not limited, and may be an existing technical means or a future technical means.

Specifically, in this embodiment of this application, after obtaining the physiological characteristic information of the first user, the first terminal device needs to encrypt the physiological characteristic information of the first user to generate first encrypted information. The method procedure shown in FIG. 5A further includes the following step.

S520: The first terminal device encrypts the physiological characteristic information of the first user based on a first encryption method and a first public key, to generate the first encrypted information.

The first public key is a public key in a first public-private key pair determined by the third-party authentication authority, the first public-private key pair further includes a first private key, and the first private key is stored in the third-party authentication authority and is used to verify the first encrypted information.

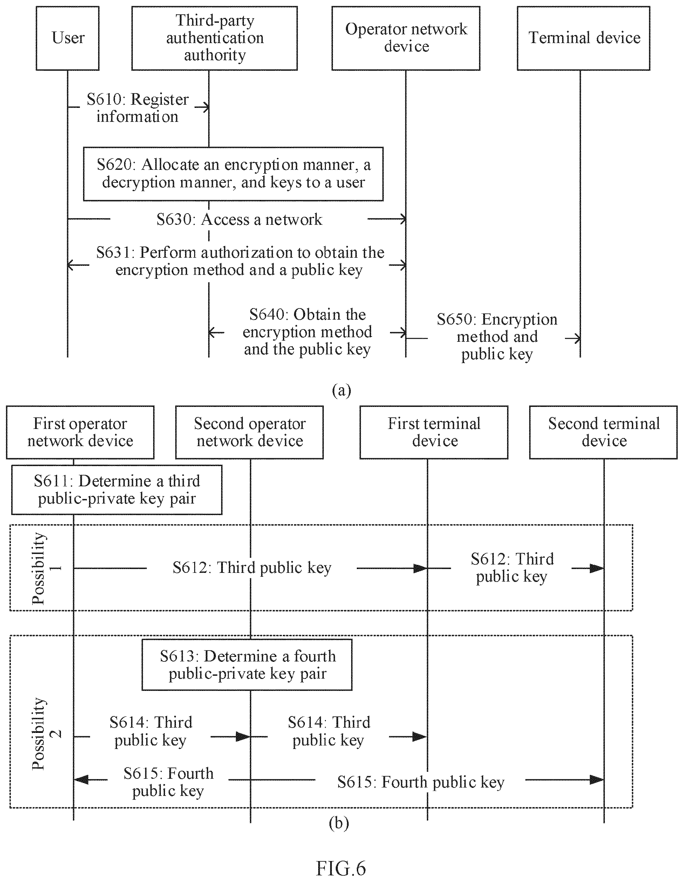

For ease of understanding, the following describes a key distribution process with reference to FIG. 6, and only key usage is described herein.

Further, the first terminal device needs to send the first encrypted information to the third-party authentication authority by using the first operator network device, and the third-party authentication authority performs authentication on whether the first user is trustworthy. The method procedure shown in FIG. 5A further includes the following step.

S530: The first terminal device sends a first message to the first operator network device, or the first operator network device receives the first message from the first terminal device.

Specifically, the first message includes the first encrypted information.

For example, the first message includes any one of a signaling message, video data, and audio data.

When the first message is the video data and/or the audio data, the first message may periodically carry the first encrypted information.

In the manner 1, after receiving the first encrypted information, the first operator network device does not need to process the first encrypted information but transparently transmits the first encrypted information to the third-party authentication authority, and the third-party authentication authority decrypts the first encrypted information. The method procedure shown in FIG. 5A further includes the following step.

S540: The first operator network device sends identification information of the first user and the first encrypted information to the third-party authentication authority, or the third-party authentication authority receives the identification information of the first user and the first encrypted information from the first operator network device.

The first encrypted information is used by the third-party authentication authority to perform authentication on whether the first user is trustworthy, and the identification information of the first user identifies the first user.

It should be understood that in this embodiment of this application, the third-party authentication authority manages the identification information of the first user and physiological characteristic information of the first user, and specifies the first public key and the first encryption method that are used for encrypting the physiological characteristic information of the first user, and the first private key used for decrypting the physiological characteristic information of the first user. The first public key is delivered to the first terminal device, and the first private key is stored in the third-party authentication authority.

It should be noted that, when the third-party authentication authority manages only related information of the first user (for example, the identification information of the first user and the physiological characteristic information of the first user), the identification information of the first user may not need to be sent to the third-party authentication authority. In other words, after receiving the first encrypted information, the third-party authentication authority can determine to use the first private key for decryption, without a need to first determine the first user by using the identification information of the first user and then determine the first private key specified for the first user.

The method procedure shown in FIG. 5A further includes the following step.

S550: The third-party authentication authority determines the first user based on the identification information of the first user, verifies the first encrypted information based on the first private key, and determines, based on the verification result, whether the first user is trustworthy.

In this embodiment of this application, how the third-party authentication authority decrypts the first encrypted information is not limited. For details, refer to descriptions of encryption and decryption in an existing public-private key pair technology.

Specifically, the third-party authentication authority decrypts the first encrypted information to obtain the physiological characteristic information of the first user, and compares the obtained physiological characteristic information with the physiological characteristic information of the first user that is locally managed by the third-party authentication authority. If a comparison result is "consistent", it indicates that the first user is trustworthy; otherwise, it indicates that the first user is untrustworthy.

Further, the third-party authentication authority needs to send the authentication result to the first operator network device. The method procedure shown in FIG. 5A further includes the following step.

S560: The third-party authentication authority sends first information to the first operator network device, or the first operator network device receives the first information from the third-party authentication authority.

The first information indicates whether the first user is trustworthy.

In the manner 1 shown in FIG. 5A to FIG. 5C, that a first operator network device performs authentication on whether a first user is trustworthy, to obtain a first authentication result in S410 can be understood as follows:
S570: The first operator network device performs, based on the first information, authentication on whether the first user is trustworthy, to obtain the first authentication result.

When the first information indicates that the first user is trustworthy, the first operator network device determines through authentication that the first user is trustworthy, and the first authentication result is that the first user is trustworthy; or when the first information indicates that the first user is untrustworthy, the first operator network device determines through authentication that the first user is untrustworthy, and the first authentication result is that the first user is untrustworthy.

S580: The first operator network device signs the first authentication result to generate a first signature.

For details, refer to the descriptions in S420. Details are not described herein again.

For two cases in which a first operator and a second operator are a same operator and a first operator and a second operator are different operators, a subsequent procedure includes the following two possibilities:

### Possibility 1:

When the first operator and the second operator are a same operator, the method procedure shown in FIG. 5A further includes the following steps.

S590: The first operator network device sends the first authentication result and the first signature to a second terminal device.

S591: The second terminal device verifies the first signature.

For example, a verification method includes: The second terminal device first decrypts a digest ciphertext by using a third public key, to obtain a digest #1; calculates a digest of a received message to obtain a digest #2; compares the digest #1 with the digest #2; and if the digest #1 is consistent with the digest #2, determines that a trusted endorsement of the first operator network device is trustworthy, and indicates that the first user is trustworthy in this case; or if the digest #1 is inconsistent with the digest #2, determines that a trusted endorsement of the first operator network device is untrustworthy, and indicates that the first user is untrustworthy in this case.

### Possibility 2:

When the first operator and the second operator are different operators, the method procedure shown in FIG. 5A further includes the following steps.

S592: The first operator network device sends the first authentication result and the first signature to a second operator network device.

S593: The second operator network device verifies the first signature.

For example, a verification method includes: The second operator network device first decrypts a digest ciphertext by using a third public key, to obtain a digest #1; calculates a digest of a received message to obtain a digest #2; compares the digest #1 with the digest #2; and if the digest #1 is consi stent with the digest #2, determines that a trusted endorsement of the first operator network device is trustworthy, and indicates that the first user is trustworthy in this case; or if the digest #1 is inconsistent with the digest #2, determines that a trusted endorsement of the first operator network device is untrustworthy, and indicates that the first user is untrustworthy in this case.

S594: The second operator network device signs the first authentication result to generate a fourth signature.

Specifically, the second operator network device signs the first authentication result based on a fourth private key to generate the fourth signature.

S595: The second operator network device sends the first authentication result and the fourth signature to a second terminal device.

S596: The second terminal device verifies the fourth signature.

For example, a verification method includes: The second terminal device first decrypts a digest ciphertext by using a fourth public key, to obtain a digest #1; calculates a digest of a received message to obtain a digest #2; compares the digest #1 with the digest #2; and if the digest #1 is consistent with the digest #2, determines that a trusted endorsement of the first operator network device is trustworthy, and indicates that the first user is trustworthy in this case; or if the digest #1 is inconsistent with the digest #2, determines that a trusted endorsement of the first operator network device is untrustworthy, and indicates that the first user is untrustworthy in this case.

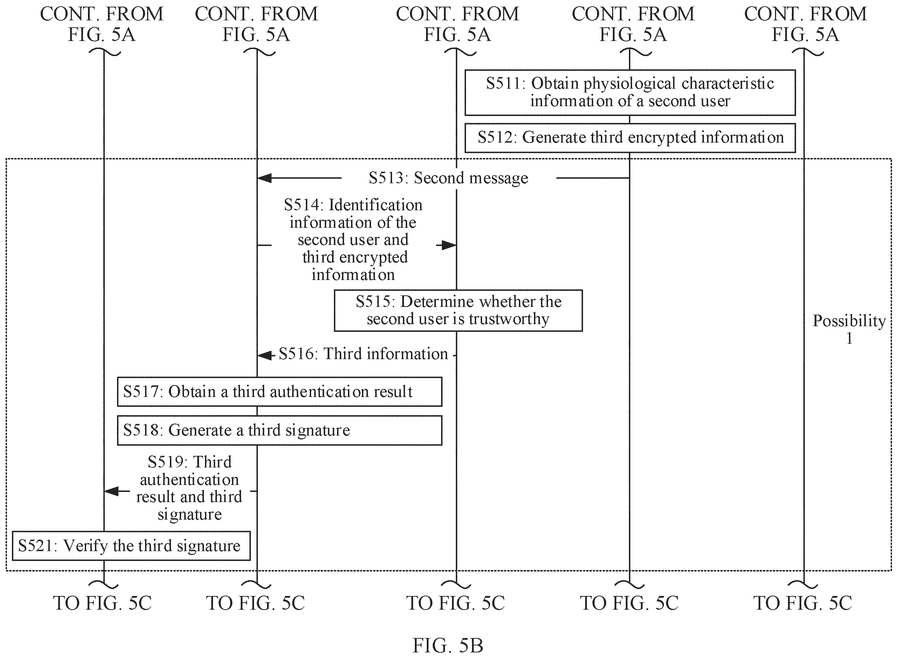

To ensure that both the first user and a second user who communicate with each other are trustworthy users, authentication further needs to be performed on the second user. The procedure shown in FIG. 5B further includes the following steps.

S511: The second terminal device obtains physiological characteristic information of the second user.

That the second terminal device obtains physiological characteristic information of the second user is similar to that a first terminal device obtains physiological characteristic information of a first user. For details, refer to the descriptions in S510. Details are not described herein again.

S512: The second terminal device encrypts the physiological characteristic information of the second user based on a third encryption method and a fifth public key, to generate third encrypted information.

The fifth public key is a public key in a fifth public-private key pair determined by the third-party authentication authority, the fifth public-private key pair further includes a fifth private key, the third encryption method and the fifth public key are used by the second terminal device to encrypt the physiological characteristic information of the second user to obtain the third encrypted information, and the fifth private key is stored in the third-party authentication authority and is used to verify the third encrypted information.

For the two cases in which the first operator and the second operator are a same operator and the first operator and the second operator are different operators, the following two possibilities are included:

### Possibility 1:

When the first operator and the second operator are a same operator, the method procedure shown in FIG. 5B further includes the following steps.

S513: The second terminal device sends a second message to the first operator network device, or the first operator network device receives the second message from the second terminal device.

Specifically, the second message includes the third encrypted information.

S514: The first operator network device sends identification information of the second user and the third encrypted information to the third-party authentication authority, or the third-party authentication authority receives the identification information of the second user and the third encrypted information from the first operator network device.

The third encrypted information is used by the third-party authentication authority to perform authentication on whether the second user is trustworthy, and the identification information of the second user identifies the second user.

For details, refer to the descriptions in S540. Details are not described herein again.

S515: The third-party authentication authority determines the second user based on the identification information of the second user, verifies the third encrypted information based on the fifth private key, and determines, based on the verification result, whether the second user is trustworthy.

A manner in which the third-party authentication authority performs authentication on the second user is similar to the manner in which the third-party authentication authority performs authentication on the first user. For details, refer to the descriptions in S550. Details are not described herein again.

S516: The third-party authentication authority sends third information to the first operator network device, or the first operator network device receives the third information from the third-party authentication authority.

The second information indicates whether the second user is trustworthy.

S517: The first operator network device performs, based on the third information, authentication on whether the second user is trustworthy, to obtain a third authentication result.

When the third information indicates that the second user is trustworthy, the first operator network device determines through authentication that the second user is trustworthy, and the third authentication result is that the second user is trustworthy; or when the third information indicates that the second user is untrustworthy, the first operator network device determines through authentication that the second user is untrustworthy, and the third authentication result is that the second user is untrustworthy.

S518: The first operator network device signs the third authentication result to generate a third signature.

For example, that the first operator network device signs the third authentication result includes the following content:

The first operator network device calculates a hash value for a to-be-sent message (the message includes the third authentication result and authentication time), to obtain a digest of the message.

The first operator network device encrypts the digest by using a third private key stored in the first operator network device, to generate the third signature.

S519: The first operator network device sends the third authentication result and the third signature to the first terminal device.

S521: The first terminal device verifies the third signature.

For example, a verification method includes: The first terminal device first decrypts a digest ciphertext by using the third public key, to obtain a digest #1; calculates a digest of a received message to obtain a digest #2; compares the digest #1 with the digest #2; and if the digest #1 is consistent with the digest #2, determines that a trusted endorsement of the first operator network device is trustworthy, and indicates that the second user is trustworthy in this case; or if the digest #1 is inconsistent with the digest #2, determines that a trusted endorsement of the first operator network device is untrustworthy, and indicates that the second user is untrustworthy in this case.

### Possibility 2:

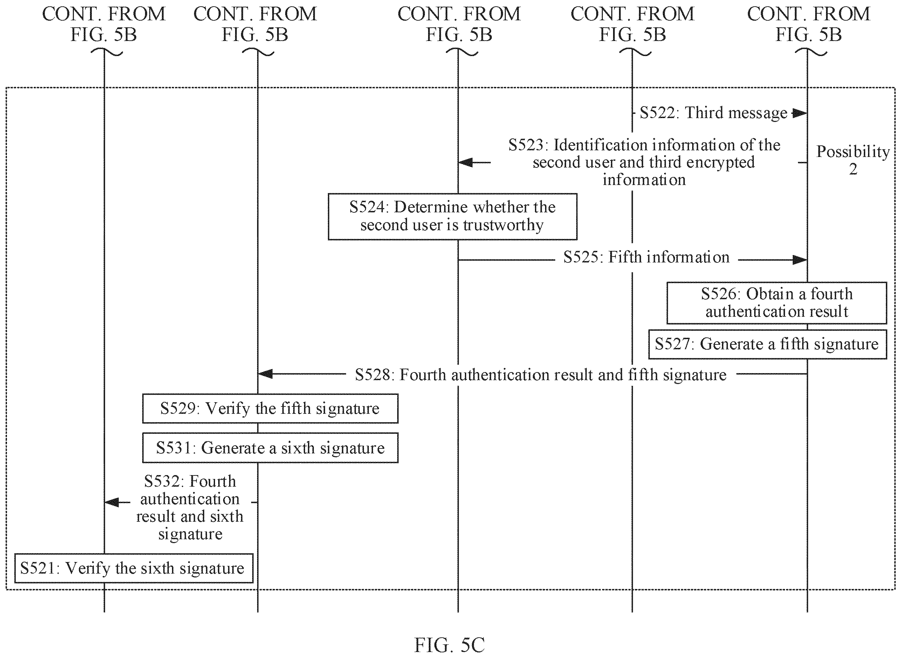

When the first operator and the second operator are different operators, the method procedure shown in FIG. 5C further includes the following steps.

S522: The second terminal device sends a third message to the second operator network device, or the second operator network device receives the third message from the second terminal device.

Specifically, the third message includes the third encrypted information.

S523: The second operator network device sends identification information of the second user and the third encrypted information to the third-party authentication authority, or the third-party authentication authority receives the identification information of the second user and the third encrypted information from the second operator network device.

The third encrypted information is used by the third-party authentication authority to perform authentication on whether the second user is trustworthy, and the identification information of the second user identifies the second user.

S524: The third-party authentication authority determines the second user based on the identification information of the second user, verifies the third encrypted information based on the fourth private key, and determines, based on the verification result, whether the second user is trustworthy.

A manner in which the third-party authentication authority performs authentication on the second user is similar to the manner in which the third-party authentication authority performs authentication on the first user. For details, refer to the descriptions in S550. Details are not described herein again.

S525: The third-party authentication authority sends fifth information to the second operator network device, or the second operator network device receives the fifth information from the third-party authentication authority.

The fifth information indicates whether the second user is trustworthy.

S526: The second operator network device performs, based on the fifth information, authentication on whether the second user is trustworthy, to obtain a fourth authentication result.

When the fifth information indicates that the second user is trustworthy, the second operator network device determines through authentication that the second user is trustworthy, and the fourth authentication result is that the second user is trustworthy; or when the fifth information indicates that the second user is untrustworthy, the second operator network device determines through authentication that the second user is untrustworthy, and the fourth authentication result is that the second user is untrustworthy.

S527: The second operator network device signs the fourth authentication result to generate a fifth signature.

For example, that the second operator network device signs the fourth authentication result includes the following content:
The second operator network device calculates a hash value for a to-be-sent message (the message includes the fourth authentication result and authentication time), to obtain a digest of the message.

The second operator network device encrypts the digest by using the fourth private key stored in the second operator network device, to generate the fifth signature.

S528: The second operator network device sends the fourth authentication result and the fifth signature to the first operator network device.

S529: The first operator network device verifies the fifth signature.

For example, a verification method includes: The first operator network device first decrypts a digest ciphertext by using the fourth public key, to obtain a digest #1; calculates a digest of a received message to obtain a digest #2; compares the digest #1 with the digest #2; and if the digest #1 is consistent with the digest #2, determines that a trusted endorsement of the second operator network device is trustworthy, and indicates that the second user is trustworthy in this case; or if the digest #1 is inconsistent with the digest #2, determines that a trusted endorsement of the second operator network device is untrustworthy, and indicates that the second user is untrustworthy in this case.

S531: The first operator network device signs the fourth authentication result to generate a sixth signature.

For example, that the first operator network device signs the fourth authentication result includes the following content:
First, the first operator network device calculates a hash value for a to-be-sent message (the message includes the fourth authentication result and authentication time), to obtain a digest of the message.

Then, the first operator network device encrypts the digest by using a third private key stored in the first operator network device, to generate the sixth signature.

S532: The first operator network device sends the fourth authentication result and the sixth signature to the first terminal device.

S533: The first terminal device verifies the sixth signature.

For example, a verification method includes: The first terminal device first decrypts a digest ciphertext by using the third public key, to obtain a digest #1; calculates a digest of a received message to obtain a digest #2; compares the digest #1 with the digest #2; and if the digest #1 is consistent with the digest #2, determines that a trusted endorsement of the first operator network device is trustworthy, and indicates that the second user is trustworthy in this case; or if the digest #1 is inconsistent with the digest #2, determines that a trusted endorsement of the first operator network device is untrustworthy, and indicates that the second user is untrustworthy in this case.

It can be learned from the procedure shown in FIG. 5A to FIG. 5C that, the authentication manner is feasible on a premise that the terminal device has learned the encryption method and the public key that are used for encrypting the physiological characteristic information of the user, and key exchange is performed between different operator network devices in a cross-operator case. The following describes the key distribution process with reference to (a) and (b) in FIG. 6 show key distribution procedures provided in this application.

It should be noted that in this embodiment of this application, the key distribution procedures may be completed before communication, or may be completed before keys need to be used. A time point for key distribution is not limited.

A key distribution procedure performed by a third-party authentication authority is shown in (a) in FIG. 6, and includes the following step.

S610: A user registers information with the third-party authentication authority.

The user may be the foregoing first user or second user, or another user.

For example, the first user registers identification information of the first user (or referred to as basic information of the first user, such as a name and an identity card number) and physiological characteristic information of the first user (such as a voice print, a fingerprint, a face, and an iris of the first user) with the third-party authentication authority.

For example, the second user registers identification information of the second user (or referred to as basic information of the second user, such as a name and an identity card number) and physiological characteristic information of the second user (such as a voice print, a fingerprint, a face, and an iris of the second user) with the third-party authentication authority.

It should be understood that in this embodiment of this application, information that may be used as basic information of a user is not limited. The foregoing name, identity card number, and the like are merely examples, and do not constitute any limitation on the protection scope of this application. For example, the basic information of the user may be alternatively information such as an address, a place of work, a birthday, and a registered residence.

Likewise, in this embodiment of this application, information that may be used as physiological characteristic information of a user is not limited. The foregoing voice print, fingerprint, face, iris, and the like are merely examples, and do not constitute any limitation on the protection scope of this application. For example, the physiological characteristic information of the user may be alternatively a palm print.

Further, after receiving the registration information of the user, the third-party authentication authority may allocate an encryption manner, a decryption manner, and keys (including a private key and a public key) of the physiological characteristic information of the user to the user. The method procedure shown in FIG. 5A to FIG. 5C further includes the following steps.

S620: The third-party authentication authority allocates the encryption manner, the decryption manner, and the keys to the user.

For example, the third-party authentication authority manages the basic information and the physiological characteristic information of the first user, and specifies, for the first user, an encryption manner, a decryption manner, and keys (including a first private key and a first public key) of the physiological characteristic information that are needed during user identity authentication.

A first operator network device needs to write the first public key into a first terminal device used by the first user, and the first private key is stored in the third-party authentication authority.

For example, the third-party authentication authority manages the basic information and the physiological characteristic information of the second user, and specifies, for the second user, an encryption manner, a decryption manner, and keys (including a fifth private key and a fifth public key) of the physiological characteristic information that are needed during user identity authentication.

The first operator network device or a second operator network device needs to write the fifth public key into a second terminal device used by the second user, and the fifth private key is stored in the third-party authentication authority.

In this embodiment of this application, a specific representation form of the third-party authentication authority is not limited. The third-party authentication authority may be any third-party authentication authority that can perform authentication on a user identity, for example, may be a public security bureau, or may be an archive storage facility.

In addition, a manner in which the third-party authentication authority allocates the encryption method and the keys to the user is not limited in this embodiment of this application. For details, refer to descriptions in an existing related technology. For example, documents about encryption and public-private key pairs in existing cryptography record how to encrypt and decrypt information and how to distribute keys. This is not limited in this embodiment of this application.

It should be understood that in this application, the third-party authentication authority may manage information for one or more users and allocate an encryption manner, a decryption manner, and keys to the one or more users. For processing manners for other users, refer to the processing manner for the first user. Details are not described herein again.

S630: The user accesses a network of an operator to which an operator network device belongs.

It can be understood that a premise that the user is served by the operator network device is: The user has applied for a card to the operator to which the operator network device belongs and has accessed the network of the operator.

Specifically, that the user accesses a network of an operator to which an operator network device belongs can be understood as follows: The user registers the basic information of the user with the operator and uses the network managed by the operator.

It should be understood that, how the user accesses the network is not limited in this embodiment of this application. For details, refer to descriptions in an existing related technology.

In this embodiment of this application, the user authorizes the operator network device to obtain the encryption method and the public key that are needed during user identity authentication. The method procedure shown in (a) in FIG. 6 further includes the following step.

S631: The user authorizes the operator network device to obtain the encryption method and the public key.

For example, if the user is a new user, an authorization manner may be that the user performs authorization when accessing the network. For example, when the user accesses the network, the operator queries whether the user authorizes the operator network device to obtain the encryption method and the public key, and the user may choose to perform authorization.

For example, if the user is a regular user, an authorization manner may be that the user authorizes, at a time point before the user calls another user, the operator network device to obtain the encryption method and the public key.

Specifically, the operator network device may obtain the encryption method and the public key from the third-party authentication authority based on the authorization from the user. The method procedure shown in (a) in FIG. 6 further includes the following step.

S640: The operator network device obtains the encryption method and the public key from the third-party authentication authority.

To deliver the obtained encryption method and the obtained public key by the operator network device to a terminal device, the method procedure shown in FIG. 6 further includes the following step.

S650: The operator network device sends the encryption method and the public key to the terminal device.

It can be learned from the procedure shown in (a) in FIG. 6 that the terminal device can obtain the encryption method and the public key that are used for encrypting the physiological characteristic information of the user.

The operator network device may locally allocate a public-private key pair for a trusted endorsement. The public key is sent to the terminal device managed by the operator network device, and to an operator network device that manages a terminal device called by the terminal device managed by the operator network device. The private key is stored in the operator network device. The following describes key distribution performed by the operator network device with reference to (b) in FIG. 6.

The key distribution procedure performed by the operator network device is shown in (b) in FIG. 6, and includes the following step.

S611: The first operator network device determines a third public-private key pair.

The third public-private key pair includes a third public key and a third private key. The third private key is stored in the first operator network device.

For two cases in which a first operator and a second operator are a same operator and a first operator and a second operator are different operators, keys of the first operator network device include the following two possibilities:

### Possibility 1:

When the first operator and the second operator are a same operator, the method procedure shown in (b) in FIG. 6 further includes the following step.

S612: The first operator network device sends the third public key to both the first terminal device and the second terminal device.

### Possibility 2:

When the first operator and the second operator are different operators, the method procedure shown in (b) in FIG. 6 further includes the following step.

S613: The second operator network device determines a fourth public-private key pair.

The fourth public-private key pair includes a fourth public key and a fourth private key. The fourth private key is stored in the second operator network device.

S614: The first operator network device sends the third public key to both the first terminal device and the second operator network device.

S615: The second operator network device sends the fourth public key to both the second terminal device and the first operator network device.

Manner 2: The first operator network device calls an authentication service of a third-party authentication authority to perform authentication on whether the first user is trustworthy, and the authentication service of the third-party authentication authority is used to perform authentication based on information collected by the first operator network device.

For ease of understanding, the following provides descriptions with reference to FIG. 7A to FIG. 7C. FIG. 7A to FIG. 7C are a schematic flowchart of another authentication manner according to an embodiment of this application. The authentication manner includes the following steps.

S710: The first operator network device obtains physiological characteristic information of the first user.

The physiological characteristic information of the first user includes voice print information of the first user and/or facial information of the first user.

For example, that the first operator network device obtains physiological characteristic information of the first user may be as follows:
A voice print information collection module (for example, a voice print recognition module) of the first operator network device collects the voice print information of the first user in a call process.

For example, that the first operator network device obtains physiological characteristic information of the first user may be as follows:
A facial information collection module (for example, a camera module) of the first operator network device collects the facial information of the first user in a call process.

In this embodiment, a specific manner in which the first operator network device obtains the physiological characteristic information of the first user is not limited.

S720: The first operator network device encrypts the physiological characteristic information of the first user based on a second encryption method and a second public key, to generate second encrypted information.

The second public key is a public key in a second public-private key pair determined by the third-party authentication authority and the first operator network device through negotiation, the second public-private key pair further includes a second private key, the second encryption method is determined by the first operator network device and the third-party authentication authority through negotiation, and the second private key is used to verify the second encrypted information.

Alternatively, the second public-private key pair is determined by the third-party authentication authority, and then is delivered to the first operator network device. A method for determining the second public-private key pair by the third-party authentication authority is similar to the method for determining the first public-private key pair by the third-party authentication authority in the manner 1. Details are not described herein again.

S730: The first operator network device sends identification information of the first user and the second encrypted information to the third-party authentication authority, or the third-party authentication authority receives the identification information of the first user and the second encrypted information from the first operator network device.

The second encrypted information is used by the third-party authentication authority to perform authentication on whether the first user is trustworthy, and the identification information of the first user identifies the first user.

S740: The third-party authentication authority determines the first user based on the identification information of the first user, verifies the second encrypted information based on the second private key, and determines, based on the verification result, whether the first user is trustworthy.

In this embodiment of this application, how the third-party authentication authority decrypts the second encrypted information is not limited. For details, refer to descriptions of encryption and decryption in an existing public-private key pair technology.

Specifically, the third-party authentication authority decrypts the second encrypted information to obtain the physiological characteristic information of the first user, and compares the obtained physiological characteristic information with physiological characteristic information of the first user that is locally managed by the third-party authentication authority. If a comparison result is "consistent", it indicates that the first user is trustworthy; otherwise, it indicates that the first user is untrustworthy.

Further, the third-party authentication authority needs to send the authentication result to the first operator network device. The method procedure shown in FIG. 7A further includes the following step.

S750: The third-party authentication authority sends second information to the first operator network device, or the first operator network device receives the second information from the third-party authentication authority.

The second information indicates whether the first user is trustworthy.

In the manner 2 shown in FIG. 7A to FIG. 7C, that a first operator network device performs authentication on whether a first user is trustworthy, to obtain a first authentication result in S410 can be understood as follows:
S760: The first operator network device performs, based on the second information, authentication on whether the first user is trustworthy, to obtain the first authentication result.

When the second information indicates that the first user is trustworthy, the first operator network device determines through authentication that the first user is trustworthy, and the first authentication result is that the first user is trustworthy; or when the second information indicates that the first user is untrustworthy, the first operator network device determines through authentication that the first user is untrustworthy, and the first authentication result is that the first user is untrustworthy.

S770: The first operator network device signs the first authentication result to generate a first signature.

For details, refer to the descriptions in S420. Details are not described herein again.

For two cases in which a first operator and a second operator are a same operator and a first operator and a second operator are different operators, a subsequent procedure includes the following two possibilities:

### Possibility 1:

When the first operator and the second operator are a same operator, the method procedure shown in FIG. 7A further includes the following steps.

S780: The first operator network device sends the first authentication result and the first signature to a second terminal device.

S781: The second terminal device verifies the first signature.

For details, refer to the descriptions in S591. Details are not described herein again.

### Possibility 2:

When the first operator and the second operator are different operators, the method procedure shown in FIG. 7A further includes the following steps.

S782: The first operator network device sends the first authentication result and the first signature to a second operator network device.

S783: The second operator network device verifies the first signature.

For details, refer to the descriptions in S593. Details are not described herein again.

S784: The second operator network device signs the first authentication result to generate a fourth signature.

For details, refer to the descriptions in S594. Details are not described herein again.

S785: The second operator network device sends the first authentication result and the fourth signature to a second terminal device.

S786: The second terminal device verifies the fourth signature.

For details, refer to the descriptions in S596. Details are not described herein again.

To ensure that both the first user and a second user who communicate with each other are trustworthy users, authentication further needs to be performed on the second user. For the two cases in which the first operator and the second operator are a same operator and the first operator and the second operator are different operators, the following two possibilities are included:

### Possibility 1:

When the first operator and the second operator are a same operator, the method procedure shown in FIG. 7B further includes the following steps.

S711: The first operator network device obtains physiological characteristic information of the second user.

The physiological characteristic information of the second user includes voice print information of the second user and/or facial information of the second user.

For example, that the first operator network device obtains physiological characteristic information of the second user may be as follows:
A voice print information collection module (for example, a voice print recognition module) of the first operator network device collects the voice print information of the second user in a call process.

For example, that the first operator network device obtains physiological characteristic information of the second user may be as follows:
A facial information collection module (for example, a camera module) of the first operator network device collects the facial information of the second user in a call process.

In this embodiment, a specific manner in which the first operator network device obtains the physiological characteristic information of the second user is not limited.

S712: The first operator network device encrypts the physiological characteristic information of the second user based on a fourth encryption method and a sixth public key, to generate fourth encrypted information.

The sixth public key is a public key in a sixth public-private key pair determined by the third-party authentication authority and the first operator network device through negotiation, the sixth public-private key pair further includes a sixth private key, the fourth encryption method is determined by the first operator network device and the third-party authentication authority through negotiation, and the sixth private key is used to verify the fourth encrypted information.

Alternatively, the sixth public-private key pair is determined by the third-party authentication authority, and then is delivered to the first operator network device. A method for determining the sixth public-private key pair by the third-party authentication authority is similar to the method for determining the fifth public-private key pair by the third-party authentication authority in the manner 1. Details are not described herein again.

S713: The first operator network device sends identification information of the second user and the fourth encrypted information to the third-party authentication authority, or the third-party authentication authority receives the identification information of the second user and the fourth encrypted information from the first operator network device.

The fourth encrypted information is used by the third-party authentication authority to perform authentication on whether the first user is trustworthy, and the identification information of the first user identifies the first user.

S714: The third-party authentication authority determines the second user based on the identification information of the second user, verifies the fourth encrypted information based on the sixth private key, and determines, based on the verification result, whether the second user is trustworthy.

In this embodiment of this application, how the third-party authentication authority decrypts the fourth encrypted information is not limited. For details, refer to descriptions of encryption and decryption in the existing public-private key pair technology.

Specifically, the third-party authentication authority decrypts the fourth encrypted information to obtain the physiological characteristic information of the second user, and compares the obtained physiological characteristic information with physiological characteristic information of the second user that is locally managed by the third-party authentication authority. If a comparison result is "consistent", it indicates that the second user is trustworthy; otherwise, it indicates that the second user is untrustworthy.

Further, the third-party authentication authority needs to send the authentication result to the first operator network device. The method procedure shown in FIG. 7B further includes the following step.

S715: The third-party authentication authority sends fourth information to the first operator network device, or the first operator network device receives the fourth information from the third-party authentication authority.

The fourth information indicates whether the first user is trustworthy.

S716: The first operator network device performs, based on the fourth information, authentication on whether the second user is trustworthy, to obtain a third authentication result.

When the fourth information indicates that the second user is trustworthy, the first operator network device determines through authentication that the second user is trustworthy, and the third authentication result is that the second user is trustworthy; or when the fourth information indicates that the second user is untrustworthy, the first operator network device determines through authentication that the second user is untrustworthy, and the third authentication result is that the second user is untrustworthy.

S717: The first operator network device signs the third authentication result to generate a third signature.

For details, refer to the descriptions in S518. Details are not described herein again.

S718: The first operator network device sends the third authentication result and the third signature to a first terminal device.

S719: The first terminal device verifies the third signature.

For details, refer to the descriptions in S521. Details are not described herein again.

### Possibility 2:

When the first operator and the second operator are different operators, the method procedure shown in FIG. 7C further includes the following steps.

S721: The second operator network device obtains physiological characteristic information of the second user.

The physiological characteristic information of the second user includes voice print information of the second user and/or facial information of the second user.

For example, that the second operator network device obtains physiological characteristic information of the second user may be as follows:
A voice print information collection module (for example, a voice print recognition module) of the second operator network device collects the voice print information of the second user in a call process.

For example, that the second operator network device obtains physiological characteristic information of the second user may be as follows:
A facial information collection module (for example, a camera module) of the second operator network device collects the facial information of the second user in a call process.

In this embodiment, a specific manner in which the second operator network device obtains the physiological characteristic information of the second user is not limited.

S722: The second operator network device encrypts the physiological characteristic information of the second user based on a fifth encryption method and a seventh public key, to generate fifth encrypted information.

The seventh public key is a public key in a seventh public-private key pair determined by the third-party authentication authority and the second operator network device through negotiation, the seventh public-private key pair further includes a seventh private key, the fifth encryption method is determined by the first operator network device and the third-party authentication authority through negotiation, and the seventh private key is used to verify the fifth encrypted information.

Alternatively, the seventh public-private key pair is determined by the third-party authentication authority, and then is delivered to the second operator network device. A method for determining the seventh public-private key pair by the third-party authentication authority is similar to the method for determining the fifth public-private key pair by the third-party authentication authority in the manner 1. Details are not described herein again.

S723: The second operator network device sends identification information of the second user and the fifth encrypted information to the third-party authentication authority, or the third-party authentication authority receives the identification information of the second user and the fifth encrypted information from the second operator network device.

The fifth encrypted information is used by the third-party authentication authority to perform authentication on whether the first user is trustworthy, and the identification information of the first user identifies the first user.

S724: The third-party authentication authority determines the second user based on the identification information of the second user, verifies the fifth encrypted information based on the seventh private key, and determines, based on the verification result, whether the second user is trustworthy.

In this embodiment of this application, how the third-party authentication authority decrypts the fifth encrypted information is not limited. For details, refer to descriptions of encryption and decryption in the existing public-private key pair technology.

Specifically, the third-party authentication authority decrypts the fifth encrypted information to obtain the physiological characteristic information of the second user, and compares the obtained physiological characteristic information with physiological characteristic information of the second user that is locally managed by the third-party authentication authority. If a comparison result is "consistent", it indicates that the second user is trustworthy; otherwise, it indicates that the second user is untrustworthy.

Further, the third-party authentication authority needs to send the authentication result to the first operator network device. The method procedure shown in FIG. 7C further includes the following step.

S725: The third-party authentication authority sends sixth information to the first operator network device, or the first operator network device receives the sixth information from the third-party authentication authority.

The sixth information indicates whether the first user is trustworthy.

S726: The second operator network device performs, based on the sixth information, authentication on whether the second user is trustworthy, to obtain a fourth authentication result.

When the sixth information indicates that the second user is trustworthy, the first operator network device determines through authentication that the second user is trustworthy, and the fourth authentication result is that the second user is trustworthy; or when the sixth information indicates that the second user is untrustworthy, the first operator network device determines through authentication that the second user is untrustworthy, and the fourth authentication result is that the second user is untrustworthy.

S727: The second operator network device signs the fourth authentication result to generate a fifth signature.

For details, refer to the descriptions in S527. Details are not described herein again.

S728: The second operator network device sends the fourth authentication result and the fifth signature to the first operator network device.

S729: The first operator network device verifies the fifth signature.

For details, refer to the descriptions in S529. Details are not described herein again.

S731: The first operator network device generates a sixth signature.

For details, refer to the descriptions in S531. Details are not described herein again.

S732: The first operator network device sends the fourth authentication result and the sixth signature to a first terminal device.

For details, refer to the descriptions in S532. Details are not described herein again.

S733: The first terminal device verifies the sixth signature.

For details, refer to the descriptions in S533. Details are not described herein again.

The manner 2 shown in FIG. 7A to FIG. 7C is different from the manner 1 shown in FIG. 5A to FIG. 5C in that, the operator network device obtains the physiological characteristic information of the user, and the encryption method and the public key that are used for encrypting the physiological characteristic information of the user do not need to be distributed to the terminal device. In the manner 2, the terminal device does not need to participate in authentication. This simplifies an operation performed by the terminal device.

Manner 3: The terminal device performs trusted authentication on the user and reports an authentication result to an operator, and the operator verifies the authentication result of the trustworthy terminal.

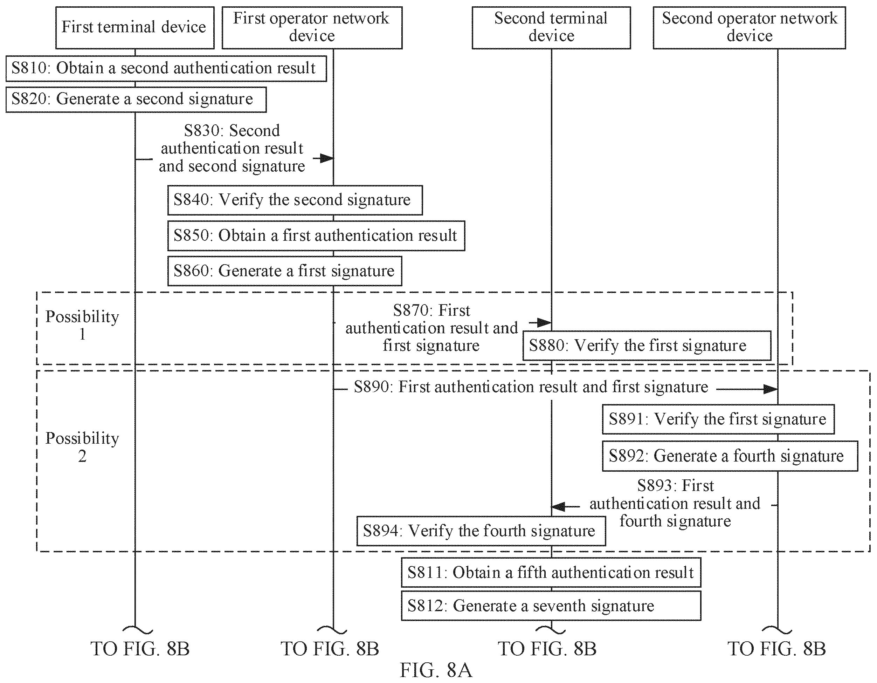

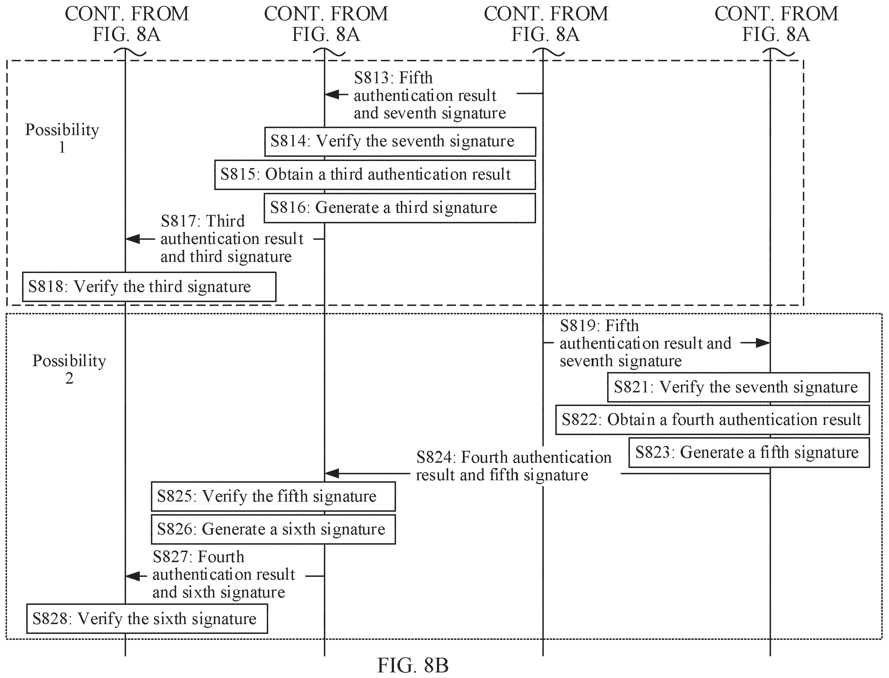

For ease of understanding, the following provides descriptions with reference to FIG. 8A and FIG. 8B. FIG. 8A and FIG. 8B are a schematic flowchart of still another authentication manner according to an embodiment of this application. The authentication manner includes the following steps.

S810: The first terminal device performs authentication on the first user to obtain a second authentication result.

In this embodiment of this application, how the first terminal device performs authentication on the first user is not limited. For example, the first terminal device may determine whether the first user can unlock the first terminal device, and if the first user can unlock the first terminal device, consider that the first user is trustworthy; otherwise, consider that the first user is untrustworthy.

In this embodiment, after obtaining the second authentication result, the first terminal device signs the second authentication result. The method procedure shown in FIG. 8A further includes the following step.

S820: The first terminal device signs the second authentication result to generate a second signature.

Specifically, the first terminal device signs the second authentication result based on a private key of a first SIM card to generate the second signature.

For example, a signature method includes: calculating a digest (also referred to as a hash value) of a to-be-sent message (including the authentication result and authentication time), encrypting the digest by using the private key of the first SIM card, and finally sending an encrypted digest and the to-be-sent message (including the authentication result and the authentication time) to a first operator network device together.

Further, the first terminal device needs to send the second authentication result and the second signature to the first operator network device. The method procedure shown in FIG. 8A further includes the following step.

S830: The first terminal device sends the second authentication result and the second signature to the first operator network device, or the first operator network device receives the second authentication result and the second signature from the first terminal device.

The second authentication result is determined by the first terminal device and is used to indicate whether the first user is trustworthy, and the second signature is used to verify the second authentication result.

Further, the first operator network device verifies the received second authentication result. The method procedure shown in FIG. 8A further includes the following step.

S840: The first operator network device verifies the second signature.

In the manner 3 shown in FIG. 8A and FIG. 8B, that a first operator network device performs authentication on whether a first user is trustworthy, to obtain a first authentication result in S410 can be understood as follows:

S850: When the verification on the second signature succeeds, the first operator network device performs, based on the second authentication result, authentication on whether the first user is trustworthy, to obtain the first authentication result.

When the second authentication result indicates that the first user is trustworthy, the first operator network device determines through authentication that the first user is trustworthy, and the first authentication result is that the first user is trustworthy; or when the second authentication result indicates that the first user is untrustworthy, the first operator network device determines through authentication that the first user is untrustworthy, and the first authentication result is that the first user is untrustworthy.

S860: The first operator network device signs the first authentication result to generate a first signature.

For details, refer to the descriptions in S420. Details are not described herein again.

For two cases in which a first operator and a second operator are a same operator and a first operator and a second operator are different operators, a subsequent procedure includes the following two possibilities:

### Possibility 1:

When the first operator and the second operator are a same operator, the method procedure shown in FIG. 8A further includes the following steps.

S870: The first operator network device sends the first authentication result and the first signature to a second terminal device.

S880: The second terminal device verifies the first signature.

For details, refer to the descriptions in S591. Details are not described herein again.

### Possibility 2:

When the first operator and the second operator are different operators, the method procedure shown in FIG. 8A further includes the following steps.

S890: The first operator network device sends the first authentication result and the first signature to a second operator network device.

S891: The second operator network device verifies the first signature.

For details, refer to the descriptions in S593. Details are not described herein again.

S892: The second operator network device signs the first authentication result to generate a fourth signature.

For details, refer to the descriptions in S594. Details are not described herein again.

S893: The second operator network device sends the first authentication result and the fourth signature to a second terminal device.

S894: The second terminal device verifies the fourth signature.

For details, refer to the descriptions in S596. Details are not described herein again.

To ensure that both the first user and a second user who communicate with each other are trustworthy users, authentication further needs to be performed on the second user. The procedure shown in FIG. 8A further includes the following step.

S811: The second terminal device performs authentication on the second user to obtain a fifth authentication result.

In this embodiment of this application, how the second terminal device performs authentication on the second user is not limited. For example, the second terminal device may determine whether the second user can unlock the second terminal device, and if the second user can unlock the second terminal device, consider that the second user is trustworthy; otherwise, consider that the second user is untrustworthy.

In this embodiment, after obtaining the fifth authentication result, the second terminal device signs the fifth authentication result. The method procedure shown in FIG. 8A further includes the following step.

S812: The second terminal device signs the fifth authentication result to generate a seventh signature.

Specifically, the second terminal device signs the fifth authentication result based on a private key of a second SIM card to generate the seventh signature.

For example, a signature method includes: calculating a digest (also referred to as a hash value) of a to-be-sent message (including the fifth authentication result and authentication time), encrypting the digest by using the private key of the second SIM card, and finally sending an encrypted digest and the to-be-sent message (including the authentication result and the authentication time) to the first operator network device together or the second operator network device.

For the two cases in which the first operator and the second operator are a same operator and the first operator and the second operator are different operators, a subsequent procedure includes the following two possibilities:

### Possibility 1:

When the first operator and the second operator are a same operator, the method procedure shown in FIG. 8B further includes the following step.

S813: The second terminal device sends the fifth authentication result and the seventh signature to the first operator network device, or the first operator network device receives the fifth authentication result and the seventh signature from the second terminal device.

The fifth authentication result is determined by the second terminal device and is used to indicate whether the second user is trustworthy, and the seventh signature is used to verify the fifth authentication result.

Further, the first operator network device verifies the received fifth authentication result. The method procedure shown in FIG. 8B further includes the following steps.

S814: The first operator network device verifies the seventh signature.

S815: When the verification on the seventh signature succeeds, the first operator network device performs, based on the fifth authentication result, authentication on whether the second user is trustworthy, to obtain a third authentication result.

When the fifth authentication result indicates that the second user is trustworthy, the first operator network device determines through authentication that the second user is trustworthy, and the third authentication result is that the second user is trustworthy; or when the fifth authentication result indicates that the second user is untrustworthy, the first operator network device determines through authentication that the second user is untrustworthy, and the third authentication result is that the second user is untrustworthy.

S816: The first operator network device signs the third authentication result to generate a third signature.

For details, refer to the descriptions in S518. Details are not described herein again.

S817: The first operator network device sends the third authentication result and the third signature to the first terminal device.

S818: The first terminal device verifies the third signature.

For details, refer to the descriptions in S521. Details are not described herein again.

### Possibility 2:

When the first operator and the second operator are different operators, the method procedure shown in FIG. 8B further includes the following step.

S819: The second terminal device sends the fifth authentication result and the seventh signature to the second operator network device, or the second operator network device receives the fifth authentication result and the seventh signature from the second terminal device.

The fifth authentication result is determined by the second terminal device and is used to indicate whether the second user is trustworthy, and the seventh signature is used to verify the fifth authentication result.

Further, the second operator network device verifies the received fifth authentication result. The method procedure shown in FIG. 8B further includes the following steps.

S821: The second operator network device verifies the seventh signature.

S822: When the verification on the seventh signature succeeds, the second operator network device performs, based on the fifth authentication result, authentication on whether the second user is trustworthy, to obtain a fourth authentication result.

When the fifth authentication result indicates that the second user is trustworthy, the second operator network device determines through authentication that the second user is trustworthy, and the fourth authentication result is that the second user is trustworthy; or when the fifth authentication result indicates that the second user is untrustworthy, the second operator network device determines through authentication that the second user is untrustworthy, and the fourth authentication result is that the second user is untrustworthy.

S823: The second operator network device signs the fourth authentication result to generate a fifth signature.

For details, refer to the descriptions in S525. Details are not described herein again.

S824: The second operator network device sends the fourth authentication result and the fifth signature to the first operator network device.

S825: The first operator network device verifies the fifth signature.

For details, refer to the descriptions in S529. Details are not described herein again.

S826: The first operator network device generates a sixth signature.

For details, refer to the descriptions in S531. Details are not described herein again.

S827: The first operator network device sends the fourth authentication result and the sixth signature to the first terminal device.

For details, refer to the descriptions in S532. Details are not described herein again.

S828: The first terminal device verifies the sixth signature.

For details, refer to the descriptions in S533. Details are not described herein again.

Manner 4: When the first user is a calling user, the first operator network device determines, through situational awareness (that is, analyzing a call behavior of the calling user in a recent period of time), whether the calling user is trustworthy.

For ease of understanding, the following provides descriptions with reference to FIG. 9. FIG. 9 is a schematic flowchart of yet another authentication manner according to an embodiment of this application. The authentication manner includes the following steps.

S910: The first operator network device obtains historical call data of the first user.

In this embodiment of this application, how the first operator network device obtains the historical call data of the first user is not limited. For example, the first operator network device may obtain the historical call data of the first user by using a historical call data storage unit.

The historical call data of the first user is used to indicate a call habit of the first user, and includes at least one of the following:
distribution data of time points at which the first user initiates calls, frequency data of a second user answering calls when the first user initiates the calls, ringing duration data of a second terminal device when the first user initiates the calls, call duration distribution data of the first user, distribution data of geographical locations at which the first user initiates the calls, a proportion of the second user called for the first time, and home location distribution data of the second user.

S920: The first operator network device determines, based on a preset policy and the historical call data of the first user, whether a call initiated by the first user is trustworthy.

For example, the preset policy may be that time points at which the first user initiates the calls are from 8:00 a.m. to 6:00 p.m., and if the historical call data of the first user complies with the preset policy, it is determined that the first user is trustworthy; otherwise, it is determined that the first user is untrustworthy.

For example, the preset policy may be that a frequency at which the second user answers calls when the first user initiates the calls is not less than 50%, and if the historical call data of the first user complies with the preset policy, it is determined that the calls are trustworthy; otherwise, it is determined that the calls are untrustworthy.

In the manner 4 shown in FIG. 9, that a first operator network device performs authentication on whether a first user is trustworthy, to obtain a first authentication result in S410 can be understood as follows:

S930: The first operator network device performs authentication on whether the first user is trustworthy based on whether the call is trustworthy, to obtain the first authentication result.

When the call is trustworthy, the first operator network device determines through authentication that the first user is trustworthy, and the first authentication result is that the first user is trustworthy; or when the call is untrustworthy, the first operator network device determines through authentication that the first user is untrustworthy, and the first authentication result is that the first user is untrustworthy.

S940: The first operator network device signs the first authentication result to generate a first signature.

For details, refer to the descriptions in S420. Details are not described herein again.

For two cases in which a first operator and a second operator are a same operator and a first operator and a second operator are different operators, a subsequent procedure includes the following two possibilities:

### Possibility 1:

When the first operator and the second operator are a same operator, the method procedure shown in FIG. 9A and FIG. 9B further includes the following steps.

S950: The first operator network device sends the first authentication result and the first signature to the second terminal device.

S960: The second terminal device verifies the first signature.

For details, refer to the descriptions in S591. Details are not described herein again.

### Possibility 2:

When the first operator and the second operator are different operators, the method procedure shown in FIG. 9A and FIG. 9B further includes the following steps.

S970: The first operator network device sends the first authentication result and the first signature to a second operator network device.

S981: The second operator network device verifies the first signature.

For details, refer to the descriptions in S593. Details are not described herein again.

S990: The second operator network device signs the first authentication result to generate a fourth signature.

For details, refer to the descriptions in S594. Details are not described herein again.

S991: The second operator network device sends the first authentication result and the fourth signature to the second terminal device.

S992: The second terminal device verifies the fourth signature.

For details, refer to the descriptions in S596. Details are not described herein again.

When the second user is a calling user, authentication may be performed on the second user in the foregoing manner. The authentication manner is similar to that described above. Details are not described herein again.

For ease of understanding, with reference to several specific examples in which the first user is a calling user, the second user is a called user, and the first operator and the second operator are a same operator, the following briefly describes how to apply the authentication method provided in this application to trustworthy communication.

In correspondence to the foregoing authentication manner 1, a manner of performing trustworthy communication is detailed with reference to FIG. 10.

FIG. 10 is a schematic flowchart of a call procedure according to an embodiment of this application. The call procedure includes the following steps.

S1010: The first user sends a first session initiation protocol invite (session initiation protocol invite, SIP invite) message to a first operator network device by using a first terminal device.

The first SIP invite message (a specific implementation of the foregoing first message) includes an encrypted physiological characteristic parameter (the foregoing first encrypted information) of the first user. An encryption method and a key (the foregoing first encryption method and first public key) that are used for encrypting the physiological characteristic parameter are specified and allocated by a third-party authentication authority.

S1011: The first operator network device sends a first request message to the third-party authentication authority.

The first operator network device receives the first SIP invite message, finds basic information of the first user, and calls an open interface of the third-party authentication authority to perform authentication on a calling party (transmits the basic information of the first user and the encrypted physiological characteristic parameter of the first user to the third-party authentication authority).

The first request message includes identification information of the first user and the first encrypted information.

S1012: The third-party authentication authority performs authentication on the first user.

Specifically, the third-party authentication authority decrypts the first encrypted information based on a first private key to obtain the physiological characteristic information of the first user, and compares the obtained physiological characteristic information with physiological characteristic information of the first user that is locally managed by the third-party authentication authority. If a comparison result is "consistent", it indicates that the first user is trustworthy; otherwise, it indicates that the first user is untrustworthy.

The first private key and the first public key are keys included in a first public-private key pair that is specified by the third-party authentication authority for the physiological characteristic parameter of the first user, the first public key is used to encrypt the physiological characteristic parameter of the first user, and the first private key is used to decrypt the physiological characteristic parameter of the first user.

S1013: The third-party authentication authority sends a first response message to the first operator network device.

The third-party authentication authority feeds back an authentication result to the first operator network device. The first response message includes first information, and the first information indicates whether the first user is trustworthy. For example, the first user is trustworthy and is authenticated.

S1014: The first operator network device performs authentication on the first user based on the first information, to obtain a first authentication result.

When the first information indicates that the first user is trustworthy, the first operator network device determines through authentication that the first user is trustworthy, and the first authentication result is that the first user is trustworthy; or when the first information indicates that the first user is untrustworthy, the first operator network device determines through authentication that the first user is untrustworthy, and the first authentication result is that the first user is untrustworthy.

S1015: The first operator network device performs trusted endorsement signature on the first authentication result to generate a first signature.

The first operator network device first calculates a digest (also referred to as a hash value) of a second SIP invite message (the second SIP invite message includes the first authentication result), and then encrypts the digest by using a third private key, to obtain the first signature.

The third private key is a key that is determined by the first operator network device and that is used to encrypt the first authentication result. Specifically, the third private key is a private key in a third public-private key pair, and the third public-private key pair further includes a third public key. The third public key is sent to terminal devices (for example, the first terminal device and a second terminal device) served by the first operator network device, and is used by the terminal devices to verify the signature received from the first operator network device.

Finally, the first operator network device needs to forward the second SIP invite message together with the first signature to the second terminal device (a terminal device used by a called party). The method procedure shown in FIG. 10 further includes the following step.

S1016: The first operator network device sends the second SIP invite message and the first signature to the second terminal device.

The second SIP invite message includes the first authentication result.

It should be noted that before sending the second SIP invite message and the first signature to the second terminal device, the first operator network device needs to address the second user.

A specific addressing manner is not limited in this embodiment of this application. For details, refer to descriptions in an existing related technology. For example, it is determined, based on a destination address in the received first SIP invite message, that the second SIP invite message needs to be sent to the second terminal device.

After receiving the second SIP invite message and the first signature, the second terminal device verifies the trusted endorsement signature of the first operator network device. The method procedure shown in FIG. 10 further includes the following steps.

S1017: The second terminal device verifies the first signature.

For example, a verification method is specifically: The second terminal device first decrypts a digest ciphertext by using the third public key, to obtain a digest #1; calculates a digest of the second SIP invite message to obtain a digest #2; compares the digest #1 with the digest #2; and if the digest #1 is consistent with the digest #2, determines that a trusted endorsement of the first operator network device is trustworthy, and informs the second user that the call is trustworthy in this case; or if the digest #1 is inconsistent with the digest #2, determines that a trusted endorsement of the first operator network device is untrustworthy, and informs the second user that the call is untrustworthy in this case.

S1018: The second terminal device sends an SIP 180 ring message to the first terminal device by using the first operator network device, where the SIP 180 ring message indicates that the second terminal device rings.

For example, before the call initiated by the first user is answered, a prompt tone is received by the first terminal device.

When determining that the call is trustworthy, the second terminal device sends an SIP 200 OK message to the first terminal device by using the first operator network device, to indicate that the first terminal device can initiate the call.

S1019: The second user sends a first SIP 200 OK message to the first operator network device by using the second terminal device.

The first SIP 200 OK message (a specific implementation of the foregoing second message) includes an encrypted physiological characteristic parameter (the foregoing third encrypted information) of the second user. An encryption method and a key (the foregoing third encryption method and fourth public key) that are used for encrypting the physiological characteristic parameter are specified and allocated by the third-party authentication authority.

S1020: The first operator network device sends a second request message to the third-party authentication authority.

The first operator network device receives the first SIP 200 OK message, finds basic information of the second user, and calls the open interface of the third-party authentication authority to perform authentication on the called party (transmits the basic information of the second user and the encrypted physiological characteristic parameter of the second user to the third-party authentication authority).

The second request message includes identification information of the second user and the third encrypted information.

S1021: The third-party authentication authority performs authentication on the second user.

Specifically, the third-party authentication authority decrypts the third encrypted information based on a fourth private key to obtain the physiological characteristic information of the second user, and compares the obtained physiological characteristic information with physiological characteristic information of the second user that is locally managed by the third-party authentication authority. If a comparison result is "consistent", it indicates that the second user is trustworthy; otherwise, it indicates that the second user is untrustworthy.

The fourth private key and the fourth public key are keys included in a fourth public-private key pair that is specified by the third-party authentication authority for the physiological characteristic parameter of the second user, the fourth public key is used to encrypt the physiological characteristic parameter of the second user, and the fourth private key is used to decrypt the physiological characteristic parameter of the second user.

S1022: The third-party authentication authority sends a second response message to the first operator network device.

The third-party authentication authority feeds back an authentication result to the first operator network device. The second response message includes third information, and the third information indicates whether the second user is trustworthy. For example, the second user is trustworthy and is authenticated.

S1023: The first operator network device performs authentication on the second user based on the third information, to obtain a third authentication result.

When the third information indicates that the second user is trustworthy, the first operator network device determines through authentication that the second user is trustworthy, and the third authentication result is that the second user is trustworthy; or when the third information indicates that the second user is untrustworthy, the first operator network device determines through authentication that the second user is untrustworthy, and the third authentication result is that the second user is untrustworthy.

S1024: The first operator network device performs trusted endorsement signature on the third authentication result to generate a third signature.

The first operator network device first calculates a digest (also referred to as a hash value) of a second SIP 200 OK message (the second SIP 200 OK message includes the third authentication result), and then encrypts the digest by using the third private key, to obtain the third signature.

The third private key is a key that is determined by the first operator network device and that is used to encrypt the third authentication result. Specifically, the third private key is the private key in the third public-private key pair, and the third public-private key pair further includes the third public key. The third public key is sent to the terminal devices (for example, the first terminal device and the second terminal device) served by the first operator network device, and is used by the terminal devices to verify the signature received from the first operator network device.

Finally, the first operator network device needs to forward the second SIP 200 OK message together with the third signature to the first terminal device (the terminal device used by the calling party). The method procedure shown in FIG. 10 further includes the following step.

S1025: The first operator network device sends the second SIP 200 OK message and the third signature to the first terminal device.

The second SIP 200 OK message includes the third authentication result.

After receiving the second SIP 200 OK message and the third signature, the first terminal device verifies the trusted endorsement signature of the first operator network device. The method procedure shown in FIG. 10 further includes the following step.

S1026: The first terminal device verifies the third signature.

For example, a verification method is specifically: The first terminal device first decrypts a digest ciphertext by using the third public key, to obtain a digest #1; calculates a digest of the second SIP 200 OK message to obtain a digest #2; compares the digest #1 with the digest #2; and if the digest #1 is consistent with the digest #2, determines that a trusted endorsement of the first operator network device is trustworthy, and informs the first user that the call is trustworthy in this case; or if the digest #1 is inconsistent with the digest #2, determines that a trusted endorsement of the first operator network device is untrustworthy, and informs the first user that the call is untrustworthy in this case.

When determining that the call is trustworthy, the first user may initiate the call to the second user by using the first operator network device. The method procedure shown in FIG. 10 further includes the following step.

S1027: The first terminal device sends audio/video data to the second terminal device by using the first operator network device.

Optionally, to monitor in real time whether communication is trustworthy, the audio/video data may periodically carry the encrypted physiological characteristic parameter of the first user of the calling party (the foregoing first encrypted information). The encryption method and the key (the foregoing first encryption method and first public key) that are used for encrypting the physiological characteristic parameter are specified and allocated by the third-party authentication authority.

When the first operator network device receives the audio/video data of the calling party, if the data carries the encrypted physiological characteristic parameter of the first user, trusted authentication may be performed on an identity of the calling party by using the foregoing method. Details are not described herein again.

After receiving the audio/video data and the trusted endorsement signature of the first operator network device, a trustworthy terminal used by the second user, namely, the second terminal device, verifies the trusted endorsement signature of the first operator network device. After the verification succeeds, the trustworthy terminal informs the second user that call content is trustworthy.

Likewise, when sending audio/video data of the called party to the second user, the second terminal device may also periodically carry the encrypted physiological characteristic parameter of the second user, for example, a fingerprint, a face, or an iris. The encryption method and the key that are used for encrypting the physiological characteristic parameter are specified and allocated by the third-party authentication authority.

When the first operator network device receives the audio/video data of the called party, if the data carries the encrypted physiological characteristic parameter of the second user, trusted authentication may be performed on an identity of the called party by using the foregoing method. Details are not described herein again.

After receiving the audio/video data and the trusted endorsement signature of the first operator network device, a trustworthy terminal used by the first user, namely, the first terminal device, verifies the trusted endorsement signature of the first operator network device. After the verification succeeds, the trustworthy terminal informs the first user that call content is trustworthy.

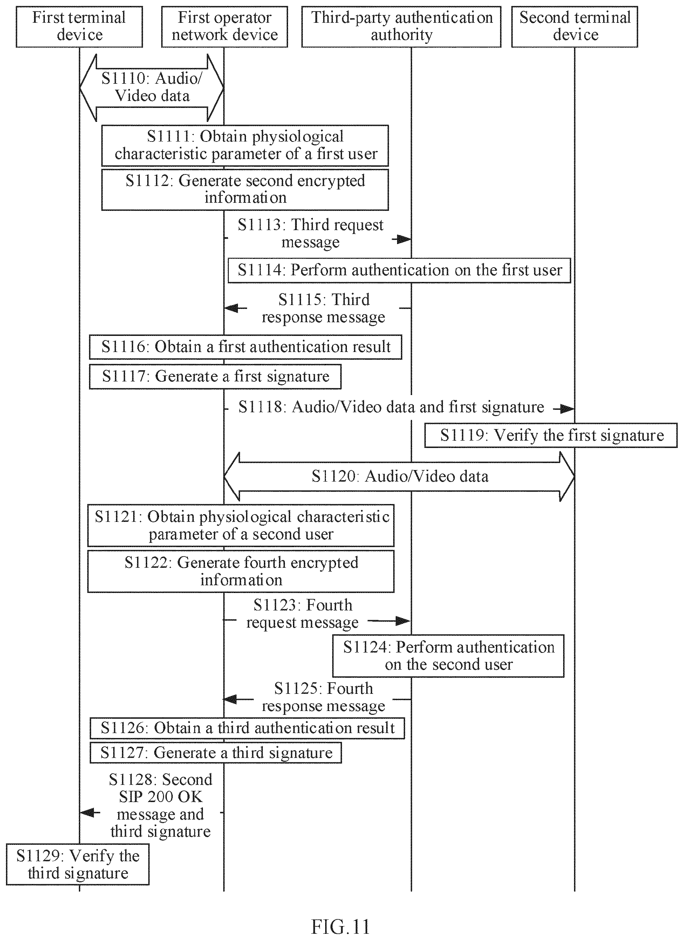

In correspondence to the foregoing authentication manner 2, a manner of performing trustworthy communication is detailed with reference to FIG. 11.

FIG. 11 is a schematic flowchart of another call procedure according to an embodiment of this application. The call procedure includes the following steps.

S1110: A first terminal device sends audio/video data to a second terminal device by using a first operator network device.

S1111: The first operator network device obtains physiological characteristic parameter of the first user from the audio/video data.

S1112: The first operator network device encrypts the physiological characteristic information of the first user based on a second encryption method and a second public key, to generate second encrypted information.

The second public key is a public key in a second public-private key pair determined by the third-party authentication authority and the first operator network device, the second public-private key pair further includes a second private key, the second encryption method is determined by the first operator network device and the third-party authentication authority, and the second private key is used to verify the second encrypted information.

S1113: The first operator network device sends a third request message to the third-party authentication authority.

The first operator network device receives the audio/video data sent by a calling party, finds basic information of the first user, and calls an open interface of the third-party authentication authority to perform authentication on the calling party (transmits the basic information of the first user and the encrypted physiological characteristic parameter of the first user to the third-party authentication authority).

The third request message includes identification information of the first user and the second encrypted information.

S1114: The third-party authentication authority performs authentication on the first user.

Specifically, the third-party authentication authority decrypts the second encrypted information based on the second private key to obtain the physiological characteristic information of the first user, and compares the obtained physiological characteristic information with physiological characteristic information of the first user that is locally managed by the third-party authentication authority. If a comparison result is "consistent", it indicates that the first user is trustworthy; otherwise, it indicates that the first user is untrustworthy.

S1115: The third-party authentication authority sends a third response message to the first operator network device.

The third-party authentication authority feeds back an authentication result to the first operator network device. The third response message includes second information, and the second information indicates whether the first user is trustworthy. For example, the first user is trustworthy and is authenticated.

S1116: The first operator network device performs authentication on the first user based on the second information, to obtain a first authentication result.

For details, refer to the descriptions in S760. Details are not described herein again.

S1117: The first operator network device performs trusted endorsement signature on the first authentication result to generate a first signature.

For details, refer to the descriptions in S770. Details are not described herein again.

S1118: The first operator network device sends the audio/video data and the first signature to the second terminal device.

For details, refer to the descriptions in S780. Details are not described herein again.

S1119: The second terminal device verifies the first signature.

For details, refer to the descriptions in S781. Details are not described herein again.

S1120: The second user sends audio/video data to the first operator network device by using the second terminal device.

S1121: The first operator network device obtains physiological characteristic parameter of the second user from the audio/video data.

S1122: The first operator network device encrypts the physiological characteristic information of the second user based on a fourth encryption method and a sixth public key, to generate fourth encrypted information.

The sixth public key is a public key in a sixth public-private key pair determined by the third-party authentication authority and the first operator network device, the sixth public-private key pair further includes a sixth private key, the fourth encryption method is known to the first operator network device and the third-party authentication authority, and the sixth private key is used to verify the fourth encrypted information.

S1123: The first operator network device sends a fourth request message to the third-party authentication authority.

The first operator network device receives the audio/video data sent by a called party, finds basic information of the second user, and calls an open interface of the third-party authentication authority to perform authentication on the called party (transmits the basic information of the second user and the encrypted physiological characteristic parameter of the second user to the third-party authentication authority).

The fourth request message includes identification information of the second user and the fourth encrypted information.

S1124: The third-party authentication authority performs authentication on the second user.

Specifically, the third-party authentication authority decrypts the fourth encrypted information based on a fifth private key to obtain the physiological characteristic information of the second user, and compares the obtained physiological characteristic information with physiological characteristic information of the second user that is locally managed by the third-party authentication authority. If a comparison result is "consistent", it indicates that the second user is trustworthy; otherwise, it indicates that the second user is untrustworthy.

S1125: The third-party authentication authority sends a fourth response message to the first operator network device.

The third-party authentication authority feeds back an authentication result to the first operator network device. The fourth response message includes fourth information, and the fourth information indicates whether the first user is trustworthy. For example, the first user is trustworthy and is authenticated.

S1126: The first operator network device performs authentication on the second user based on the fourth information, to obtain a third authentication result.

For details, refer to the descriptions in S1023. Details are not described herein again.

S1127: The first operator network device performs trusted endorsement signature on the third authentication result to generate a third signature.

For details, refer to the descriptions in S1024. Details are not described herein again.

S1128: The first operator network device sends the audio/video data and the third signature to the first terminal device.

For details, refer to the descriptions in S1025. Details are not described herein again.

S1129: The first terminal device verifies the third signature.

For details, refer to the descriptions in S1026. Details are not described herein again.

In comparison with the call procedure shown in FIG. 10, in the call procedure shown in FIG. 11, the first operator network device also calls an authentication service of the third-party authentication authority to perform authentication on the users. However, the call procedure shown in FIG. 11 is different from that shown in FIG. 10 as follows:
(1) The physiological characteristic parameters of the users are extracted by the first operator network device in a user call process, and do not need to be additionally collected by the terminal devices.
(2) Because the physiological characteristic parameters of the users are extracted after the call is answered, authentication is performed after the call is answered. In contrast, authentication in the call procedure shown in FIG. 11 can be performed before or after the call is answered.

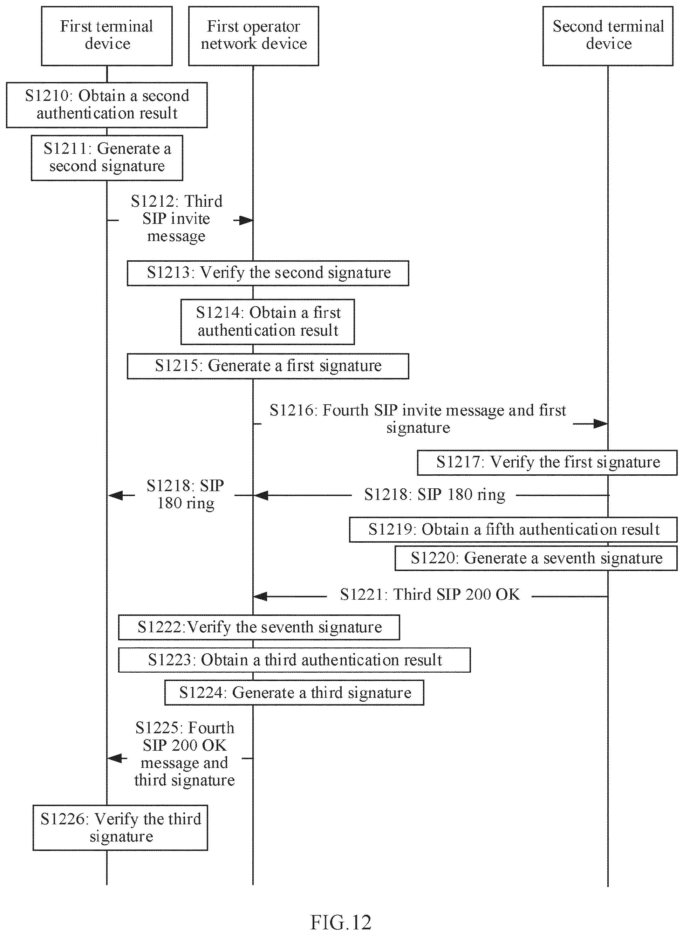

In correspondence to the foregoing authentication manner 3, a manner of performing trustworthy communication is detailed with reference to FIG. 12.

FIG. 12 is a schematic flowchart of still another call procedure according to an embodiment of this application. The call procedure includes the following steps.

S1210: A first terminal device performs authentication on whether the first user is trustworthy, to obtain a second authentication result.

For details, refer to the descriptions in S810. Details are not described herein again.

S1211: The first terminal device signs the second authentication result to generate a second signature.

For details, refer to the descriptions in S820. Details are not described herein again.

S1212: The first terminal device sends a third SIP invite message to a first operator network device.

The third SIP invite message carries the second authentication result and the second signature.

S1213: The first operator network device verifies the second signature.

For details, refer to the descriptions in S840. Details are not described herein again.

S1214: The first operator network device performs, based on a verification result, authentication on whether the first user is trustworthy, to obtain a first authentication result.

For details, refer to the descriptions in S850. Details are not described herein again.

S1215: The first operator network device performs trusted endorsement signature on the first authentication result to generate a first signature.

For details, refer to the descriptions in S860. Details are not described herein again.

S1216: The first operator network device sends a fourth SIP invite message and the first signature to a second terminal device.

For details, refer to the descriptions in S870. Details are not described herein again.

S1217: The second terminal device verifies the first signature.

For details, refer to the descriptions in S880. Details are not described herein again.

S1218: The second terminal device sends an SIP 180 ring message to the first terminal device by using the first operator network device, where the SIP 180 ring message indicates that the second terminal device rings.

For details, refer to the descriptions in S1018. Details are not described herein again.

S1219: The second terminal device performs authentication on whether the second user is trustworthy, to obtain a fifth authentication result.

For details, refer to the descriptions in S811. Details are not described herein again.

S1220: The second terminal device signs the fifth authentication result to generate a seventh signature.

For details, refer to the descriptions in S812. Details are not described herein again.

S1221: The second user sends a third SIP 200 OK message to the first operator network device by using the second terminal device.

The third SIP 200 OK message carries the fifth authentication result and the seventh signature.

S1222: The first operator network device verifies the seventh signature.

For details, refer to the descriptions in S814. Details are not described herein again.

S1223: The first operator network device performs, based on a verification result, authentication on whether the second user is trustworthy, to obtain a third authentication result.

For details, refer to the descriptions in S815. Details are not described herein again.

S1224: The first operator network device performs trusted endorsement signature on the third authentication result to generate a third signature.

For details, refer to the descriptions in S816. Details are not described herein again.

S1225: The first operator network device sends a fourth SIP 200 OK message and the third signature to the first terminal device.

For details, refer to the descriptions in S1025. Details are not described herein again.

S1226: The first terminal device verifies the third signature.

For details, refer to the descriptions in S818. Details are not described herein again.

When determining that the call is trustworthy, the first user may initiate the call to the second user by using the first operator network device. The method procedure shown in FIG. 12 further includes the following content:

Optionally, to monitor in real time whether communication is trustworthy, the first terminal device may periodically perform, before sending audio/video data, authentication on whether the first user is trustworthy, and send the authentication results, the signatures, and the audio/video data together to the operator. For specific authentication processes and signature methods, refer to the foregoing trusted authentication on the identity of the calling party. Details are not described herein again.

After receiving the audio/video data and the trusted endorsement signature of the first operator network device, a trustworthy terminal used by the second user, namely, the second terminal device, verifies the trusted endorsement signature of the first operator network device. After the verification succeeds, the trustworthy terminal informs the second user that call content is trustworthy.

Likewise, the second terminal device may also periodically perform, before sending audio/video data of a called party to the second user, authentication on whether the second user is trustworthy, and send the authentication results, the signatures, and the audio/video data to the operator. For specific authentication processes and signature methods, refer to the foregoing trusted authentication on the identity of the called party. Details are not described herein again.

After receiving the audio/video data and the trusted endorsement signature of the first operator network device, a trustworthy terminal used by the first user, namely, the first terminal device, verifies the trusted endorsement signature of the first operator network device. After the verification succeeds, the trustworthy terminal informs the first user that call content is trustworthy.

The manner 4 is different from the manner 1 to the manner 3 in that authentication is performed on the calling party, and is not described herein with reference to a specific embodiment. For the implementation, refer to FIG. 9.

Sequence numbers of the processes do not mean execution sequences in the foregoing method embodiment. The execution sequences of the processes should be determined based on functions and internal logic of the processes, and should not be construed as any limitation on the implementation processes of embodiments of this application. In addition, it is possible that not all operations in the foregoing method embodiment need to be performed.

It should be understood that in the foregoing method embodiment, the terminal devices and/or the operator network devices may perform some or all of the steps in embodiments. These steps or operations are merely examples. Other operations or variations of various operations may be further performed in embodiments of this application.

It can be understood that in the foregoing method embodiment, the method implemented by the operator network device may be alternatively implemented by a component (for example, a chip or a circuit) that can be used for the operator network device, and the method implemented by the terminal device may be alternatively implemented by a component that can be used for the terminal device.

It should also be understood that in embodiments of this application, unless otherwise stated or there is a logical conflict, terms and/or descriptions between different embodiments may be consistent and may be mutually referenced, and technical features in different embodiments can be combined into a new embodiment based on an inner logical relationship between the technical features.

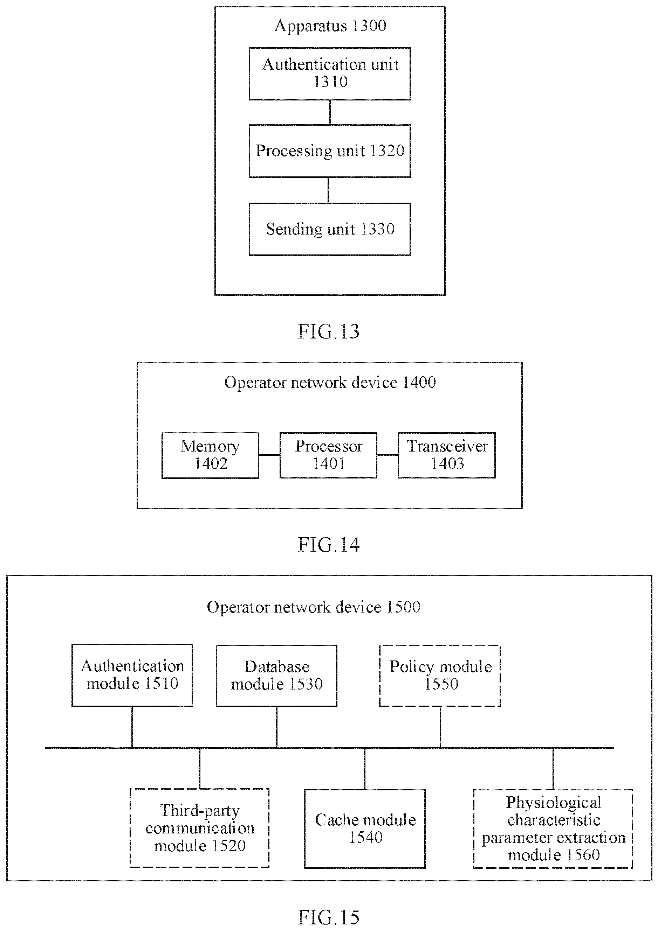

The foregoing details the authentication method in embodiments of this application with reference to FIG. 4 to FIG. 12. The following details authentication apparatuses provided in embodiments of this application with reference to FIG. 13 to FIG. 18.

FIG. 13 is a schematic diagram of an authentication apparatus 1300 according to this application. As shown in FIG. 13, the apparatus 1300 includes an authentication unit 1310, a processing unit 1320, and a sending unit 1330.

The authentication unit 1310 is configured to perform authentication on whether a user is trustworthy, to obtain an authentication result, where the user is a user who sends a message to the apparatus by using a first terminal device.

The processing unit 1320 is configured to sign the authentication result.

The sending unit 1330 is configured to send the authentication result and the signature.

The apparatus 1300 is corresponding to the operator network device in the method embodiment. The apparatus 1300 may be the operator network device in the method embodiment, or a chip or a functional module in the operator network device in the method embodiment. The corresponding units in the apparatus 1300 are configured to perform corresponding steps performed by the operator network device in the method embodiment shown in FIG. 4 to FIG. 12.

The authentication unit 1310 in the apparatus 1300 performs the authentication step performed by the operator network device in the method embodiment. The processing unit 1320 in the apparatus 1300 is configured to perform the corresponding processing-related step performed by the operator network device in the method embodiment. The sending unit 1330 in the apparatus 1300 is configured to perform the sending step performed by the operator network device.

The processing unit 1320 may be at least one processor. The sending unit 1330 may be a transmitter or an interface circuit.

Optionally, the apparatus 1300 may further include a storage unit. The storage unit is configured to store data and/or signaling. The authentication unit 1310, the processing unit 1320, and the sending unit 1330 may interact with or may be coupled to the storage unit, for example, read or invoke the data and/or signaling in the storage unit, so that the method in the foregoing embodiment is performed.

The foregoing units may exist independently, or all or some of the foregoing units may be integrated.

FIG. 14 is a schematic diagram of a structure of an operator network device 1400 to which an embodiment of this application is applicable. The operator network device 1400 may be configured to implement functions of the foregoing operator network device.

The operator network device 1400 includes a processor 1401, a memory 1402, and a transceiver 1403. The memory 1402 stores instructions or a program. The processor 1401 and the transceiver 1403 are configured to execute or invoke the instructions or the program stored in the memory 1402, so that the operator network device 1400 implements the functions of the operator network device in the foregoing authentication method. When the instructions or the program stored in the memory 1402 is executed, the transceiver 1403 may be configured to perform the operation performed by the sending unit 1330 in the embodiment shown in FIG. 13, and the processor 1402 may be configured to perform the operation performed by the processing unit 1320 in the embodiment shown in FIG. 13.

A person skilled in the art can understand that, for ease of description, FIG. 14 shows only one memory and one processor. Actual operator network device may include a plurality of processors and memories. The memory may also be referred to as a storage medium, a storage device, or the like. This is not limited in this embodiment of this application.

FIG. 15 is a schematic diagram of a structure of an operator network device 1500 to which an embodiment of this application is applicable. The operator network device 1500 may be configured to implement functions of the foregoing operator network device.

The operator network device 1500 includes but is not limited to the following modules:
an authentication module 1510, a third-party communication module 1520, a database module 1530, a cache module 1540, a policy module 1550, and a physiological characteristic parameter extraction module 1560.
(1) The authentication module 1510 is configured for scheduling, control, execution, and the like in a trusted authentication process.
(2) The third-party communication module 1520 is configured to communicate with a third-party authentication authority with respect to the foregoing authentication manner 1 and manner 2.
(3) The database module 1530 is configured to store information such as a call behavior (for example, a call location) of a calling user, basic information of users, and public keys matching user identity certificates.
(4) The cache module 1540 is configured to perform high-speed access and temporary storage, and may be configured to improve authentication performance. The cache module can temporarily store information such as the call behavior (such as call location) of the user, the basic information of the users, and the public key matching the user identity certificates.
(5) The policy module 1550 is configured to determine whether the call behavior of the user is normal and trustworthy with respect to the foregoing authentication manner 4.
(6) The physiological characteristic parameter extraction module 1560 is configured to extract a physiological characteristic parameter with respect to the foregoing authentication manner 2.

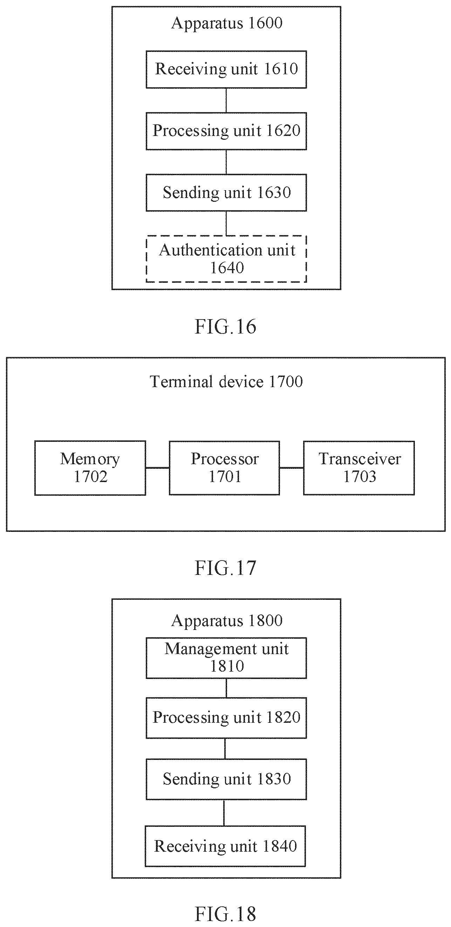

FIG. 16 is a schematic diagram of an authentication apparatus 1600 according to this application. As shown in FIG. 16, the apparatus 1600 includes a receiving unit 1610, a processing unit 1620, and a sending unit 1630.

The receiving unit 1610 is configured to receive an encryption method and a public key from an operator network device.

The processing unit 1620 is configured to encrypt physiological characteristic information of a user based on the encryption method and the public key, to generate encrypted information, where the physiological characteristic information of the user includes at least one of the following: fingerprint information of the user, voice print information of the user, facial information of the user, iris information of the user, and palm print information of the user.

The sending unit 1630 is configured to send encrypted information to the operator network device, where the user is a user who sends a message to the operator network device by using the apparatus, the public key is a public key in a public-private key pair determined by a third-party authentication authority, the public-private key pair further includes a private key, and the private key is stored in the third-party authentication authority and is used to verify the encrypted information.

Alternatively,
the apparatus 1600 further includes an authentication unit 1640, configured to perform authentication on whether the user is trustworthy, to obtain an authentication result.

The processing unit 1620 is configured to sign the authentication result based on a private key of a SIM, to generate a signature.

The sending unit 1630 is configured to send the authentication result and the signature to an operator network device.

The apparatus 1600 is corresponding to the terminal device in the method embodiment. The apparatus 1600 may be the terminal device in the method embodiment, or a chip or a functional module in the terminal device in the method embodiment. The corresponding units in the apparatus 1600 are configured to perform corresponding steps performed by the terminal device in the method embodiment shown in FIG. 4 to FIG. 12.

The receiving unit 1610 in the apparatus 1600 performs the receiving step performed by the terminal device in the method embodiment. The processing unit 1620 in the apparatus 1600 is configured to perform the corresponding processing-related step performed by the terminal device in the method embodiment. The sending unit 1630 in the apparatus 1600 is configured to perform the sending step performed by the terminal device.

The processing unit 1620 may be at least one processor. The sending unit 1630 may be a transmitter or an interface circuit.

Optionally, the apparatus 1600 may further include a storage unit. The storage unit is configured to store data and/or signaling. The receiving unit 1610, the processing unit 1620, and the sending unit 1630 may interact with or may be coupled to the storage unit, for example, read or invoke the data and/or signaling in the storage unit, so that the method in the foregoing embodiment is performed.

The foregoing units may exist independently, or all or some of the foregoing units may be integrated.

FIG. 17 is a schematic diagram of a structure of a terminal device 1700 to which an embodiment of this application is applicable. The terminal device 1700 may be used to implement functions of the foregoing terminal device.

The terminal device 1700 includes a processor 1701, a memory 1702, and a transceiver 1703. The memory 1702 stores instructions or a program. The processor 1702 and the transceiver 1703 are configured to execute or invoke the instructions or the program stored in the memory 1702, so that the terminal device 1700 implements the functions of the terminal device in the foregoing authentication method. When the instructions or the program stored in the memory 1702 is executed, the transceiver 1703 may be configured to perform the operation performed by the sending unit 1630 in the embodiment shown in FIG. 16, and the processor 1702 may be configured to perform the operation performed by the processing unit 1620 in the embodiment shown in FIG. 16.

A person skilled in the art can understand that, for ease of description, FIG. 17 shows only one memory and one processor. Actual terminal device may include a plurality of processors and memories. The memory may also be referred to as a storage medium, a storage device, or the like. This is not limited in this embodiment of this application.

FIG. 18 is a schematic diagram of an authentication apparatus 1800 according to this application. As shown in FIG. 18, the apparatus 1800 includes a management unit 1810, a processing unit 1820, a sending unit 1830, and a receiving unit 1840.

The management unit 1810 is configured to manage identification information of a user and physiological characteristic information of the user, where the identification information of the user identifies the user, and the physiological characteristic information of the user includes at least one of the following: fingerprint information of the user, voice print information of the user, facial information of the user, iris information of the user, and palm print information of the user.

The processing unit 1820 is configured to determine a public key and an encryption method that are used for encrypting the physiological characteristic information of the user.

The sending unit 1830 is configured to send the encryption method and the public key to an operator network device.

The receiving unit 1840 is configured to receive the identification information of the user and encrypted information from the operator network device, where the encrypted information is encrypted physiological characteristic information of the user.

The processing unit 1820 is further configured to determine the user based on the identification information of the user, verify the encrypted information based on a private key, and determine, based on the verification result, whether the user is trustworthy, where the public key and the private key are a public-private key pair.

The sending unit 1830 is further configured to send, to the operator network device, information indicating whether the user is trustworthy, where the user is a user who sends a message to the operator network device by using a terminal device.

The apparatus 1800 is corresponding to the third-party authentication authority in the method embodiment. The apparatus 1800 may be the third-party authentication authority in the method embodiment, or a chip or a functional module in the third-party authentication authority in the method embodiment. The corresponding units in the apparatus 1800 are configured to perform corresponding steps performed by the third-party authentication authority in the method embodiment shown in FIG. 4 to FIG. 12.

The management unit 1810 in the apparatus 1800 performs the management step performed by the third-party authentication authority in the method embodiment. The processing unit 1820 in the apparatus 1800 is configured to perform the corresponding processing-related step performed by the third-party authentication authority in the method embodiment. The sending unit 1830 in the apparatus 1800 is configured to perform the sending step performed by the third-party authentication authority.

The processing unit 1820 may be at least one processor. The sending unit 1830 may be a transmitter or an interface circuit.

Optionally, the apparatus 1800 may further include a storage unit. The storage unit is configured to store data and/or signaling. The management unit 1810, the processing unit 1820, and the sending unit 1830 may interact with or may be coupled to the storage unit, for example, read or invoke the data and/or signaling in the storage unit, so that the method in the foregoing embodiment is performed.

The foregoing units may exist independently, or all or some of the foregoing units may be integrated.

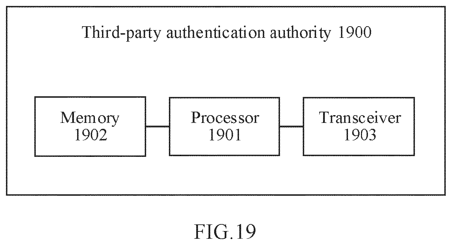

FIG. 19 is a schematic diagram of a structure of a third-party authentication authority 1900 to which an embodiment of this application is applicable. The third-party authentication authority 1900 may be configured to implement functions of the foregoing third-party authentication authority.

The third-party authentication authority 1900 includes a processor 1901, a memory 1902, and a transceiver 1903. The memory 1902 stores instructions or a program. The processor 1902 and the transceiver 1903 are configured to execute or invoke the instructions or the program stored in the memory 1902, so that the third-party authentication authority 1900 implements the functions of the third-party authentication authority in the foregoing authentication method. When the instructions or the program stored in the memory 1902 is executed, the transceiver 1903 may be configured to perform the operation performed by the sending unit 1830 in the embodiment shown in FIG. 18, and the processor 1902 may be configured to perform the operation performed by the processing unit 1820 in the embodiment shown in FIG. 18.

A person skilled in the art can understand that, for ease of description, FIG. 19 shows only one memory and one processor. Actual third-party authentication authority may include a plurality of processors and memories. The memory may also be referred to as a storage medium, a storage device, or the like. This is not limited in this embodiment of this application.

An embodiment of this application further provides a communication system, including the foregoing operator network device and terminal device.

This application further provides a computer-readable storage medium. The computer-readable storage medium stores instructions. When the instructions are run on a computer, the computer is enabled to perform steps performed by the terminal device in the method shown in FIG. 4 to FIG. 12.

This application further provides a computer-readable storage medium. The computer-readable storage medium stores instructions. When the instructions are run on a computer, the computer is enabled to perform steps performed by the operator network device in the method shown in FIG. 4 to FIG. 12.

This application further provides a computer-readable storage medium. The computer-readable storage medium stores instructions. When the instructions are run on a computer, the computer is enabled to perform steps performed by the third-party authentication authority in the method shown in FIG. 4 to FIG. 12.

This application further provides a computer program product including instructions. When the computer program product runs on a computer, the computer is enabled to perform steps performed by the terminal device in the method shown in FIG. 4 to FIG. 12.

This application further provides a computer program product including instructions. When the computer program product runs on a computer, the computer is enabled to perform steps performed by the operator network device in the method shown in FIG. 4 to FIG. 12.

This application further provides a computer program product including instructions. When the computer program product runs on a computer, the computer is enabled to perform steps performed by the third-party authentication authority in the method shown in FIG. 4 to FIG. 12.

This application further provides a chip, including a processor. The processor is configured to read and run a computer program stored in a memory, to perform a corresponding operation and/or procedure performed by the terminal device in the authentication method provided in this application. In a possible implementation, the chip further includes a memory. The memory is connected to the processor through a circuit or a wire, and the processor is configured to read and execute the computer program in the memory. Further, in a possible implementation, the chip further includes a communication interface, and the processor is connected to the communication interface. The communication interface is configured to receive data and/or information to be processed. The processor obtains the data and/or information from the communication interface, and processes the data and/or information. The communication interface may be an input/output interface, an interface circuit, an output circuit, an input circuit, a pin, a related circuit, or the like in the chip. The processor may be alternatively a processing circuit or a logic circuit.

This application further provides a chip, including a processor. The processor is configured to read and run a computer program stored in a memory, to perform a corresponding operation and/or procedure performed by the operator network device in the authentication method provided in this application. In a possible implementation, the chip further includes a memory. The memory is connected to the processor through a circuit or a wire, and the processor is configured to read and execute the computer program in the memory. Further, in a possible implementation, the chip further includes a communication interface, and the processor is connected to the communication interface. The communication interface is configured to receive data and/or information to be processed. The processor obtains the data and/or information from the communication interface, and processes the data and/or information. The communication interface may be an input/output interface, an interface circuit, an output circuit, an input circuit, a pin, a related circuit, or the like in the chip. The processor may be alternatively a processing circuit or a logic circuit.

This application further provides a chip, including a processor. The processor is configured to read and run a computer program stored in a memory, to perform a corresponding operation and/or procedure performed by the third-party authentication authority in the authentication method provided in this application. In a possible implementation, the chip further includes a memory. The memory is connected to the processor through a circuit or a wire, and the processor is configured to read and execute the computer program in the memory. Further, in a possible implementation, the chip further includes a communication interface, and the processor is connected to the communication interface. The communication interface is configured to receive data and/or information to be processed. The processor obtains the data and/or information from the communication interface, and processes the data and/or information. The communication interface may be an input/output interface, an interface circuit, an output circuit, an input circuit, a pin, a related circuit, or the like in the chip. The processor may be alternatively a processing circuit or a logic circuit.

The foregoing chip may be replaced with a chip system. Details are not described herein again.

Terms "include", "have", and any variations thereof in this application are intended to cover non-exclusive inclusion. For example, a process, method, system, product, or device that includes a series of steps or units is not necessarily limited to those explicitly listed steps or units, but may include other steps or units that are not explicitly listed or that are inherent to the process, method, product, or device.

A person of ordinary skill in the art can be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use a different method to implement the described functions for each particular application, but it should not be considered that the implementation goes beyond the scope of this application.

It can be clearly understood by a person skilled in the art that, for the purpose of convenient and brief description, for detailed working processes of the systems, apparatuses, and units, refer to corresponding processes in the method embodiment. Details are not described herein again.

In the several embodiments provided in this application, it should be understood that the disclosed systems, apparatuses, and method may be implemented in other manners. For example, the described apparatus embodiments are merely examples. For example, the unit division is merely logical function division and may be other division in actual implementation. For example, a plurality of units or components may be combined or may be integrated into another system, or some features may be ignored or not be performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected depending on an actual requirement to achieve the objectives of the solutions of embodiments.

In addition, functional units in embodiments of this application may be integrated into one processing unit, each of the units may exist alone physically, or at least two units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. An authentication method, comprising:
performing (S410), by a first operator network device, authentication on whether a first user is trustworthy, to obtain a first authentication result, wherein the first user is a user who sends a message to the first operator network device by using a first terminal device;
signing (S420), by the first operator network device, the first authentication result to generate a first signature; and
sending (S430), by the first operator network device, the first authentication result and the first signature to a second terminal device used by a second user or to a second operator network device, wherein
the second operator network device is an operator network device (1400, 1500) that provides a service for the second user, and the second user is a user called by the first user;
wherein the method further comprises:
receiving (S530), by the first operator network device, a first message from the first terminal device, wherein the first message comprises first encrypted information, the first encrypted information is encrypted physiological characteristic information of the first user, and the physiological characteristic information of the first user comprises at least one of the following:
fingerprint information of the first user, voice print information of the first user, facial information of the first user, iris information of the first user, and palm print information of the first user; and
the performing (S410), by a first operator network device, authentication on whether a first user is trustworthy comprises:
sending (S540), by the first operator network device, identification information of the first user and the first encrypted information to a third-party authentication authority (1900), wherein the first encrypted information is used by the third-party authentication authority (1900) to perform authentication on whether the first user is trustworthy, and the identification information of the first user identifies the first user;
receiving (S560), by the first operator network device, first information from the third-party authentication authority (1900), wherein the first information indicates whether the first user is trustworthy; and
performing (S570), by the first operator network device based on the first information, authentication on whether the first user is trustworthy; and
wherein before the receiving (S530), by the first operator network device, a first message from the first terminal device, the method further comprises:
obtaining (S640), by the first operator network device, a first encryption method and a first public key from the third-party authentication authority (1900); and
sending (S650), by the first operator network device, the first encryption method and the first public key to the first terminal device, wherein
the first public key is a public key in a first public-private key pair determined by the third-party authentication authority (1900), the first public-private key pair further comprises a first private key, the first encryption method and the first public key are used by the first terminal device to encrypt the physiological characteristic information of the first user to obtain the first encrypted information, and the first private key is stored in the third-party authentication authority (1900) and is used to verify the first encrypted information.

2. The method according to claim 1, wherein the first message comprises at least one of the following:
a signaling message, video data, and audio data; and
when the first message is the video data and/or the audio data, the first message periodically carries the first encrypted information.

3. The method according to any one of claims 1 to 2, wherein the method further comprises:
determining (S611), by the first operator network device, a third public-private key pair, wherein the third public-private key pair comprises a third private key and a third public key; and
storing (S611), by the first operator network device, the third private key.

4. The method according to claim 3, wherein
when a first operator and a second operator that serve the first user and the second user respectively are a same operator,
the sending (S430), by the first operator network device, the first authentication result and the first signature to a second terminal device used by a second user or to a second operator network device is specifically:
sending (S950), by the first operator network device, the first authentication result and the first signature to the second terminal device; and
the method further comprises:
sending (612, 614), by the first operator network device, the third public key to the second terminal device, wherein the third public key is used by the second terminal device to verify the first signature.

5. The method according to claim 4, wherein the method further comprises:
performing (S716), by the first operator network device, authentication on whether the second user is trustworthy, to obtain a third authentication result;
signing (S518, S717), by the first operator network device, the third authentication result to generate a third signature;
sending (S519, S718), by the first operator network device, the third authentication result and the third signature to the first terminal device; and
sending, by the first operator network device, the third public key to the first terminal device, wherein the third public key is used by the first terminal device to verify (S719) the third signature.

6. The method according to claim 3, wherein
when a first operator and a second operator that serve the first user and the second user respectively are different operators,
the sending (S430), by the first operator network device, the first authentication result and the first signature to a second terminal device used by a second user or to a second operator network device is specifically:
sending (S592, S890, S970), by the first operator network device, the first signature and the first authentication result to the second operator network device; and
the method further comprises:
sending (S614), by the first operator network device, the third public key to the second operator network device, wherein the third public key is used by the second operator network device to verify (S980) the first signature; and
the first authentication result and a fourth private key are used by the second operator network device to generate a fourth signature, the fourth signature is sent (S893) to the second terminal device to indicate the second terminal device to verify (S894) the first authentication result, the fourth private key is stored in the second operator network device, and the fourth private key and a fourth public key are a fourth public-private key pair.

7. The method according to claim 6, wherein the method further comprises:
receiving, by the first operator network device, the fourth public key from the second operator network device;
receiving (S824), by the first operator network device, a fifth signature and a fourth authentication result from the second operator network device, wherein the fifth signature is a signature that is generated (S823) by signing the fourth authentication result based on the fourth private key, and the fourth authentication result is used to indicate whether the second user is trustworthy;
verifying (S825), by the first operator network device, the fifth signature based on the fourth public key;
after the verification succeeds, signing (S826), by the first operator network device, the fourth authentication result based on the third private key, to generate a sixth signature; and
sending (S827), by the first operator network device, the fourth authentication result and the sixth signature to the first terminal device.

8. An authentication apparatus (1300, 1600, 1800), comprising modules configured to perform the steps of the method according to any one of claims 1 to 7.

9. A combination of a chip system and a communication apparatus in which the chip system is installed, the chip system comprising a processor (1401, 1402, 1701, 1702, 1901, 1902), configured to invoke a computer program from a memory (1402, 1702, 1902) and run the computer program, so that the communication apparatus performs the method according to any one of claims 1 to 7.

## Patentansprüche

1. Authentifizierungsverfahren, umfassend:
Durchführen (S410), durch eine erste Betreibernetzeinrichtung, einer Authentifizierung dazu, ob ein erster Benutzer vertrauenswürdig ist, um ein erstes Authentifizierungsergebnis zu erlangen, wobei der erste Benutzer ein Benutzer ist, der eine Nachricht an die erste Betreibernetzeinrichtung unter Verwendung einer ersten Endgeräteeinrichtung sendet;
Signieren (S420), durch die erste Betreibernetzeinrichtung, des ersten Authentifizierungsergebnisses, um eine erste Signatur zu erzeugen; und
Senden (S430), durch die erste Betreibernetzeinrichtung, des ersten Authentifizierungsergebnisses und der ersten Signatur an eine zweite Endgeräteeinrichtung, die von einem zweiten Benutzer verwendet wird, oder an eine zweite Betreibernetzeinrichtung, wobei
die zweite Betreibernetzeinrichtung eine Betreibernetzeinrichtung (1400, 1500) ist, die einen Dienst für den zweiten Benutzer bereitstellt, und der zweite Benutzer ein Benutzer ist, der von dem ersten Benutzer angerufen wird;
wobei das Verfahren ferner Folgendes umfasst:
Empfangen (S530), durch die erste Betreibernetzeinrichtung, einer ersten Nachricht von der ersten Endgeräteeinrichtung, wobei die erste Nachricht erste verschlüsselte Informationen umfasst, die ersten verschlüsselten Informationen verschlüsselte physiologische charakteristische Informationen des ersten Benutzers sind und die physiologischen charakteristischen Informationen des ersten Benutzers mindestens eines der Folgenden umfassen:
Fingerabdruckinformationen des ersten Benutzers, Stimmabdruckinformationen des ersten Benutzers, Gesichtsinformationen des ersten Benutzers, Irisinformationen des ersten Benutzers und Handabdruckinformationen des ersten Benutzers; und
das Durchführen (S410), durch eine erste Betreibernetzeinrichtung, einer Authentifizierung dazu, ob ein erster Benutzer vertrauenswürdig ist, Folgendes umfasst:
Senden (S540), durch die erste Betreibernetzeinrichtung, von Identifizierungsinformationen des ersten Benutzers und der ersten verschlüsselten Informationen an eine Dritt-Authentifizierungsbehörde (1900), wobei die ersten verschlüsselten Informationen von der Dritt-Authentifizierungsbehörde (1900) verwendet werden, um eine Authentifizierung dazu durchzuführen, ob der erste Benutzer vertrauenswürdig ist, und die Identifizierungsinformationen des ersten Benutzers den ersten Benutzer identifizieren;
Empfangen (S560), durch die erste Betreibernetzeinrichtung, von ersten Informationen von der Dritt-Authentifizierungsbehörde (1900), wobei die ersten Informationen angeben, ob der erste Benutzer vertrauenswürdig ist; und
Durchführen (S570), durch die erste Betreibernetzeinrichtung auf Grundlage der ersten Informationen, einer Authentifizierung dazu, ob der erste Benutzer vertrauenswürdig ist; und
wobei vor dem Empfangen (S530), durch die erste Betreibernetzeinrichtung, einer ersten Nachricht von der ersten Endgeräteeinrichtung, das Verfahren ferner Folgendes umfasst:
Erlangen (S640), durch die erste Betreibernetzeinrichtung, eines ersten Verschlüsselungsverfahrens und eines ersten öffentlichen Schlüssels von der Dritt-Authentifizierungsbehörde (1900); und
Senden (S650), durch die erste Betreibernetzeinrichtung, des ersten Verschlüsselungsverfahrens und des ersten öffentlichen Schlüssels an die erste Endgeräteeinrichtung, wobei
der erste öffentliche Schlüssel ein öffentlicher Schlüssel in einem ersten öffentlichen/privaten Schlüsselpaar ist, das von der Dritt-Authentifizierungsbehörde (1900) bestimmt wird, das erste öffentliche/private Schlüsselpaar ferner einen ersten privaten Schlüssel umfasst, das erste Verschlüsselungsverfahren und der erste öffentliche Schlüssel von der ersten Endgeräteeinrichtung verwendet werden, um die physiologischen charakteristischen Informationen des ersten Benutzers zu verschlüsseln, um die ersten verschlüsselten Informationen zu erlangen, und der erste private Schlüssel in der Dritt-Authentifizierungsbehörde (1900) gespeichert ist und verwendet wird, um die ersten verschlüsselten Informationen zu verifizieren.

2. Verfahren gemäß Anspruch 1, wobei die erste Nachricht mindestens eines der Folgenden umfasst:
eine Signalisierungsnachricht, Videodaten und Audiodaten; und, wenn es sich bei der ersten Nachricht um die Videodaten und/oder die Audiodaten handelt, die erste Nachricht periodisch die ersten verschlüsselten Informationen trägt.

3. Verfahren gemäß einem der Ansprüche 1 bis 2, wobei das Verfahren ferner Folgendes umfasst:
Bestimmen (S611), durch die erste Betreibernetzeinrichtung, eines dritten öffentlichen/privaten Schlüsselpaars, wobei das dritte öffentliche/private Schlüsselpaar einen dritten privaten Schlüssel und einen dritten öffentlichen Schlüssel umfasst; und
Speichern (S611), durch die erste Betreibernetzeinrichtung, des dritten privaten Schlüssels.

4. Verfahren gemäß Anspruch 3, wobei,
wenn ein erster Betreiber und ein zweiter Betreiber, die den ersten Benutzer bzw. den zweiten Benutzer bedienen, derselbe Betreiber sind,
das Senden (S430), durch die erste Betreibernetzeinrichtung, des ersten Authentifizierungsergebnisses und der ersten Signatur an eine zweite Endgeräteeinrichtung, die von einem zweiten Benutzer verwendet wird, oder an eine zweite Betreibernetzeinrichtung konkret Folgendes ist:
Senden (S950), durch die erste Betreibernetzeinrichtung, des ersten Authentifizierungsergebnisses und der ersten Signatur an die zweite Endgeräteeinrichtung; und
das Verfahren ferner Folgendes umfasst:
Senden (612, 614), durch die erste Betreibernetzeinrichtung, des dritten öffentlichen Schlüssels an die zweite Endgeräteeinrichtung, wobei der dritte öffentliche Schlüssel von der zweiten Endgeräteeinrichtung verwendet wird, um die erste Signatur zu verifizieren.

5. Verfahren gemäß Anspruch 4, wobei das Verfahren ferner Folgendes umfasst:
Durchführen (S716), durch die erste Betreibernetzeinrichtung, einer Authentifizierung dazu, ob der zweite Benutzer vertrauenswürdig ist, um ein drittes Authentifizierungsergebnis zu erlangen;
Signieren (S518, S717), durch die erste Betreibernetzeinrichtung, des dritten Authentifizierungsergebnisses, um eine dritte Signatur zu erzeugen;
Senden (S519, S718), durch die erste Betreibernetzeinrichtung, des dritten Authentifizierungsergebnisses und der dritten Signatur an die erste Endgeräteeinrichtung; und
Senden, durch die erste Betreibernetzeinrichtung, des dritten öffentlichen Schlüssels an die erste Endgeräteeinrichtung, wobei der dritte öffentliche Schlüssel von der ersten Endgeräteeinrichtung verwendet wird, um die dritte Signatur zu verifizieren (S719).

6. Verfahren gemäß Anspruch 3, wobei,
wenn ein erster Betreiber und ein zweiter Betreiber, die den ersten Benutzer bzw. den zweiten Benutzer bedienen, unterschiedliche Betreiber sind,
das Senden (S430), durch die erste Betreibernetzeinrichtung, des ersten Authentifizierungsergebnisses und der ersten Signatur an eine zweite Endgeräteeinrichtung, die von einem zweiten Benutzer verwendet wird, oder an eine zweite Betreibernetzeinrichtung konkret Folgendes ist:
Senden (S592, S890, S970), durch die erste Betreibernetzeinrichtung, der ersten Signatur und des ersten Authentifizierungsergebnisses an die zweite Betreibernetzeinrichtung; und
das Verfahren ferner Folgendes umfasst:
Senden (S614), durch die erste Betreibernetzeinrichtung, des dritten öffentlichen Schlüssels an die zweite Betreibernetzeinrichtung, wobei der dritte öffentliche Schlüssel von der zweiten Betreibernetzeinrichtung verwendet wird, um die erste Signatur zu verifizieren (S980); und
das erste Authentifizierungsergebnis und ein vierter privater Schlüssel von der zweiten Betreibernetzeinrichtung verwendet werden, um eine vierte Signatur zu erzeugen, die vierte Signatur an die zweite Endgeräteeinrichtung gesendet wird (S893), um der zweiten Endgeräteeinrichtung anzugeben, das erste Authentifizierungsergebnis zu verifizieren (S894), der vierte private Schlüssel in der zweiten Betreibernetzeinrichtung gespeichert ist und der vierte private Schlüssel und ein vierter öffentlicher Schlüssel ein viertes öffentliches/privates Schlüsselpaar sind.

7. Verfahren gemäß Anspruch 6, wobei das Verfahren ferner Folgendes umfasst:
Empfangen, durch die erste Betreibernetzeinrichtung, des vierten öffentlichen Schlüssels von der zweiten Betreibernetzeinrichtung;
Empfangen (S824), durch die erste Betreibernetzeinrichtung, einer fünften Signatur und eines vierten Authentifizierungsergebnisses von der zweiten Betreibernetzeinrichtung, wobei die fünfte Signatur eine Signatur ist, die durch Signieren des vierten Authentifizierungsergebnisses auf Grundlage des vierten privaten Schlüssels erzeugt wird (S823), und das vierte Authentifizierungsergebnis verwendet wird, um anzugeben, ob der zweite Benutzer vertrauenswürdig ist;
Verifizieren (S825), durch die erste Betreibernetzeinrichtung, der fünften Signatur auf Grundlage des vierten öffentlichen Schlüssels;
nach erfolgreicher Verifizierung Signieren (S826), durch die erste Betreibernetzeinrichtung, des vierten Authentifizierungsergebnisses auf Grundlage des dritten privaten Schlüssels, um eine sechste Signatur zu erzeugen; und Senden (S827), durch die erste Betreibernetzeinrichtung, des vierten Authentifizierungsergebnisses und der sechsten Signatur an die erste Endgeräteeinrichtung.

8. Authentifizierungsvorrichtung (1300, 1600, 1800), umfassend Module, die dazu konfiguriert sind, die Schritte des Verfahrens gemäß einem der Ansprüche 1 bis 7 durchzuführen.

9. Kombination aus einem Chipsystem und einer Kommunikationsvorrichtung, in der das Chipsystem installiert ist, wobei das Chipsystem einen Prozessor (1401, 1402, 1701, 1702, 1901, 1902) umfasst, der dazu konfiguriert ist, ein Computerprogramm aus einem Speicher (1402, 1702, 1902) abzurufen und das Computerprogramm auszuführen, sodass die Kommunikationsvorrichtung das Verfahren gemäß einem der Ansprüche 1 bis 7 durchführt.

## Revendications

1. Procédé d'authentification, comprenant :
la réalisation (S410), par un premier dispositif réseau d'opérateur, d'une authentification visant à déterminer si un premier utilisateur est digne de confiance, pour obtenir un premier résultat d'authentification, dans lequel le premier utilisateur est un utilisateur qui envoie un message au premier dispositif réseau d'opérateur en utilisant un premier dispositif terminal ;
la signature (S420), par le premier dispositif réseau d'opérateur, du premier résultat d'authentification pour générer une première signature ; et
l'envoi (S430), par le premier dispositif réseau d'opérateur, du premier résultat d'authentification et de la première signature à un second dispositif terminal utilisé par un second utilisateur ou à un second dispositif réseau d'opérateur, dans lequel
le second dispositif réseau d'opérateur est un dispositif réseau d'opérateur (1400, 1500) qui fournit un service au second utilisateur, et le second utilisateur est un utilisateur appelé par le premier utilisateur ;
dans lequel le procédé comprend également :
la réception (S530), par le premier dispositif réseau d'opérateur, d'un premier message provenant du premier dispositif terminal, dans lequel le premier message comprend des premières informations chiffrées, les premières informations chiffrées sont des informations caractéristiques physiologiques chiffrées du premier utilisateur, et les informations caractéristiques physiologiques du premier utilisateur comprennent au moins l'un des éléments suivants :
des informations d'empreintes digitales du premier utilisateur, des informations d'empreinte vocale du premier utilisateur, des informations faciales du premier utilisateur, des informations d'iris du premier utilisateur, et des informations d'empreinte palmaire du premier utilisateur ; et
la réalisation (S410), par un premier dispositif réseau d'opérateur, d'une authentification visant à déterminer si un premier utilisateur est digne de confiance comprend :
l'envoi (S540), par le premier dispositif réseau d'opérateur, d'informations d'identification du premier utilisateur et des premières informations chiffrées à une autorité d'authentification tierce (1900), dans lequel les premières informations chiffrées sont utilisées par l'autorité d'authentification tierce (1900) pour réaliser une authentification visant à déterminer si le premier utilisateur est digne de confiance, et les informations d'identification du premier utilisateur identifient le premier utilisateur ;
la réception (S560), par le premier dispositif réseau d'opérateur, de premières informations provenant de l'autorité d'authentification tierce (1900), dans lequel les premières informations indiquent si le premier utilisateur est digne de confiance ; et
la réalisation (S570), par le premier dispositif réseau d'opérateur sur la base des premières informations, d'une authentification visant à déterminer si le premier utilisateur est digne de confiance ; et
dans lequel avant la réception (S530), par le premier dispositif réseau d'opérateur, d'un premier message provenant du premier dispositif terminal, le procédé comprend également :
l'obtention (S640), par le premier dispositif réseau d'opérateur, d'un premier procédé de chiffrement et d'une première clé publique provenant de l'autorité d'authentification tierce (1900) ; et
l'envoi (S650), par le premier dispositif réseau d'opérateur, du premier procédé de chiffrement et de la première clé publique au premier dispositif terminal, dans lequel
la première clé publique est une clé publique dans une première paire de clés publique-privée déterminée par l'autorité d'authentification tierce (1900), la première paire de clés publique-privée comprend également une première clé privée, le premier procédé de chiffrement et la première clé publique sont utilisés par le premier dispositif terminal pour chiffrer les informations caractéristiques physiologiques du premier utilisateur pour obtenir les premières informations chiffrées, et la première clé privée est stockée dans l'autorité d'authentification tierce (1900) et est utilisée pour vérifier les premières informations chiffrées.

2. Procédé selon la revendication 1, dans lequel le premier message comprend au moins l'un des éléments suivants :
un message de signalisation, des données vidéo, et des données audio ; et
lorsque le premier message est constitué des données vidéo et/ou des données audio, le premier message transporte périodiquement les premières informations chiffrées.

3. Procédé selon l'une quelconque des revendications 1 et 2, dans lequel le procédé comprend également :
la détermination (S611), par le premier dispositif réseau d'opérateur, d'une troisième paire de clés publique-privée, dans lequel la troisième paire de clés publique-privée comprend une troisième clé privée et une troisième clé publique ; et
le stockage (S611), par le premier dispositif réseau d'opérateur, de la troisième clé privée.

4. Procédé selon la revendication 3, dans lequel
lorsqu'un premier opérateur et un second opérateur qui servent respectivement le premier utilisateur et le second utilisateur sont un même opérateur,
l'envoi (S430), par le premier dispositif réseau d'opérateur, du premier résultat d'authentification et de la première signature à un second dispositif terminal utilisé par un second utilisateur ou à un second dispositif réseau d'opérateur est spécifiquement :
l'envoi (S950), par le premier dispositif réseau d'opérateur, du premier résultat d'authentification et de la première signature au second dispositif terminal ; et
le procédé comprend également :
l'envoi (612, 614), par le premier dispositif réseau d'opérateur, de la troisième clé publique au second dispositif terminal, dans lequel la troisième clé publique est utilisée par le second dispositif terminal pour vérifier la première signature.

5. Procédé selon la revendication 4, dans lequel le procédé comprend également :
la réalisation (S716), par le premier dispositif réseau d'opérateur, d'une authentification visant à déterminer si le second utilisateur est digne de confiance, pour obtenir un troisième résultat d'authentification ;
la signature (S518, S717), par le premier dispositif réseau d'opérateur, du troisième résultat d'authentification pour générer une troisième signature ;
l'envoi (S519, S718), par le premier dispositif réseau d'opérateur, du troisième résultat d'authentification et de la troisième signature au premier dispositif terminal ; et
l'envoi, par le premier dispositif réseau d'opérateur, de la troisième clé publique au premier dispositif terminal, dans lequel la troisième clé publique est utilisée par le premier dispositif terminal pour vérifier (S719) la troisième signature.

6. Procédé selon la revendication 3, dans lequel
lorsqu'un premier opérateur et un second opérateur qui servent respectivement le premier utilisateur et le second utilisateur sont des opérateurs différents,
l'envoi (S430), par le premier dispositif réseau d'opérateur, du premier résultat d'authentification et de la première signature à un second dispositif terminal utilisé par un second utilisateur ou à un second dispositif réseau d'opérateur est spécifiquement :
l'envoi (S592, S890, S970), par le premier dispositif réseau d'opérateur, de la première signature et du premier résultat d'authentification au second dispositif réseau d'opérateur ; et
le procédé comprend également :
l'envoi (S614), par le premier dispositif réseau d'opérateur, de la troisième clé publique au second dispositif réseau d'opérateur, dans lequel la troisième clé publique est utilisée par le second dispositif réseau d'opérateur pour vérifier (5980) la première signature ; et
le premier résultat d'authentification et une quatrième clé privée sont utilisés par le second dispositif réseau d'opérateur pour générer une quatrième signature, la quatrième signature est envoyée (S893) au second dispositif terminal pour indiquer au second dispositif terminal de vérifier (S894) le premier résultat d'authentification, la quatrième clé privée est stockée dans le second dispositif réseau d'opérateur, et la quatrième clé privée et une quatrième clé publique sont une quatrième paire de clés publique-privée.

7. Procédé selon la revendication 6, dans lequel le procédé comprend également :
la réception, par le premier dispositif réseau d'opérateur, de la quatrième clé publique provenant du second dispositif réseau d'opérateur ;
la réception (S824), par le premier dispositif réseau d'opérateur, d'une cinquième signature et d'un quatrième résultat d'authentification provenant du second dispositif réseau d'opérateur, dans lequel la cinquième signature est une signature qui est générée (S823) par la signature du quatrième résultat d'authentification sur la base de la quatrième clé privée, et le quatrième résultat d'authentification est utilisé pour indiquer si le second utilisateur est digne de confiance ; la vérification (S825), par le premier dispositif réseau d'opérateur, de la cinquième signature sur la base de la quatrième clé publique ;
après la réussite de la vérification, la signature (S826), par le premier dispositif réseau d'opérateur, du quatrième résultat d'authentification sur la base de la troisième clé privée, pour générer une sixième signature ; et
l'envoi (S827), par le premier dispositif réseau d'opérateur, du quatrième résultat d'authentification et de la sixième signature au premier dispositif terminal.

8. Appareil d'authentification (1300, 1600, 1800), comprenant des modules configurés pour réaliser les étapes du procédé selon l'une quelconque des revendications 1 à 7.

9. Combinaison d'un système de puce et d'un appareil de communication dans lequel le système de puce est installé, le système de puce comprenant un processeur (1401, 1402, 1701, 1702, 1901, 1902), configuré pour lancer un programme informatique provenant d'une mémoire (1402, 1702, 1902) et exécuter le programme informatique, de sorte que l'appareil de communication réalise le procédé selon l'une quelconque des revendications 1 à 7.
